# EUROPÄISCHE PATENTSCHRIFT

(11) **EP 1 784 585 B1**
(45) Veröffentlichungstag und Bekanntmachung des Hinweises auf die Patenterteilung: **19.03.2008**
(21) Anmeldenummer: 05776343.5
(22) Anmeldetag: 08.08.2005
(51) Int. Cl.: F16H 3/66

(54) **MEHRSTUFEN-AUTOMATGETRIEBE**
MULTI-STAGE AUTOMATIC GEARBOX
BOITE DE VITESSES AUTOMATIQUE A PLUSIEURS ETAGES

(30) Priorität: 06.08.2004 DE 102004038289
(43) Veröffentlichungstag der Anmeldung: 16.05.2007
(73) Patentinhaber: ZF FRIEDRICHSHAFEN AG, 88038 Friedrichshafen (DE)
(72) Erfinder: BAUKNECHT, Gert, 88048 Friedrichshafen (DE); ZIEMER, Peter, 88069 Tettnang (DE); GIERLING, Armin, 88085 Langenargen (DE)
(86) Internationale Anmeldenummer: PCT/EP2005/008599
(87) Internationale Veröffentlichungsnummer: WO 2006/015844

(56) Entgegenhaltungen:
- EP-A- 1 510 728
- DE-A1- 10 318 565
- US-B1- 6 634 980
- PATENT ABSTRACTS OF JAPAN Bd. 2003, Nr. 02, 5. Februar 2003 (2003-02-05) & JP 2002 295609 A (AISIN AW CO LTD), 9. Oktober 2002 (2002-10-09)

## Beschreibung

Die Erfindung betrifft ein Mehrstufen-Automatgetriebe gemäß dem Oberbegriff des Patentanspruchs 1.

Es existiert eine frühere Patentanmeldung nach Artikel 54(3) EPÜ, weshalb 2 unterschiedliche Anspruchssätze für die betreffenden Vertragsstaaten erforderlich sind. Wobei die DE/FR/GB-Version 4 unabhängige Ansprüche enthält.

Dokument US 6634980 wird als nächstliegenden Stand der Technik angesehen.

Automatgetriebe mit mehreren, ohne Gruppenschaltung schaltbaren Gängen sind vielfältig bekannt. Aus der US 5,106,352 ist ein 6-Gang-Automatgetriebe bekannt, bei dem ein einfacher Vorschalt-Planetenradsatz koaxial zu einem als Ravigneaux-Planetenradsatz ausgebildeten Zweisteg-Vierwellen-Hauptradsatz angeordnet ist und fünf Schaltelemente vorgesehen sind. Dabei ist der Vorschalt-Planetenradsatz als nicht schaltbare Reduzierstufe mit an einem Getriebegehäuse festgesetztem Sonnenrad ausgeführt, deren Ausgangsdrehzahl kleiner ist als die Drehzahl einer Antriebswelle des Automatgetriebes und über zwei Kupplungen auf zwei unterschiedliche Elemente des Hauptradsatzes übertragbar ist, wobei eines dieser beiden Elemente zusätzlich über eine erste Bremse an dem Getriebegehäuse festsetzbar ist. Dieses Eingangselement des Hauptradsatzes, welches wahlweise mit dem Ausgangselement des Vorschaltradsatzes verbindbar oder am Getriebegehäuse festsetzbar ist, sei im folgenden mit "erstes Eingangselement des Hauptradsatzes" bezeichnet. Entsprechend sei das andere Eingangselement des Hauptradsatzes, das auch mit dem Ausgangselement des Vorschalt-Planetenradsatz verbindbar ist, im folgenden mit "zweites Eingangselement des Hauptradsatzes" bezeichnet. Die Drehzahl der Antriebswelle ist über eine dritte Kupplung auf ein drittes Eingangselement des Hauptradsatzes übertragbar, wobei dieses dritte Element über eine zweite Bremse auch an dem Getriebegehäuse festsetzbar ist. Ein viertes Element des Hauptradsatzes bildet das Ausgangselement des Hauptradsatzes und ist ausschließlich fest mit einer Abtriebswelle des Automatgetriebes verbunden.

Mehrere alternative Bauteilanordnungen zu diesem in der US 5,106,352 beschriebenen Automatgetriebe sind beispielsweise aus der US 6,139,463 und der DE 102 10 348 A1 bekannt.

In der noch nicht veröffentlichten Deutschen Patentanmeldung DE 10221095.0 der Anmelderin ist eine Weiterentwicklung des in der US 5,106,352 bekannten 6-Gang-Automatgetriebes zu einem 7-Gang-Automatgetriebe beschrieben. Gegenüber der US 5,106,352 ist der Vorschalt-Planetenradsatz als einfacher, schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist über das gegenüber der US 5,106,352 zusätzliche sechste Schaltelement an einem Getriebegehäuse festsetzbar. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert mit einer Drehzahl kleiner oder gleich der Drehzahl der Antriebswelle. Für diese kinematische Kopplung der einzelnen Radsatzelemente und Schaltelemente offenbart die DE 10221095.0 zahlreiche verschiedene Anordnungsvarianten der Getriebekomponenten relativ zueinander.

In der JP 2001/182785 A ist eine Weiterentwicklung des aus der US 5,106,352 bekannten 6-Gang-Automatgetriebes zu einem 8-Gang-Automatgetriebe beschrieben. Gegenüber der US 5,106,352 ist dabei der Vorschalt-Planetenradsatz als einfacher, nicht schaltbarer Plus-Planetenradsatz in Doppelplanetenbauweise ausgeführt und ein zusätzliches sechstes Schaltelement hinzugefügt. Ein Steg des Vorschalt-Planetenradsatzes bildet dabei das fest mit der Antriebswelle des Automatgetriebes verbundene Eingangselement des Vorschalt-Planetenradsatzes. Ein Sonnenrad des Vorschalt-Planetenradsatzes ist an einem Getriebegehäuse festgesetzt. Entsprechend bildet ein Hohlrad des Vorschalt-Planetenradsatzes das mit zwei unterschiedlichen Elementen des Hauptradsatzes verbindbare Ausgangselement des Vorschalt-Planetenradsatzes und rotiert stets mit einer Drehzahl kleiner der Drehzahl der Antriebswelle. Über das gegenüber der US 5,106,352 zusätzliche sechste Schaltelement ist das - wahlweise mit dem Ausgangseiement des Vorschalt-Planetenradsatzes verbindbare oder am Getriebegehäuse festsetzbare - erste Eingangselement des Hauptradsatzes nun wahlweise auch mit der Antriebswelle des Getriebes verbindbar. Hinsichtlich der räumlichen Anordnung der Schaltelemente relativ zueinander und relativ zu den Planetenradsätzen ist in der JP 2001/182785 A vorgeschlagen, die beiden Schaltelemente, über die das erste und zweite Eingangselement des Hauptradsatzes mit dem Hohlrad des Vorschalt-Planetenradsatzes verbindbar sind, zusammen mit dem gegenüber der US 5,106,352 zusätzlichen sechsten Schaltelement als eine Baugruppe axial zwischen dem Vorschalt-Planetenradsatz und dem Hauptradsatz anzuordnen. Dabei ist das bereits aus der US 5,106,352 bekannte (fünfte) Schaltelement, über welches die Antriebswelle mit dem dritten Eingangselement des Hauptradsatzes verbindbar ist, auf der dieser Baugruppe gegenüberliegenden Seite des Hauptradsatzes angeordnet, also auch auf der dem Vorschalt-Planetenradsatz abgewandten Seite des Hauptradsatzes. Weiterhin lehrt die JP 2001/182785 A, das gegenüber der US 5,106,352 zusätzliche sechste Schaltelement innerhalb der genannten Baugruppe räumlich gesehen radial über dem Schaltelement anzuordnen, über welches erste Eingangselement des Hauptradsatzes mit dem Hohlrad des Vorschaltradsatzes verbindbar ist.

In der noch nicht veröffentlichten Deutschen Patentanmeldung DE 10318565.8 der Anmelderin wird eine verbesserte Bauteilanordnung des aus der JP 2001/182785 A bekannten 8-Gang-Automatgetriebes beschrieben. Um gegenüber der zugrunde liegenden Basiskonstruktion des 6-Gang-Automatgetriebe gemäß US 5,106,352 nur vergleichsweise wenige konstruktive Änderungen vornehmen zu müssen, wird in der DE 10318565.8 vorgeschlagen, die aus dem 6-Gang-Automatgetriebe bekannte räumliche Lage von Vorschalt-Planetenradsatz, Ravigneaux-Hauptradsatz und den ersten fünf Schaltelementen im Getriebegehäuse relativ zueinander beizubehalten und das gegenüber der US 5,106,352 zusätzliche sechste Schaltelementes in dem Getriebegehäuse auf der Seite des Getriebes anzuordnen, die einem Antriebsmotor zugewandt ist, räumlich gesehen zwischen einer antriebsseitigen Getriebegehäusewand und ersten Schaltelement, über welches das Ausgangselement des Vorschalt-Planeteradsatzes mit dem zweiten Eingangselement des Hauptradsatzes verbindbar ist, räumlich gesehen aber auch zwischen der genannten antriebsseitigen Getriebegehäusewand und dem Vorschalt-Planetenradsatz. Das gegenüber der US 5,106,352 zusätzliche sechste Schaltelement ist also auf der dem Hauptradsatz abgewandten Seite des Vorschalt-Planetenradsatzes angeordnet.

Der vorliegenden Erfindung liegt die Aufgabe zugrunde, das in der JP 2001/182785 A bzw. der DE 10318565.8 angegebene Mehrstufen-Automatgetriebe mit acht Vorwärtsgängen weiterzuentwickeln und alternative Bauteilanordnungen für die Planetenradsätze und die sechs Schaltelemente für zu schaffen.

Diese Aufgabe wird durch ein die Merkmale des Patentanspruchs 1 aufweisendes Mehrstufen-Automatgetriebe gelöst. Vorteilhafte Ausgestaltungen und Weiterbildungen der Erfindung ergeben sich aus den Unteransprüchen.

Die Erfindung geht aus von dem in der JP 2001/182785 A bzw. der noch nicht veröffentlichten Deutschen Patentanmeldung DE 10318565.8 der Anmelderin beschriebenen Getriebeschema für ein Mehrstufen-Automatgetriebe mit zumindest acht Vorwärtsgängen, umfassend eine Antriebswelle, eine Abtriebswelle, einen als Doppelplanetenradsatz ausgebildeten Vorschaltradsatz, einen als gekoppelten Planetenradsatz mit mindestens drei nicht gekoppelten Eingangselementen und einem Ausgangselement ausgebildeten Hauptradsatz, sowie mindestens sechs Schaltelemente. Durch selektives Schließen von jeweils zwei der Schaltelemente ist eine Drehzahl der Antriebswelle derart auf die Abtriebswelle übertragbar, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Die gesamte Offenbarung der noch nicht vorveröffentlichten Deutschen Patentanmeldung DE 10318565.8 der Anmelderin soll ausdrücklich auch Teil der Offenbarung der vorliegenden Erfindung sein.

Ein Eingangselement des Vorschaltradsatzes ist ständig mit der Antriebswelle verbunden. Ein Ausgangselement des Vorschaltradsatzes rotiert stets mit einer Drehzahl kleiner der Drehzahl der Antriebswelle. Ein drittes Element des Vorschaltradsatzes ist an einem Getriebegehäuse festgesetzt. Die Ausgangsdrehzahl des Vorschaltradsatzes ist über zwei Schaltelemente auf zwei unterschiedliche Eingangselemente der Hauptradsatzes übertragbar. Die Drehzahl der Antriebswelle ist über zwei andere Schaltelemente ebenfalls auf zwei verschiedene Eingangselemente des Hauptradsatzes übertragbar. Das Ausgangselement des Hauptradsatzes ist ständig mit der Abtriebswelle verbunden.

In einer bevorzugten Ausgestaltung dieses Getriebeschemas als 8-Gang-Automatgetriebe bildet ein (gekoppelter) Steg des Vorschaltradsatzes dessen stets mit der Antriebswelle verbundenes Eingangselement, ein Hohlrad des Vorschaltradsatzes dessen mit zwei verschiedenen Eingangselementen des Hauptradsatzes verbindbares Ausgangselement, und ein Sonnenrad des Vorschaltradsatzes dessen am Getriebegehäuse festgesetztes drittes Element. Vorschalt- und Hauptradsatz sind koaxial zueinander angeordnet. Der Hauptradsatz kann als Zweisteg-Vierwellen-Getriebe in Bauform eines "Ravigneaux-Planetenradsatzes" ausgeführt sein, mit einem ersten Sonnenrad als erstes Eingangselement des Hauptradsatzes, welches wahlweise mit dem Hohlrad des Vorschaltradsatzes oder der Antriebswelle verbindbar oder am Getriebegehäuse festsetzbar ist, mit einem zweiten Sonnenrad als zweites Eingangselement des Hauptradsatzes, welches mit dem Hohlrad des Vorschaltradsatzes verbindbar ist, mit einem (gekoppelten) Steg als drittes Eingangselement des Hauptradsatzes, welcher wahlweise mit der Antriebswelle verbindbar oder am Getriebegehäuse festsetzbar ist, sowie mit einem Hohlrad als Ausgangselement des Hauptradsatzes, welches stets mit der Abtriebswelle verbunden ist. In diesem Fall ist
- ein Eingangselement des ersten Schaltelementes mit dem Ausgangselement des Vorschaltradsatzes verbunden,
- ein Ausgangselement des ersten Schaltelementes mit dem zweiten Eingangselement des Hauptradsatzes verbunden,
- ein Eingangselement des zweiten Schaltelementes mit dem Ausgangselement des Vorschaltradsatzes verbunden,
- ein Ausgangselement des zweiten Schaltelementes mit dem ersten Eingangselement des Hauptradsatzes verbunden,
- ein Eingangselement des dritten Schaltelementes mit dem Getriebegehäuse verbunden,
- ein Ausgangselement des dritten Schaltelementes mit dem ersten Eingangselement des Hauptradsatzes verbunden,
- ein Eingangselement des vierten Schaltelementes mit dem Getriebegehäuse verbunden,
- ein Ausgangselement des vierten Schaltelementes mit dem dritten Eingangselement des Hauptradsatzes verbunden,
- ein Eingangselement des fünften Schaltelementes mit der Antriebswelle verbunden,
- ein Ausgangselement des fünften Schaltelementes mit dem dritten Eingangselement des Hauptradsatzes verbunden,
- ein Eingangselement des sechsten Schaltelementes mit der Antriebswelle verbunden,
- ein Ausgangselement des sechsten Schaltelementes mit dem ersten Eingangselement des Hauptradsatzes verbunden, sowie
- das Ausgangselement des Hauptradsatzes ständig mit der Abtriebswelle verbunden.

Der Hauptradsatz kann aber auch als Zweisteg-Vierwellen-Getriebe mit zwei gekoppelten Einsteg-Planetenradsätzen ausgebildet sein, wobei beispielsweise das erstes Eingangselement dieses Hauptradsatzes durch ein mit einem zweiten Steg fest verbundenes erstes Sonnenrad gebildet wird, welches wahlweise mit dem Hohlrad des Vorschaltradsatzes oder der Antriebswelle verbindbar oder am Getriebegehäuse festsetzbar ist, und wobei das zweite Eingangselement dieses Hauptradsatzes durch ein zweites Sonnenrad gebildet wird, welches mit dem Hohlrad des Vorschaltradsatzes verbindbar ist, und wobei ein erster Steg und ein zweites Hohlrad des Hauptradsatzes miteinander gekoppelt sind und als drittes Eingangselement des Hauptradsatzes wahlweise mit der Antriebswelle verbindbar oder an dem Getriebegehäuse festsetzbar ist, und wobei ein erstes Hohlrad des Hauptradsatzes als Ausgangselement dieses Hauptradsatzes stets mit der Abtriebswelle verbunden ist. In diesem Fall entspricht die Anbindung der Ein- und Ausgangselemente der sechs Schaltelemente an die drei Eingangselemente des Hauptradsatzes der zuvor am Beispiel des Ravigneaux-Hauptradsatzes beschriebenen Anbindung.

Der Hauptradsatz kann beispielsweise auch als "Dreisteg-Fünfwellen-Getriebe" mit drei gekoppelten Einsteg-Planetenradsätzen ausgebildet sein, oder auch als "reduziertes Dreisteg-Fünfwellen-Getriebe" mit drei gekoppelten Einsteg-Planetenradsätzen, bei denen zumindest zwei dieser Einzel-Planetenradsätze über einen gemeinsamen Steg und ein weiteres gemeinsames Zentralrad (also entweder über deren Sonnenräder oder über deren Hohlräder) miteinander gekoppelt ("reduziert") sind. Analog dazu kann der Hauptradsatz beispielsweise auch als "reduziertes Viersteg-Sechswellen-Getriebe ausgebildet sein, bei dem die dabei im Prinzip vorhandenen vier miteinander gekoppelten Einzel-Planetenradsätze derart zusammengefasst sind, dass der Hauptradsatz nur noch zwei Stege aufweist. Im Unterschied zu der Anbindung der sechs Schaltelemente an die Eingangselemente eines Hauptradsatzes vom Typ "Zweisteg-Vierwellen-Planetengetriebe bieten sich hinsichtlich der kinematischen Anbindung der Ein- und Ausgangselemente des dritten und sechsten Schaltelementes an die einzelnen Hauptradsatz-Elemente verschiedene Möglichkeiten, wobei dann gilt:
- das Eingangselement des dritten Schaltelementes ist mit dem Getriebegehäuse verbunden,
- das Ausgangselement des dritten Schaltelementes ist mit dem ersten Eingangselement des Hauptradsatzes oder einem in einem Drehzahlplan zu diesem ersten Eingangselement benachbarten Eingangselement des Hauptradsatzes verbunden,
- das Eingangselement des sechsten Schaltelementes ist mit der Antriebswelle verbunden,
- das Ausgangselement des sechsten Schaltelementes ist mit dem ersten Eingangselement des Hauptradsatzes oder einem in dem Drehzahlplan zu diesem ersten Eingangselement benachbarten Eingangselement des Häuptradsatzes verbunden.

In allen genannten Ausführungsvarianten sind im ersten Vorwärtsgang das erste und vierte Schaltelement, im zweiten Vorwärtsgang das erste und dritte Schaltelement, im dritten Vorwärtsgang das erste und zweite Schaltelement, im vierten Vorwärtsgang das erste und sechste Schaltelement, im fünften Vorwärtsgang das erste und fünfte Schaltelement, im sechsten Vorwärtsgang das fünfte und sechste Schaltelement, im siebten Vorwärtsgang das zweite und fünfte Schaltelement und im achten Vorwärtsgang das dritte und fünfte Schaltelement geschlossen. Im Rückwärtsgang sind das vierte Schaltelement und zusätzlich entweder das zweite oder das sechste Schaltelement geschlossen.

Gemäß der Erfindung wird nun vorgeschiagen, dass das sechste Schaltelement, zumindest ein Lamellenpaket dieses sechsten Schaltelementes und eine Servoeinrichtung zum Betätigen dieses Lamellenpaketes des sechsten Schaltelementes räumlich gesehen in einem Bereich axial zwischen dem Vorschaltradsatz und dem Hauptradsatz angeordnet ist, und dass eine Servoeinrichtung zum Betätigen eines Lamellenpaketes des zweiten Schaltelementes räumlich gesehen überwiegend auf dem Hauptradsatz abgewandten Seite des Vorschaltradsatzes angeordnet ist. Dabei ist zumindest ein Druckraum dieser Servoeinrichtung des zweiten Schaltelementes auf dem Hauptradsatz abgewandten Seite des Vorschaltradsatzes angeordnet.

In einer ersten Ausgestaltung zur räumlichen Anordnung der anderen vier Schaltelemente wird vorgeschlagen, dass das fünfte Schaltelement unmittelbar an den Vorschaltradsatz angrenzt, auf der dem Hauptradsatz zugewandten Seite des Vorschaltradsatzes. Das sechste Schaltelement ist in diesem Fall räumlich gesehen in einem Bereich axial zwischen dem fünften Schaltelement und dem Hauptradsatz angeordnet. Zur Bildung einer vormontierbaren Baugruppe ist das mit dem ersten Eingangselement des Hauptradsatzes verbundene Ausgangselement des sechsten Schaltelementes hierbei zweckmäßigerweise als ein zylinderförmiger Außenlamellenträger ausgeführt und nimmt sowohl die vorzugsweise als Stahllamellen ausgebildeten Außenlamellen des Lamellenpaketes des sechsten Schaltelementes als auch die Servoeinrichtung des sechsten Schaltelementes auf. Dabei rotiert die Servoeinrichtung des sechsten Schaltelementes ständig mit Drehzahl des ersten Eingangselementes des Hauptradsatzes und betätigt das Lamellenpaket des sechsten Schaltelementes beim Schließen axial in Richtung Vorschaltradsatz. Eine Druckmittelzufuhr zu einem Druckraum dieser Servoeinrichtung des sechsen Schaltelementes und auch eine Schmiermittelzufuhr zu einem drucklos zu befüllenden Druckausgleichsraum eines dynamischen Druckausgleichs des rotierenden Druckraums der Servoeinrichtung des sechsten Schaltelementes kann konstruktiv relativ einfach vom Getriebegehäuse her einer rotierenden Nabe dieses Außenlamellenträgers des sechsten Schaltelementes zugeleitet werden. Das als Bremse ausgebildete dritte Schaltelement, über welches das erste Eingangselement des Hauptradsatzes am Getriebegehäuse festsetzbar ist, ist benachbart zum sechsten Schaltelement angeordnet. Ist das dritte Schaltelement als Lamellenbremse ausgeführt, so ist das entsprechende Lamellenpaket dieser Bremse näher am Hauptradsatz angeordnet als das Lamellenpaket des sechsten Schaltelementes. Ist das dritte Schaltelement als Bandbremse ausgeführt, so kann das entsprechende Bremsband räumlich gesehen auch über dem Lamellenpaket des sechsten Schaltelementes angeordnet sein, wobei dann der Außenlamellenträger des sechsten Schaltelementes zweckmäßigerweise an seinem Außendurchmesser eine Lauffläche für dieses Bremsband aufweisen kann. Wenn Antriebswelle und Abtriebswelle koaxial zueinander verlaufen, so schließt sich das ebenfalls als Bremse ausgebildete vierte Schaltelement axial in Richtung Hauptradsatz an das dritte Schaltelement an; im Prinzip ist das vierte Schaltelement also näher am Hauptradsatz angeordnet als das dritte Schaltelement. Wenn Antriebswelle und Abtriebswelle nicht koaxial zueinander verlaufen, so kann das als Bremse ausgebildete vierte Schaltelement auch auf der Seite des Hauptradsatzes angeordnet sein, die dem Vorschaltradsatz bzw. dem sechsten Schaltelement bzw. dem dritten Schaltelement abgewandt ist. Hinsichtlich der räumlichen Anordnung des ersten Schaltelementes kann ein für dieses erste und das zweite Schaltelement gemeinsames Eingangselement vorgesehen sein, das mit dem Ausgangselement des Vorschaltradsatzes verbunden ist und zumindest überwiegend auf der dem Hauptradsatz abgewandten Seite des Vorschaltradsatzes angeordnet ist, insbesondere in Bauart eines gemeinsamen Außenlamellenträgers, wobei die Servoeinrichtungen des ersten und zweiten Schaltelementes nur durch eine Mantelfläche dieses Außenlamellenträgers voneinander getrennt sind und ein Druckraum der Servoeinrichtung des ersten Schaltelementes näher am Vorschaltradsatz angeordnet ist als der Druckraum der Servoeinrichtung des zweiten Schaltelementes.

In einer zweiten Ausgestaltung zur räumlichen Anordnung der anderen vier Schaltelemente, die sich besonders für einen Antriebsstrang mit nicht koaxial zu einander verlaufenden An- und Abtriebswelle eignet, wird vorgeschlagen, dass das sechste Schaltelement unmittelbar an den Vorschaltradsatz angrenzt, auf der dem Hauptradsatz zugewandten Seite des Vorschaltradsatzes. Zur Bildung einer vormontierbaren Baugruppe ist das mit der Antriebswelle verbundene Eingangselement des sechsten Schaltelementes hierbei zweckmäßigerweise als zylinderförmiger Außenlamellenträger ausgeführt und nimmt sowohl die vorzugsweise als Stahllamellen ausgebildeten Außenlamellen des Lamellenpaketes des sechsten Schaltelementes als auch die Servoeinrichtung des sechsten Schaltelementes auf. Dabei rotiert die Servoeinrichtung des sechsten Schaltelementes ständig mit Drehzahl der Antriebswelle und betätigt das Lamellenpaket des sechsten Schaltelementes beim Schließen axial in Richtung Hauptradsatz. Eine Druckmittelzufuhr zu einem Druckraum dieser Servoeinrichtung des sechsen Schaltelementes und auch eine Schmiermittelzufuhr zu einem drucklos zu befüllenden Druckausgleichsraum eines dynamischen Druckausgleichs des rotierenden Druckraums der Servoeinrichtung des sechsten Schaltelementes kann konstruktiv relativ einfach über die Antriebswelle geführt werden. Das erste Schaltelement, insbesondere ein Druckraum dessen Servoeinrichtung, ist dabei vorzugsweise räumlich gesehen in einem Bereich axial zwischen dem sechsten Schaltelement und dem Hauptradsatz angeordnet, vorzugsweise angrenzend an das sechste Schaltelement, wobei ein Lamellenpaket dieses ersten Schaltelementes räumlich gesehen auch in einem Bereich radial über dem sechsten Schaltelement angeordnet sein kann. Vorzugsweise rotiert die Servoeinrichtung des ersten Schaltelementes dabei stets mit Drehzahl des zweiten Eingangselementes des Hauptradsatzes und betätigt das Lamellenpaket des ersten Schaltelementes beim Schließen axial in Richtung Vorschaltradsatz. Axial in Richtung Hauptradsatz gesehen schließt sich ein Lamellenpaket des fünften Schaltelementes axial an das Lamellenpaket des ersten Schaltelementes an, wobei ein Druckraum einer Servoeinrichtung dieses fünften Schaltelementes auf der dem Hauptradsatz abgewandten Seite des Vorschaltradsatzes angeordnet sein kann und dann stets mit Drehzahl der Antriebswelle rotiert. Ist das vierte Schaltelement als Lamellenbremse ausgeführt, so schließt sich axial in Richtung Hauptradsatz gesehen ein Lamellenpaket dieses vierten Schaltelementes zweckmäßigerweise axial an das Lamellenpaket des fünften Schaltelementes an, vorzugsweise benachbart zum Hauptradsatz. Das dritte, ebenfalls als Bremse ausgeführte Schaltelement ist vorzugsweise auf der Seite des Hauptradsatzes angeordnet, die dem Vorschaltradsatz gegenüber liegt.

Die Erfindung wird im folgenden anhand der Figuren näher erläutert, wobei die Bezugszeichen vergleichbarer Bauelemente in allen Figuren auch gleichartig bezeichnet sind. Es zeigen:
- Fig. 1A: ein Getriebeschema gemäß dem gattungsgemäßen Stand der Technik;
- Fig. 1B: ein Schaltschema des Getriebes gemäß Fig. 1;
- Fig. 1C: ein Drehzahlplan des Getriebes gemäß Fig. 1;
- Fig. 2: ein beispielhaftes erstes erfindungsgemäßes Getriebeschema;
- Fig. 3: ein beispielhaftes zweites erfindungsgemäßes Getriebeschema;
- Fig. 4: ein beispielhaftes drittes erfindungsgemäßes Getriebeschema, basierend auf dem Getriebe gemäß Fig. 3, mit einem alternativen Hauptradsatz;
- Fig. 5: ein beispielhaftes viertes erfindungsgemäßes Getriebeschema, basierend auf dem Getriebe gemäß Fig. 3, mit einem alternativen Hauptradsatz;
- Fig. 6: ein beispielhaftes fünftes erfindungsgemäßes Getriebeschema, basierend auf dem Getriebe gemäß Fig. 4, mit einer alternativen Schaltelemente-Anordnung;
- Fig. 7A: ein beispielhaftes sechstes erfindungsgemäßes Getriebeschema mit einer gegenüber Fig. 6 modifizierten Ausgestaltung des Hauptradsatzes;
- Fig. 7B: ein Drehzahlplan des Getriebes gemäß Fig. 7A;
- Fig. 7C: ein Drehzahlplan eines Getriebe mit gegenüber Fig. 7A modifiziertem Hauptradsatz;
- Fig. 8: ein beispielhaftes siebtes erfindungsgemäßes Getriebeschema, basierend auf dem Getriebe gemäß Fig. 6, mit einer alternativen Schaltelemente-Anordnung; und
- Fig. 9: ein beispielhaftes achtes erfindungsgemäßes Getriebeschema, basierend auf dem Getriebe gemäß Fig. 8, mit einer alternativen Schaltelemente-Anordnung.

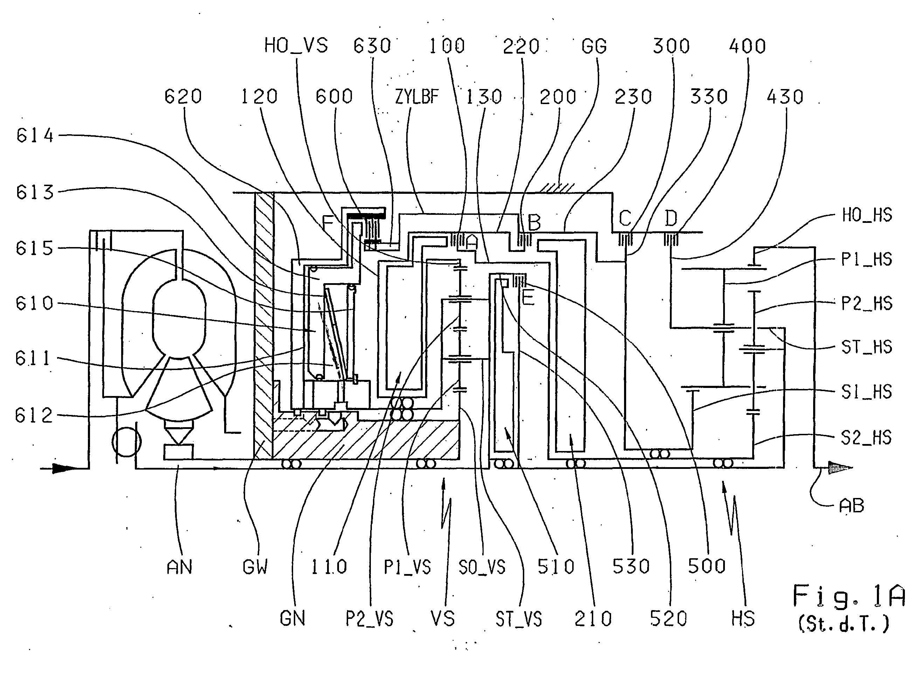

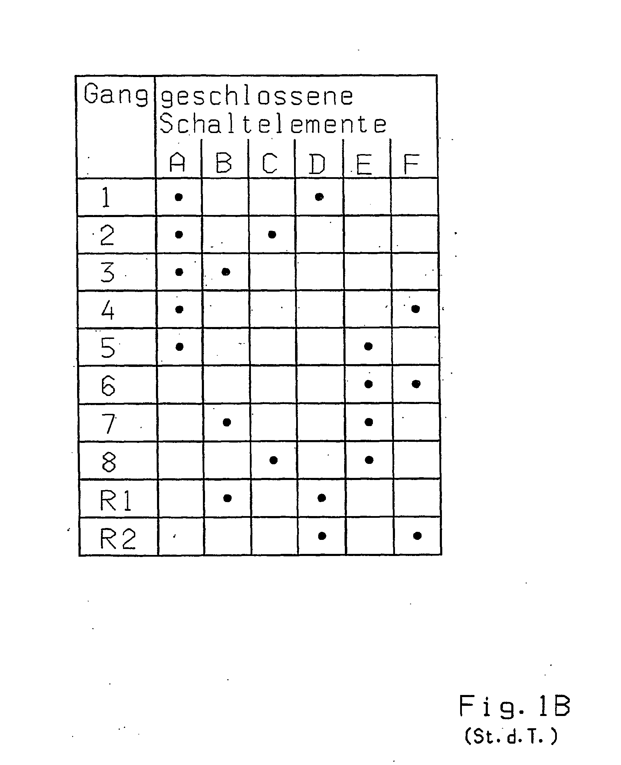

Zum besseren Verständnis wird zunächst der der Erfindung zugrundeliegende Stand der Technik erläutert. Fig. 1A zeigt dabei das Getriebeschema des gattungsgemäßen Standes der Technik gemäß DE 10318565.8, Fig. 1B das entsprechende Schaltschema. In Fig. 1A ist mit AN eine Antriebswelle des Automatgetriebes bezeichnet, die mit einem (nicht dargestellten) Antriebsmotor des Automatgetriebes wirkverbunden ist, im dargestellten Beispiel über einen Drehmomentwandler mit Torsionsdämpfer und Wandlerüberbrückungskupplung. Mit AB ist eine koaxial zur Antriebswelle AN angeordnete Abtriebswelle des Automatgetriebes bezeichnet, die mit mindestens einer Antriebsachse des Kraftfahrzeugs wirkverbunden ist. Selbstverständlich könnte anstelle des Drehmomentwandlers auch eine Reibkupplung als Anfahrelement des Automatgetriebes zwischen Antriebsmotor und Automatgetriebe angeordnet sein. Auch könnte der Antriebsmotor nur über einen einfachen Torsionsdämpfer oder ein Zweimassenschwungrad oder eine starre Welle mit der Antriebswelle AN des Getriebes verbunden sein, wobei in diesem Fall ein innerhalb des Automatgetriebes angeordnetes Reibschaltelement als Anfahrelement des Getriebes ausgebildet sein muß.

Das Automatgetriebe weist einen Vorschaltradsatz VS und einen koaxial neben (aber nicht unmittelbar neben) diesem Vorschaltradsatz VS angeordneten Hauptradsatz HS auf. Der Vorschaltradsatz VS ist als Plus-Planetenradsatz in Doppelplanetenbauweise ausgeführt, mit einem Hohlrad HO_VS, mit einem Sonnenrad SO_VS, sowie mit einem aus zwei Einzelstegen gebildeten Steg ST_VS, an dem innere Planetenräder P1_VS, die mit dem Sonnenrad SO_VS kämmen, und äußere Planetenräder P2_VS, die mit den inneren Planetenrädern P1_VS und dem Hohlrad HO_VS kämmen, verdrehbar gelagert sind. Dabei arbeitet dieser Vorschaltradsatz VS als nicht schaltbare Reduzierstufe und erzeugt eine Ausgangsdrehzahl, die vom Betrag her kleiner ist als eine Eingangsdrehzahl der Antriebswelle AN des Automatgetriebes. Hierzu ist das Sonnenrad SO_VS des Vorschaltradsatzes VS an einem Getriebegehäuse GG festgesetzt und der Steg ST_VS ständig mit der Antriebswelle AN verbunden. Das Hohlrad HO_VS bildet also das Ausgangselement des Vorschaltradsatzes VS und ist. über zwei Schaltelemente A, B mit einzelnen Eingangselementen des Hauptradsatzes HS verbindbar.

Der Hauptradsatz HS ist als gekoppeltes Zweisteg-Vierwellen-Planetengetriebe ausgebildet, mit drei nicht miteinander gekoppelten Eingangselementen und einem Ausgangselement, in Bauform eines Ravigneaux-Radsatzes mit zwei Sonnenrädern S1_HS und S2_HS, einem Hohlrad HO_HS sowie einem gekoppelten Steg ST_HS, an dem lange Planetenräder P1_HS, die mit dem ersten Sonnenrad S1_HS und dem Hohlrad HO_HS kämmen, und kurze Planetenräder P2_HS, die mit dem zweiten Sonnenrad S2_HS und den langen Planetenrädern P1_HS kämmen, verdrehbar gelagert sind. Dabei bildet das erste Sonnenrad S1_HS das erste Eingangselement des Hauptradsatzes HS, das zweite Sonnenrad S2_HS das zweite Eingangselement des Hauptradsatzes HS, der gekoppelte Steg ST_HS das dritte Eingangselement des Hauptradsatzes HS und das Hohlrad HO_HS das Ausgangselement des Hauptradsatzes HS.

Das Automatgetriebe weist insgesamt sechs Schaltelemente A bis F auf. Die Schaltelemente A, B, E und F sind als Kupplung ausgebildet, die Schaltelemente C und D als Bremse. Hierzu ist das zweite Sonnenrad S2_HS des Hauptradsatzes HS über das erste Schaltelement A mit dem Hohlrad HO_VS des Vorschaltradsatzes VS verbindbar. Weiterhin ist hierzu das erste Sonnenrad S1_HS des Hauptradsatzes HS über das zweite Schaltelement B mit dem Hohlrad HO_VS des Vorschaltradsatzes VS verbindbar, über das dritte Schaltelement C an dem Getriebegehäuse GG festsetzbar und über das sechste Schaltelement F mit der Antriebswelle AN verbindbar. Weiterhin ist hierzu der Steg ST_HS des Hauptradsatzes HS über das vierte Schaltelement D an dem Getriebegehäuse GG festsetzbar und über das fünfte Schaltelement E mit der Antriebswelle AN verbindbar. Infolge dieser Anbindung der einzelnen Elemente des Hauptradsatzes HS an die einzelnen Schaltelemente ist der Steg ST_HS des Hautradsatzes HS also durch ein gleichzeitiges Schließen des fünften und sechsten Schaltelementes E, F auch mit dem ersten Sonnenrad S1_HS des Hauptradsatzes HS verbindbar. Das Hohlrad HO_HS des Hauptradsatzes HS ist ständig und ausschließlich mit der Abtriebswelle AB verbunden.

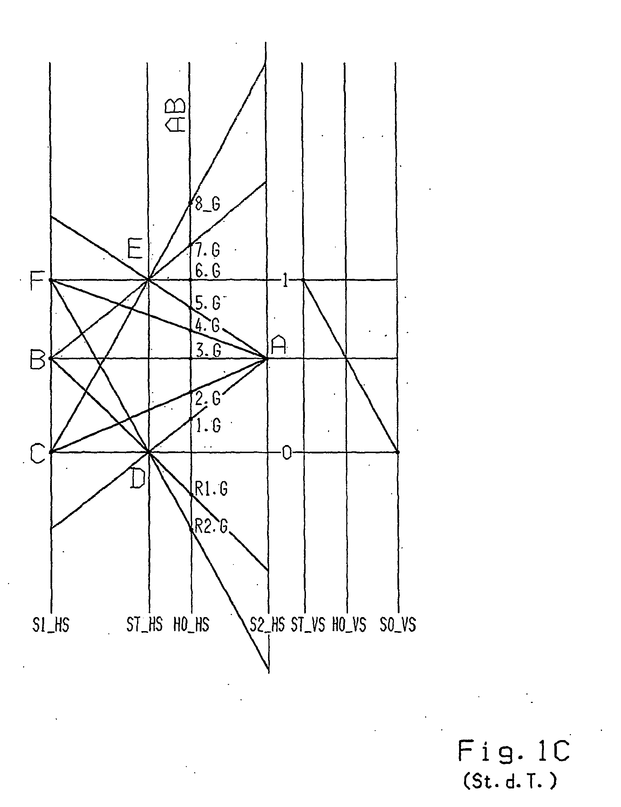

Fig. 1B zeigt ein Schaltschema des in Fig. 1A dargestellten Mehrstufen-Automatgetriebes. Es sind insgesamt acht Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. Im ersten Gang "1" sind Kupplung A und Bremse D geschlossen, im zweiten Gang "2" Kupplung A und Bremse C, im dritten Gang "3" die Kupplungen A und B, im vierten Gang "4" die Kupplungen A und F, im fünften Gang "5" die Kupplungen A und E, im sechsten Gang "6" die Kupplungen E und F, im siebten Gang "7" die Kupplungen B und E, und im achten Gang "8" Bremse C und Kupplung E. In einem ersten Rückwärtsgang "R1" sind Kupplung B und Bremse D geschlossen. Es kann auch ein zweiter Rückwärtsgang "R2" vorgesehen sein, in dem Kupplung F und Bremse D geschlossen sind. Fig. 1C zeigt einen Drehzahlplan des in Fig. 1A dargestellten Mehrstufen-Automatgetriebes.

Zurückkommend auf Fig. 1A, sind die Lamellenpakete sowie die Ein- und Ausgangselemente der Schaltelemente einheitlich bezeichnet. So ist das Lamellenpaket des ersten Schaltelementes A mit 100 bezeichnet, das Eingangselement des ersten Schaltelementes A mit 120, das Ausgangselement des ersten Schaltelementes A mit 130, sowie eine Servoeinrichtung zur Betätigung des Lamellenpaketes 100 des ersten Schaltelementes A mit 110. Entsprechend sind die Lamellenpakete der anderen Schaltelemente B, C, D, E und F mit 200, 300, 400, 500 und 600 bezeichnet, die Eingangselemente der anderen Schaltelemente B, E und F mit 220, 520 und 620. Entsprechend sind auch die Ausgangselemente der anderen Schaltelemente B, C, D, E und F mit 230, 330, 430, 530 und 630 bezeichnet, sowie die Servoeinrichtungen der anderen Kupplungen B, E und F zum Betätigen deren jeweiligen Lamellenpakete 200 bzw. 500 bzw. 600 mit 210, 510 und 610.

Hinsichtlich der räumlichen Anordnung der Schaltelemente und Radsätze relativ zueinander innerhalb des mit GG bezeichneten Getriebegehäuses lehrt die DE 10318565.8 folgendes: Das als Kupplung ausgebildete fünfte Schaltelement E ist räumlich gesehen axial zwischen Vorschaltradsatz VS und Hauptradsatz HS angeordnet, axial unmittelbar angrenzend an den Vorschaltradsatz VS. Das ebenfalls als Kupplung ausgebildete zweite Schaltelement B ist ebenfalls axial zwischen Vorschaltradsatz VS und Hauptradsatz HS angeordnet, wobei das Lamellenpaket 200 dieser Kupplung B räumlich gesehen in etwa radial über dem Lamellenpaket 500 der Kupplung E angeordnet ist und die Servoeinrichtung 210 der Kupplung B axial an die Kupplung E auf deren dem Vorschaltradsatz VS abgewandten Seite angrenzt. Axial in Richtung Hauptradsatz HS gesehen schließen sich an die Kupplung B zuerst das als Bremse ausgebildete dritte Schaltelement C, dann das ebenfalls als Bremse ausgebildete vierte Schaltelement D und dann der Hauptradsatz HS an. Das Lamellenpaket 100 des als Kupplung ausgebildeten ersten Schaltelementes A ist räumlich gesehen in etwa über dem Vorschaltradsatz VS angeordnet. Die Servoeinrichtung 110 dieser Kupplung A ist zumindest überwiegend auf der dem Hauptradsatz HS abgewandten Seite des Vorschaltradsatzes VS angeordnet. Auf der dem Vorschaltradsatz VS abgewandten Seite der Servoeinrichtung 110 der Kupplung A, räumlich gesehen axial zwischen der Kupplung A und einer antriebsseitigen getriebegehäusefesten Gehäusewand GW, also auf der dem Hauptradsatz HS abgewandten Seite von Kupplung A und Vorschaltradsatz VS, ist das als Kupplung ausgebildete sechste Schaltelement F angeordnet.

Als Ausführungsbeispiel für eine Servoeinrichtung eines Schaltelementes ist in Fig. 1A die Servoeinrichtung 610 des sechsten Schaltelementes F näher detailliert. So ist diese Servoeinrichtung 610 innerhalb eines zylinderförmigen Lamellenträgers angeordnet, der das Eingangselement 620 der Kupplung F bildet und entsprechend stets mit Drehzahl der Antriebswelle AN des Getriebes rotiert. Die Servoeinrichtung 610 weist einen Druckraum 611 auf, der durch einen Mantelflächenabschnitt des Lamellenträgers der Kupplung F und einen Kolben 614 der Servoeinrichtung 610 gebildet wird. Bei einer Druckbeaufschlagung dieses Druckraums 611 bewegt sich der Kolben 614 gegen die Kraft eines hier beispielhaft als Tellerfeder ausgebildeten Rückstellelementes 613 der Servoeinrichtung 610 axial in Richtung des Vorschaltradsatzes VS und betätigt bzw. schließt das Lamellenpaket 600 der Kupplung F. Zur vorzugsweise vollständigen Kompensation eines dynamischen Druckes des rotierenden Druckraumes 611 weist die Servoeinrichtung 610 zusätzlich einen mit Schmiermittel drucklos befüllbaren Druckausgleichsraum 612 auf, der durch eine Fläche des Kolbens 614 und eine Stauscheibe 615 gebildet wird. Das Eingangselement 620 ist auf einer getriebegehäusefesten Nabe GN verdrehbar gelagert, die sich ausgehend von der getriebegehäusefesten Gehäusewand GW im Innenraum des Getriebegehäuses GG axial in Richtung des Vorschaltradsatzes VS bis zum Sonnenrad SO_VS des Vorschaltradsatzes VS erstreckt und mit diesem Sonnenrad SO_VS verdrehfest verbunden ist. Entsprechend weist diese getriebegehäusefeste Nabe GN auch Kanäle zur Druck-und Schmiermittelzuführung zum Druckraum bzw. Druckausgleichsraum der Kupplung F auf.

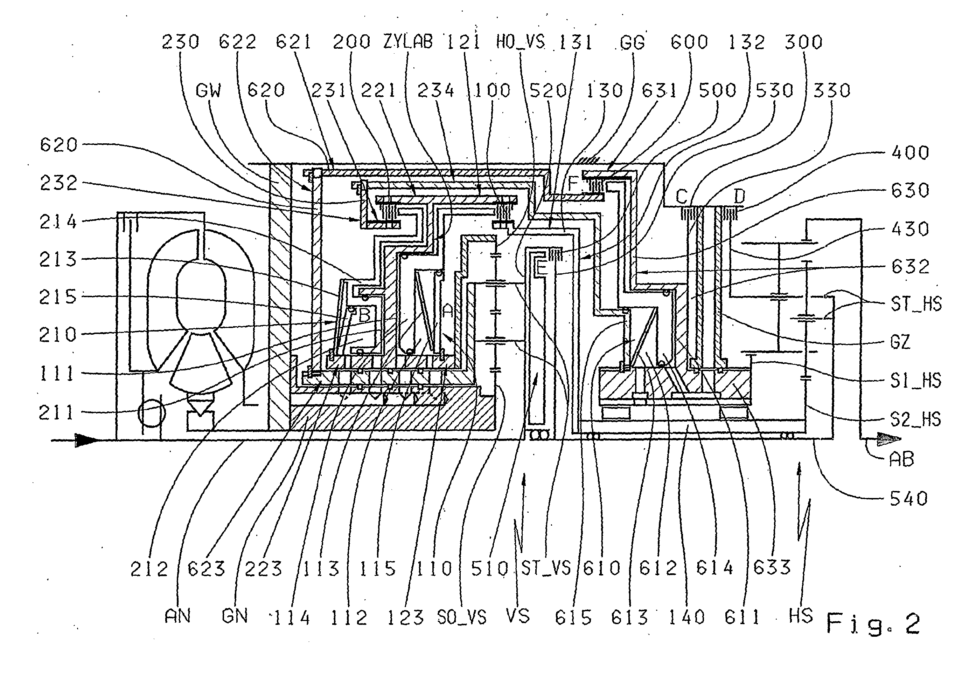

Anhand Fig. 2 wird nun ein erstes Ausführungsbeispiel für ein Getriebeschema gemäß der vorliegenden Erfindung erläutert. Im Vergleich zu Fig. 1A wurde die räumliche Lage der Schaltelemente A, B, F relativ zu den Radsätzen VS, HS und relativ zueinander und zu den anderen Schaltelementen C, D, E deutlich verändert, unter Beibehaltung der kinetischen Kopplungen der Radsätze und Schaltelemente und unter Beibehaltung der konstruktiven Ausbildung der koaxial nebeneinander (aber nicht unmittelbar nebeneinander) angeordneten Planetenradsätze VS und HS.

Gegenüber Fig. 1A unverändert ist das als Kupplung ausgebildete fünfte Schaltelement E axial zwischen Vorschaltradsatz VS und Hauptradsatz HS angeordnet, axial unmittelbar angrenzend an den Vorschaltradsatz VS. So ist das Eingangselement 520 der Kupplung E als Außenlamellenträger ausgebildet, geometrisch in Form eines in Richtung Hauptradsatz HS geöffneten zylinderförmigen Topfes, dessen scheibenförmiger Topfboden zum einen mit dem gekoppelten Steg ST_VS des Vorschaltradsatzes VS und zum anderen im Bereich seines kleinsten Durchmessers mit der Antriebswelle AN verbunden ist, und dessen zylindrischer Abschnitt am Innendurchmesser die Außenlamellen des Lamellenpaketes 500 der Kupplung E aufnimmt. Ein dem Hauptradsatz HS zugewandtes Stegblech des Vorschaltradsatzes VS und der Außenlamellenträger der Kupplung E können also einstückig ausgeführt sein. Eine nur schematisch dargestellte Servoeinrichtung 510 der Kupplung E ist innerhalb eines Zylinderraums angeordnet, der durch den genannten Außenlamellenträger 520 der Kupplung E gebildet wird, ist am Nabenbereich dieses Außenlamellenträgers 520 axial verschiebbar gelagert, rotiert stets mit Drehzahl der Antriebswelle AN und betätigt das ihr zugeordnete Lamellenpaket 500 beim Schließen der Kupplung E axial in Richtung des Hauptradsatzes HS. Das Ausgangselement 530 der Kupplung E ist entsprechend als Innenlamellenträger ausgebildet, der zentrisch mit einer Stegwelle 540 verbunden, welche sich ausgehend vom Nabenbereich dieses Ausgangselementes 530 der Kupplung E axial in Richtung des Hauptradsatzes HS erstreckt und diesen Hauptradsatz HS zentrisch vollständig durchgreift und auf der dem Vorschaltradsatz VS gegenüberliegenden Seite des Hauptradsatzes HS mit dem gekoppelten Steg ST_HS des Hauptradsatzes HS verbunden ist. Dieser gekoppelte Steg ST_HS bildet das dritte Eingangselement des Hauptradsatzes HS. Die Nabe des Ausgangselementes 530 der Kupplung E oder die Stegwelle 540 ist an der Antriebswelle AN verdrehbar gelagert.

Gegenüber Fig. 1A ebenfalls unverändert ist die räumliche Lage der beiden beispielhaft als Lamellenbremse ausgebildeten Schaltelemente C und D relativ zu den beiden Radsätzen VS und HS. Das vierte Schaltelement D mit seinem Lamellenpaket 400 ist benachbart zum Hauptradsatz HS auf dessen dem Vorschaltradsatz VS zugewandten Seite angeordnet. Das als Innenlamellenträger ausgebildete Ausgangselement 430 der Bremse D ist mit dem gekoppelten Steg ST_HS des Hauptradsatzes HS verbunden, wobei dieser Steg ST_HS den Hauptradsatz HS axial vollständig durchdringt. In Richtung Vorschaltradsatz VS gesehen, schließt sich das Lamellenpaket 300 der Bremse C axial an das Lamellenpaket 400 der Bremse D an. Das Ausgangselement 330 der Bremse C ist als Innenlamellenträger ausgebildet. Die Außenlamellenträger der beiden Bremsen C und D können in einfacher Weise in dem Getriebegehäuse GG integriert sein, ebenso die zur Vereinfachung nicht dargestellten Servoeinrichtungen zum Betätigen der Lamellenpakete 300 und 400, Selbstverständlich kann für die Bremsen C und D auch ein separater Außenlamellenträger vorgesehen sein, der dann mit dem Getriebegehäuse GG verdrehfest verbunden ist und auch die Servoeinrichtungen der Bremsen C und D axial verschiebbar aufnehmen kann.

Wie in Fig. 2 ersichtlich, ist das als Kupplung ausgebildete sechste Schaltelement F nunmehr räumlich gesehen in einem Bereich axial zwischen Vorschaltradsatz VS und Hauptradsatz HS angeordnet, im dargestellten Beispiel axial zwischen Kupplung E und Hauptradsatz HS. Dabei ist das Ausgangselement 630 der Kupplung F als Außenlamellenträger ausgebildet, geometrisch in Form eines in Richtung Vorschaltradsatz VS geöffneten Topfes. Eine Nabe 633 dieses Außenlamellenträgers der Kupplung F grenzt unmittelbar an den Hauptradsatz HS an und ist mit dem ersten Sonnenrad S1_HS des Hauptradsatzes HS verdrehfest verbunden. Dieses Sonnenrad S1_HS bildet bekanntlich das erste Eingangselement des Hauptradsatzes HS. Im dargestellten Ausführungsbeispiel ungefähr nabenmittig schließt sich ein gekröpfter scheibenförmiger Abschnitt 632 des Außenlamellenträgers 630 der Kupplung F an diese Nabe 633 an und erstreckt sich radial nach außen bis auf einen Durchmesser, der etwas größer ist als der Außendurchmesser des Lamellenpaketes 600 der Kupplung F. Am Außendurchmesser dieses scheibenförmigen Abschnitts 632 schließt sich ein zylindrischer Abschnitt 631 des Außenlamellenträgers 630 der Kupplung F an und erstreckt sich axial in Richtung des Vorschaltradsatzes VS und nimmt an seinem Innendurchmesser die (vorzugsweise als außenverzahnte Stahllamellen ausgebildeten) Außenlamellen des Lamellenpaketes 600 der Kupplung F auf. Der scheibenförmige Abschnitt 632 des Außenlamellenträgers 630 der Kupplung F ist im Bereich seiner Kröpfung zusätzlich mit dem als Innenlamellenträger ausgebildeten Ausgangselement 330 der Bremse C verbunden. Insofern ist die Bremse C über das Ausgangselement 630 der Kupplung F kinematisch an das erste Eingangselement (hier das erste Sonnenrad S1_HS) des Hauptradsatzes HS angebunden. Verdrehbar gelagert ist die Nabe 633 des Ausgangselementes (Außenlamellenträgers) 630 der Kupplung F auf einer zweiten Sonnenwelle 140, welche die kinematische Verbindung zwischen dem Ausgangselement 130 des zweiten Schaltelementes A und dem zweiten Eingangselement (hier dem zweiten Sonnenrad S2_HS) des Hauptradsatzes HS herstellt und dabei die genannte Nabe 633 und auch die ganze Kupplung F in axialer Richtung zentrisch vollständig durchgreift. Diese als Hohlwelle ausgeführte zweite Sonnenwelle 140 wiederum ist auf der Stegwelle 540 gelagert, welche die kinematische Verbindung zwischen dem Ausgangselement 530 der Kupplung E und dem dritten Eingangselement (hier dem gekoppelten Steg ST_HS) des Hauptradsatzes HS bildet und dabei die zweite Sonnenwelle 140 in axialer Richtung zentrisch vollständig durchgreift.

In dem in Fig. 2 dargestellten Ausführungsbeispiel sind die Lamellenpakete 500 und 600 der Kupplungen E und F in axialer Richtung gesehen nebeneinander angeordnet, wobei das Lamellenpaket 600 der Kupplung F einen größeren Durchmesser aufweist als das Lamellenpaket 500 der Kupplung E. Je nach konstruktiver Ausführung dieser beiden Kupplungen E, F hinsichtlich axialer Baulänge kann das Lamellenpaket 600 der Kupplung F auch räumlich gesehen zumindest teilweise in einem Bereich radial über dem Lamellenpaket 500 der Kupplung E angeordnet sein.

Die Servoeinrichtung 610 der Kupplung F ist zumindest weitgehend innerhalb eines Zylinderraums angeordnet, der durch das Ausgangselement 630 (bzw. den Außenlamellenträger) der Kupplung F gebildet wird. Ein Druckraum 611 dieser Servoeinrichtung 610 wird gebildet durch eine Mantelfläche dieses Ausgangselementes (Außenlamellenträgers) 630 und einen axial zu diesem Ausgangselement (Außenlamellenträger) 630 axial verschiebbaren Kolben 614. Ein beispielhaft als Tellerfeder ausgeführtes Rückstellelement 613 ist beispielhaft an der Nabe 633 des Ausgangselementes (Außenlamellenträgers) 630 axial fixiert und spannt den Kolben 614 axial gegenüber dem Ausgangselement (Außenlamellenträger) 630 der Kupplung F vor. Weiterhin weist die Servoeinrichtung 610 zum Ausgleich des dynamischen Drucks des stets mit Drehzahl des ersten Eingangselementes (also des ersten Sonnenrades S1_HS) des Hauptradsatzes HS rotierenden Druckraums 611 einen drucklos mit Schmiermittel befüllbaren Druckausgleichsraum 612 auf, der auf der dem Vorschaltradsatz VS zugewandten Seite des Druckraums 611 angeordnet ist und durch eine Mantelfläche des Kolbes 614 und eine Stauscheibe 615 gebildet wird. Diese Stauscheibe 615 der Servoeinrichtung 610 ist an der Nabe 633 des Ausgangselementes (Außenlamellenträgers) 630 der Kupplung F axial fixiert und zudem drehfest mit dieser Nabe 633 verbunden. Räumlich gesehen ist also der Druckraum 611 näher am Hauptradsatz HS angeordnet als der Druckausgleichsraum 612 bzw. als der Druckausgleichsraum 612 näher am Vorschaltradsatz VS angeordnet als der Druckraum 611. Wird der Druckraum 611 mit Druckmittel beaufschlagt, so betätigt der Kolben 614 das Lamellenpaket 600 der Kupplung F gegen die Rückstellkraft des Rückstellelementes 613 axial in Richtung Vorschaftradsatz VS. In dem dargestellten Ausführungsbeispiel wird das Druckmittel dem Druckraum 611 sowie das Schmiermittel dem Druckausgleichsraum 612 über entsprechende Bohrungen bzw. Kanäle vom Getriebegehäuse GG her zugeleitet. Hierzu ist eine mit dem Getriebegehäuse GG verdrehfest verbundene Gehäusezwischenwand GZ oder ein getriebegehäusefestes Element vorgesehen, die bzw. das räumlich gesehen in einem Bereich axial zwischen den Bremsen C und D angeordnet ist und entsprechende Druck- und Schmiermittelkanäle aufweist. Druck- und Schmiermittel werden zunächst über diese Druck- und Schmiermittelkanäle der Gehäusezwischenwand GZ bzw. des getriebegehäusefesten Elementes der rotierenden Nabe 633 des Ausgangselementes (Außenlamellenträgers) 630 des sechsten Schaltelementes F zugeleitet, und von dort über entsprechende Bohrungen bzw. Kanäle der Nabe 633 dem Druck- bzw. Druckausgleichsraum 611, 612.

Das Eingangselement 620 der Kupplung F ist als Innenlamellenträger ausgebildet, geometrisch in Form eines in Richtung Hauptradsatz HS geöffenten Topfes, umfassend eine Nabe 623, einen scheibenförmigen Abschnitt 622 und einen zylinderförmigen Abschnitt 621. Die Nabe 623 ist räumlich gesehen auf der dem Hauptradsatz HS abgewandten Seite des Vorschaltradsatzes HS angeordnet und hier auf einer getriebegehäusefesten Nabe GN verdrehbar gelagert. Diese Gehäusenabe GN erstreckt sich ausgehend von einer getriebegehäusefesten Gehäusewand GW, welche die vorschaltradsatznahe Stirnseite des Getriebegehäuses bildet, axial bis zum Vorschaltradsatz VS und ist mit dessen Sonnenrad SO_VS verdrehfest verbunden. Die Nabe 623 ist auf ihrer vorschaltradsatznahen Seite mit einem hauptradsatzfernen Stegblech des gekoppelten Stegs ST_VS des Vorschaltradsatzes VS verdrehfest verbunden. Dieser gekoppelte Steg ST_VS durchgreift den Vorschaltradsatz VS in axialer Richtung und verbindet das Eingangselement 620 der Kupplung F auf der hauptradsatznahen Seite des Vorschaltradsatzes VS mit der Antriebswelle AN. Der scheibenförmige Abschnitt 622 des Eingangselementes 620 der Kupplung F ist mit der Nabe 623 an deren vorschaltradsatzfernen Seite verbunden, im dargestellten Ausführungsbeispiel formschlüssig über ein geeignetes Mitnahmeprofil. Ausgehend von der Nabe 623 erstreckt sich dieser scheibenförmige Abschnitt 622 radial nach außen bis auf einen Durchmesser knapp unterhalb dem Innendurchmesser des Getriebegehäuses GG. An seinem Außendurchmesser ist der scheibenförmige Abschnitt 622 mit dem zylindrischen Abschnitt 621 des Eingangselementes 620 der Kupplung F verbunden, im dargestellten Ausführungsbeispiel formschlüssig über ein geeignetes Mitnahmeprofil. Ausgehend vom scheibenförmigen Abschnitt 622 erstreckt sich dieser zylindrische Abschnitt 621 axial in Richtung Hauptradsatz HS bis zu dem Lamellenpaket 600 der Kupplung F. Entsprechend der Funktion als Innenlamellenträger ist am hauptradsatznahen Ende dieses zylindrischen Abschnitts 621 am Außendurchmesser ein Mitnahmeprofil vorgesehen zur Aufnahme der vorzugsweise als innenverzahnte Belaglamellen ausgebildeten Innenlamellen des Lamellenpaketes 600. In seinem Verlauf übergreift das Eingangselement 620 der Kupplung F die Kupplungen B und A, den Vorschaltradsatz VS und die Kupplung E in axialer Richtung radial vollständig.

Im Unterschied zu Fig. 1A ist gemäß Fig. 2 für die beiden als Kupplung ausgebildete Schaltelemente A, B ein gemeinsamer Lamellenträger ZYLAB vorgesehen, der das mit der Antriebswelle AN verbundene Eingangselement beider Kupplungen A, B bildet und dabei räumlich gesehen überwiegend auf der dem Hauptradsatz HS abgewandten Seite des Vorschaltradsatzes VS angeordnet ist. Im dargestellten Ausführungsbeispiel ist dieser Lamellenträger ZYLAB als Außenlamellenträger für beide Kupplungen A, B ausgeführt, zur Aufnahme von (vorzugsweise als außenverzahnte Stahllamellen ausgebildete) Außenlamellen der Lamellenpakete 100, 200 der beiden Kupplungen A, B. Das Lamellenpaket 200 des zweiten Schaltelementes B ist auf der dem Hauptradsatz HS abgewandten Seite des Vorschaltradsatzes VS angeordnet. Das Lamellenpaket 100 des ersten Schaltelementes A ist räumlich gesehen in einem Bereich über dem Vorschaltradsatz VS angeordnet, könnte jedoch auch in einem Bereich über der an den Vorschaltradsatz VS axial angrenzenden Kupplung E oder wie das Lamellenpaket 200 auf der dem Hauptradsatz HS abgewandten Seite des Vorschaltradsatzes VS angeordnet sein. In jedem Fall ist das Lamellenpaket 100 der Kupplung A näher am Hauptradsatz HS angeordnet als das Lamellenpaket 200 der Kupplung B. Das Konzept des für die Kupplungen A, B gemeinsamen Außenlamellenträgers begünstigt den Einsatz von Gleichteilen; insofern weisen die Lamellenpakete 100, 200 vorzugsweise einen gleichen Durchmesser auf.

Geometrisch ist der für beide Kupplungen A, B gemeinsame Lamellenträger ZYLAB als ein beidseitig geöffneter zylinderförmiger Topf mit zylindermittig angeordnetem Topfboden und einer sich beidseits des Topfbodens axial erstreckenden Nabe. Der vorschaltradsatznahe Abschnitt der Nabe des Lamellenträgers ZYLAB ist mit 123 bezeichnet, der durch den Topfboden von diesem ersten Abschnitt 123 räumlich getrennte vorschaltradsatzferne zweite Abschnitt dieser Nabe mit 223. Wie dieser Nomenklatur entnehmbar, ist der erste Abschnitt 123 der Nabe des Lamellenträgers ZYLAB dem ersten Schaltelement A zugeordnet und der zweite Abschnitt 223 dieser Nabe dem zweiten Schaltelement B. Die Nabe des Lamellenträgers ZYLAB ist an ihrer vorschaltradsatznahen Seite über ein scheibenförmiges Element mit dem Hohlrad HO_VS des Vorschaltradsatzes VS verdrehfest verbunden, beispielsweise über ein Mitnahmeprofil. Dieses scheibenförmige Element übernimmt die Funktion eines Hohlradträgers für den Vorschaltradsatz VS und erstreckt sich radial parallel angrenzend an das hauptradsatzferne Stegblech des Vorschaltradsatzes VS. Verdrehbar gelagert ist die Nabe des Lamellenträgers ZYLAB mit ihren Abschnitten 123 und 223 auf der Nabe 623 des Eingangselementes 620 der Kupplung F, räumlich gesehen axial zwischen dem hauptradsatzfernen Stegblech des Vorschaltradsatzes VS und dem nahe der Gehäusewand GW angeordneten scheibenförmigen Abschnitt 622 des Eingangselementes 620 der Kupplung F.

Ausgehend in etwa von der Mitte der Nabe des Lamellenträgers ZYLAB erstreckt sich der zumindest abschnittsweise scheibenförmige Topfboden des Lamellenträgers ZYLAB radial nach außen bis zum Außendurchmesser der Lamellenpakete 100 und 200 der beiden Kupplungen A, B. Am Außendurchmesser des Topfbodens des Lamellenträgers ZYLAB erstreckt sich ausgehend von diesem Topfboden ein der Kupplung A zugeordneter erster zylindrischer Abschnitt 121 des Lamellenträgers ZYLAB axial in Richtung Hauptradsatz HS. Am Innendurchmesser dieses zylindrischen Abschnitts 121 ist ein Mitnahmeprofil vorgesehen zur Aufnahme der vorzugsweise als außenverzahnte Stahllamellen ausgebildeten Außenlamellen des Lamellenpaketes 100 der Kupplung A. Im dargestellten Ausführungsbeispiel übergreift der erste zylindrische Abschnitt 121 des Lamellenträgers ZYLAB den Vorschaltradsatz VS in axialer Richtung. Am Außendurchmesser des Topfbodens des Lamellenträgers ZYLAB erstreckt sich ausgehend von diesem Topfboden ein der Kupplung B zugeordneter zweiter zylindrischer Abschnitt 221 des Lamellenträgers ZYLAB axial in zum Hauptradsatz HS entgegengesetzter Richtung. Am Innendurchmesser dieses zylindrischen Abschnitts 221 ist ein Mitnahmeprofil vorgesehen zur Aufnahme der vorzugsweise als außenverzahnte Stahllamellen ausgebildeten Außenlamellen des Lamellenpaketes 200 der Kupplung B.

Selbstverständlich können anstelle der wechselseitig angeordneten Stahllamellen (ohne Reibbelag) und Belaglamellen auch einseitig mit einem Reibbelag belegte Stahllamellen verwendet werden, wobei dann jeweils eine außenverzahnte belegte Stahllamelle und eine innenverzahnte belegte Stahllamelle wechselseitig zu einem Lamellenpaket zusammengefügt werden müssen. Selbstverständlich können anstelle der vorgeschlagenen Stahllamellen auch Lamellen aus Carbon oder Kohlefaser oder anderen geeigneten Verbundwerkstoffen verwendet werden.

Eine Servoeinrichtung 110 des ersten Schaltelementes A ist zumindest teilweise radial oberhalb des vorschaltradsatznahen Nabenabschnitts 123 der Nabe des für die beiden Kupplungen A und B gemeinsamen Eingangseiementes ZYLAB angeordnet, innerhalb eines Zylinderraums, der durch den Lamellenträger ZYLAB und dabei insbesondere durch dessen zylindrischen Abschnitts 121 gebildet wird. Dabei rotiert diese Servoeinrichtung 110 ständig mit Drehzahl des Ausgangselementes des Vorschaltradsatzes VS, also mit Drehzahl des Hohlrades HO_VS, und umfasst einen mit Druckmittel befüllbaren Druckraum 111, einen drucklos mit Schmiermittel befüllbaren Druckausgleichsraum 112 zum Ausgleich eines dynamischen Drucks des rotierenden Druckraums 111, einen am Lamellenträger ZYLAB axial verschiebbar gelagerten Kolben 114 zur Betätigung des Lamellenpaketes 100 der Kupplung A, eine Stauscheibe 115, sowie ein Rückstellelement 113 zur Rückstellung des Kolbens 114. Der Druckraum 111 wird durch eine Mantelfläche des Lamellenträgers ZYLAB und dem auf dem Nabenabschnitt 123 axial verschiebbar gelagerten Kolben 114 gebildet, der Druckausgleichsraum 111 durch den Kolben 114 und die Stauscheibe 115. Räumlich gesehen ist der Druckausgleichsraum 112 näher am Vorschaltradsatz VS angeordnet als der Druckraum 111. Wird der Druckraum 111 zum Schließen der Kupplung A mit Druckmittel befüllt, so verschiebt sich der Kolben 114 gegen die Kraft des Rückstellelementes 113 axial in Richtung Hauptradsatz HS und bringt so das Lamellenpaket 100 der Kupplung A in Reibeingriff.

Eine Servoeinrichtung 210 des zweiten Schaltelementes B ist zumindest weitgehend radial oberhalb des vorschaltradsatzfernen Nabenabschnitts 223 des für die Kupplungen A und B gemeinsamen Eingangselementes ZYLAB angeordnet, zumindest teilweise innerhalb einer Zylinderraums, der durch den Lamellenträger ZYLAB und dabei insbesondere durch dessen zylindrischen Abschnitts 221 gebildet wird. Dabei rotiert diese Servoeinrichtung 210 ständig mit Drehzahl des Ausgangselementes des Vorschaltradsatzes VS, also mit Drehzahl des Hohlrades HO_VS, und umfasst einen mit Druckmittel befüllbaren Druckraum 211, einen drucklos mit Schmiermittel befüllbaren Druckausgleichsraum 212 zum Ausgleich eines dynamischen Drucks des rotierenden Druckraums 211, einen am Lamellenträger ZYLAB axial verschiebbar gelagerten Kolben 214 zur Betätigung des Lamellenpaketes 200 der Kupplung B, eine Stauscheibe 215, sowie ein Rückstellelement 213 zur Rückstellung des Kolbens 114. Der Druckraum 211 wird durch eine Mantelfläche des Lamellenträgers ZYLAB und dem auf dem Nabenabschnitt 223 axial verschiebbar gelagerten Kolben 214 gebildet, der Druckausgleichsraum 211 durch den Kolben 214 und die Stauscheibe 215. Räumlich gesehen ist der Druckraum 211 näher am Vorschaltradsatz VS angeordnet als der Druckausgleichsraum 212. Die Druckräume 111, 211 der Servoeinrichtungen 110, 210 der beiden Kupplungen A, B sind also nur durch eine Mantelfläche des für beide Kupplungen gemeinsamen Lamellenträgers ZYLAB, insbesondere nur durch den scheibenförmigen Topfboden des Lamellenträgers ZYLAB voneinander getrennt. Wird der Druckraum 211 der Servoeinrichtung 210 zum Schließen der Kupplung B mit Druckmittel befüllt, so verschiebt sich der Kolben 214 gegen die Kraft des Rückstellelementes 213 axial in zum Vorschaltradsatz VS entgegengesetzter Richtung bzw. in zum Hauptradsatz HS entgegengesetzter Richtung und bringt so das Lamellenpaket 200 der Kupplung B in Reibeingriff. Die Betätigungsrichtungen der Kupplungen A und B sind also entgegengesetzt zueinander.

Wie bereits erwähnt, ist die Nabe des für beide Kupplungen A, B gemeinsamen Lamellenträgers ZYLAB mit ihren beiden Nabenabschnitten 123, 223 auf der Nabe 623 des Eingangselementes 620 der Kupplung F verdrehbar gelagert. Wie ebenfalls bereits erwähnt, ist diese Nabe 623 verdrehbar auf der getriebegehäusefesten Gehäusenabe GN verdrehbar gelagert. Die Druck- und Schmiermittelzufuhr zu den Druckrsumen 111, 211 und Druckausgleichräumen 112, 212 der Servoeinrichtungen 110, 210 der beiden Kupplungen A, B erfolgt von dieser Gehäusenabe GN über die rotierende Nabe 623 des Eingangselementes 620 der Kupplung F. Hierzu sind innerhalb der Gehäusenabe GN und der Nabe 623 entsprechende Bohrungen bzw. Kanäle vorgesehen, sowie geeignete Dichtelemente für eine rotierende Abdichtung radial zwischen der Nabe 623 und den beiden Nabenabschnitten 123, 223 und axial zwischen den jeweiligen radialen Bohrungen bzw. Kanälen der Druck- und Schmiermittelzuführungen.

Das Ausgangselement 130 der Kupplung A ist als Innenlamellenträger ausgebildet, geometrisch in Form eines in zum Hauptradsatz HS entgegengesetzter Richtung geöffneten Topfes. Ein zylindrischen Abschnitt 131 dieses Innenlamellenträgers 130 weist an seinem Außendurchmesser ein Mitnahmeprofil zur Aufnahme der vorzugsweise als innenverzahnte Belaglamellen ausgebildeten Innenlamellen des Lamellenpaketes 100 der Kupplung A auf und erstreckt sich ausgehend von diesem Lamellenpaket 100 axial in Richtung Hauptradsatz HS bis knapp über die Kupplung E hinweg. Auf der hauptradsatznahen Seite dieses zylindrischen Abschnitts 131 schließt sich ein scheibenförmiger Abschnitt 132 des Ausgangselementes 130 der Kupplung A an den zylindrischen Abschnitt 131 an und erstreckt sich radial nach innen bis knapp oberhalb der Stegwelle 540 und ist in seinem Nabenbereich mit der zweiten Sönnenwelle 140 verdrehfest verbunden. Wie bereits erwähnt, stellt diese Sonnenwelle 140 die kinematische Verbindung zwischen Kupplung A und dem zweiten Eingangselement (hier Sonnenrad S2_HS) des Hauptradsatzes HS dar. Entsprechend der im Ausführungsbeispiel dargestellten räumlichen Lage des Lamellenpaketes 100 der Kupplung A radial über dem Vorschaltradsatz VS und in Richtung Hauptradsatz HS gesehen vor der Kupplung E, übergreift das Ausgangselement 130 der Kupplung A die Kupplung E also in axialer Richtung gesehen radial vollständig.

Das Ausgangselement 230 der Kupplung B ist ebenfalls als Innenlamellenträger ausgebildet. Ein zylindrischer Abschnitt 231 dieses Innenlamellenträgers 230 weist an seinem Außendurchmesser ein Mitnahmprofil zur Aufnahme der vorzugsweise als innenverzahnte Belaglamellen ausgebildeten Innenlamellen des Lamellenpaketes 200 der Kupplung B auf und erstreckt sich ausgehend von diesem Lamellenpaket 200 axial in zum Vorschaitradsatz VS entgegengesetzer Richtung bis knapp über die axiale Erstreckung des zylindrischen Abschnitts 221 des (Außen-)Lamellenträgers ZYLAB hinweg. An seiner radsatzfernen Seite schließt sich an diesen zylindrischen Abschnitt 231 ein scheibenförmiger Abschnitt 232 des Ausgangselementes 230 der Kupplung B an und erstreckt sich radial nach außen bis auf einen Durchmesser zwischen dem Außendurchmesser des zylindrischen Abschnitts 221 des Lamellenträgers ZYLAB und dem Innendurchmesser des zylindrischen Abschnitts 621 des Eingangselementes 620 der Kupplung F, der in diesem axialen Bereich vorliegt. An seinem Außendurchmesser ist dieser scheibenförmige Abschnitt 232 des Ausgangselement 230 der Kupplung B mit einem zylindrischen Abschnitt der Stauscheibe 615 der Servoeinrichtung 610 der Kupplung F verdrehfest verbunden. Diese Stauscheibe 615 der Servoeinrichtung 610 der Kupplung F übernimmt neben ihrer Funktion der Druckausgleichsraumbildung für diese Servoeinrichtung 610 nämlich zusätzlich eine weitere Funktion: die Drehmomentübertragung des Ausgangsdrehmomentes der Kupplung B zu dem ersten Eingangselement (Sonnenrad S1_HS) des Hauptradsatzes HS. Entsprechend ist die Stauscheibe 615 bauteilseitig ebenso wie ein Mitnahmeprofil zwischen Stauscheibe 615 und Nabe 633 auch derart dimensioniert, dass sie bzw. es zumindest das maximal mögliche Ausgangsdrehmoment der Kupplung B übertragen kann. In dem in Fig. 2 dargestellten Beispiel ist die Stauscheibe 615 als ein in Richtung des Vorschaltradsatzes VS hin geöffneter Topf mit großer axialer Erstreckurtg ausgebildet, dessen Topfboden im Bereich seines Innendurchmessers mit der Nabe 633 des Ausgangselementes 630 der Kupplung F verdrehfest verbunden ist und in einem Abschnitt mit einem Durchmesser radial oberhalb dieser Nabe 633 gegenüber dem Kolben 614 der Servoeinrichtung 610 der Kupplung F zur Bildung des Druckausgleichsraums 612 dieser Servoeinrichtung 610 axial verschiebbar schmiermitteldicht abgedichtet ist. Der sich an den Topfboden anschließende zylinderförmige Abschnitt der Stauscheibe ist der Außenkontur der Kupplung E und dem gemeinsamen Außenlamellenträger ZYLAB der Kupplungen A und B angepaßt und umgreift das Ausgangselement 130 der Kupplung A, die Kupplung E, den Vorschaltradsatz VS, die Kupplung A und das Lamellenpaket 200 der Kupplung B in axialer Richtung gesehen radial vollständig. Auf der Seite des Lamellenpaketes 200 der Kupplung B, die dem Vorschaltradsatz VS gegenüberliegt, ist die Stauscheibe mit dem als Innenlamellenträger ausgebildeten Ausgangselement 230 der Kupplung B verdrehfest verbunden. In dem dargestellten Ausführungsbeispiel ist hierzu konstruktiv am Außendurchmesser des scheibenförmigen Abschnitts 232 dieses Ausgangselementes 230 ein Mitnahmeprofil vorgesehen, welches in ein korrespondierendes Mitnahmeprofil an dem hauptradsatzfernen Ende der Stauscheibe 615 eingreift. In einer anderen konstruktiven Ausgestaltung der Verbindung zwischen dem Ausgangselement der Kupplung B und dem Ausgangselement der Kupplung F kann auch vorgesehen sein, dass das Ausgangselement der Kupplung B als ein Zylinder mit großer axialer Erstreckung ausgeführt ist, der kupplungsausgangsseitig mit dem Lamellenpaket der Kupplung B verbunden ist, die Kupplung A und den Vorschaltradsatz VS und die Kupplung E in axialer Richtung radial vollständig übergreift und entweder direkt oder aber über die Stauscheibe der Servoeinrichtung der Kupplung F indirekt mit der Nabe des Ausgangselementes der Kupplung F verbunden ist.

Auch wenn das in Fig. 2 dargestellte erfindungsgemäße Getriebeschema eine koaxial zur Antriebswelle AN verlaufende Abtriebswelle AB aufweist, wird der Fachmann bei Bedarf hieraus ohne besonderen Aufwand eine Anordnung ableiten, bei der An- und Abtriebswelle nicht koaxial angeordnet sind. So kann die Abtriebswelle in einfacher Weise achsparallel oder winklig zum Ausgangselement des Hauptradsatzes (im Beispiel also achsparallel oder winklig zum Hohlrad HO_HS des Hauptradsatzes HS) abgegriffen werden, unter Beibehaltung der räumlichen Lage aller sonstiger Getriebekomponeten. Alternativ kann das als Bremse ausgebildete vierte Schaltelement D dann aber auch auf der dem Vorschaltradsatz VS abgewandten Seite des Hauptradsatzes HS im Bereich einer Getriebestirnwand angeordnet sein. Ebenso wird der Fachmann bei Bedarf die in Fig. 2 als Vollwelle ausgeführte Stegwelle 540 als Hohlwelle ausführen, um in dieser die Antriebswelle AN zentrisch hindurchzuführen, wenn der mit der Antriebswelle AN wirkverbundene Antriebsmotor des Getriebes an der hauptradsatznahen Stirnseite des Getriebes angeordnet sein soll.

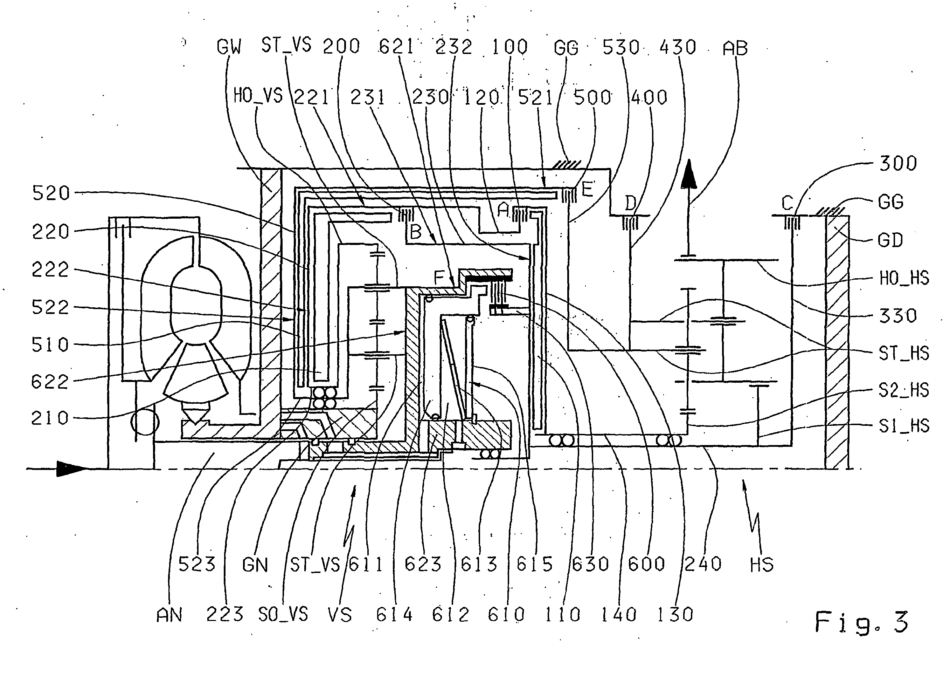

Anhand Fig. 3 wird im folgenden ein zweites Ausführungsbeispiel für ein Getriebeschema gemäß der vorliegenden Erfindung erläutert, hier am Beispiel eines Getriebes mit nicht koaxial zueinander verlaufender An- und Abtriebswelle. Vorschaltradsatz VS und Hauptradsatz HS sind koaxial nebeneinander angeordnet, allerdings nicht unmittelbar aneinander angrenzend. Räumlich gesehen axial zwischen Vorschaltradsatz VS und Hauptradsatz HS ist das als Kupplung ausgebildete sechste Schaltelement F angeordnet, axial unmittelbar angrenzend an den Vorschaltradsatz VS. Gegenüber dem Stand der Technik ist der Hauptradsatz HS relativ zum Vorschaltradsatz VS gesehen gespiegelt. Das erste Sonnenrad S1_HS des Hauptradsatzes HS, welches unverändert das erste Eingangselement dieses Hauptradsatzes HS bildet, ist räumlich gesehen also nunmehr auf der dem Vorschaltradsatz VS abgewandten Seite des Hauptradsatzes HS angeordnet, und das zweite Sonnenrad S2_HS des Hauptradsatzes HS, welches unverändert das zweite Eingangselement des Hauptradsatzes HS bildet, ist also nunmehr näher am Vorschaltradsatz VS angeordnet als das erste Sonnenrad S1_HS des Hauptradsatzes HS.

Hierbei ist das Eingangselement 620 dieser Kupplung F als Außenlamellenträger ausgebildet, geometrisch in Form eine in Richtung Hauptradsatz HS geöffneter Topf, mit einer Nabe 623, einem scheibenförmigen Abschnitt 622 und einem zylindrischen Abschnitt 621. Antriebswelle AN und Nabe 623 sind hier beispielhaft einstückig ausgeführt; selbstverständlich kann zwischen Nabe 623 und Antriebswelle AN aber auch eine andere geeignete verdrehfeste Verbindung vorgesehen sein. Der scheibenförmige Anschnitt 622 des Außenlamellenträgers (620) der Kupplung F erstreckt sich in radialer Richtung parallel zum Vorschaltradsatz VS, ausgehend von der Nabe 623 bis zu einem Durchmesser, der in etwa dem Durchmesser des Hohlrades HO_VS des Vorschaltradsatzes VS entspricht. Daran anschließend erstreckt sich der zylindrische Abschnitt 621 des Innenlamellenträgers (620) der Kupplung F axial in Richtung Vorschaltradsatz VS bis über das Lamellenpaket 600 der Kupplung F. Entsprechend weist der zylindrische Abschnitt 621 des Eingangselementes 620 der Kupplung F an seinem Innendurchmesser ein Mitnahmeprofil zur Aufnahme der vorzugsweise als außenverzahnte Stahllamellen ausgebildeten Außenlamellen dieses Lamellenpaketes 600 auf. Der zylindrische Abschnitt 621 des Eingangselementes 620 der Kupplung F ist auch mit dem gekoppelten Steg ST_VS des Vorschaltradsatzes VS verbunden, entsprechend kann dieser zylindrische Abschnitt 621 auch als ein hauptradsatznahes Stegblech des Vorschaltradsatzes VS ausgebildet sein.

Die Servoeinrichtung 610 der Kupplung F ist innerhalb eines Kupplungsraumes angeordnet, der durch das Eingangselement (den Außenlamellenträger) 620 des sechsten Schaltelementes F gebildet wird, und rotiert ständig mit Drehzahl der Antriebswelle AN. Dabei umfasst diese Servoeinrichtung 610 einen mit Druckmittel befüllbaren Druckraum 611, einen drucklos mit Schmiermittel befüllbaren Druckausgleichsraum 612 zum Ausgleich eines dynamischen Druckes des rotierenden Druckraums 611, einen auf der Nabe 623 axial verschiebbar gelagerten Kolben 614 zur Betätigung des Lamellenpaketes 600 der Kupplung F, eine hier beispielhaft als Tellerfeder ausgebildetes und an der Nabe 623 axial fixiertes Rückstellelementes 613 zur Rückstellung des Kolbens 614, sowie eine axial an der Nabe 623 fixierten Stauscheibe 615. Der Druckraum 611 wird durch eine Mantelfläche des Außenlamellenträgers (620) der Kupplung F und den Kolben 614 gebildet, der Druckausgleichsraum 612 durch den Kolben 614 und die Stauscheibe 615. Der Druckraum 611 ist also näher am Vorschaltradsatz VS angeordnet als der Druckausgleichsraum 612, bzw. der Druckausgleichsraum 612 ist näher am Hauptradsatz HS angeordnet als der Druckraum 611. Wird der Druckraum 611 zum Schließen der Kupplung F mit Druckmittel beaufschlagt, so bewegt sich der Kolben 614 gegen die Federkraft des Rückstellelementes 613 axial in Richtung Hauptradsatz HS und betätigt so das ihm zugeordnete Lamellenpaket 600 der Kupplung F. Die Druckmittelzufuhr zu dem Druckraum 611 der Servoeinrichtung 610 der Kupplung F und die Schmiermittelzufuhr zu dem Druckausgleichsraum 612 des dynamischen Druckausgleichs der Servoeinrichtung 610 der Kupplung F verläuft abschnittsweise innerhalb der Nabe 623 des Eingangselementes (Außenlamellenträgers) 620 der Kupplung F und abschnittsweise innerhalb der Antriebswelle AN.

Das Ausgangselement 630 der Kupplung F ist als Innenlamellenträger zur Aufnahme der vorzugsweise als innenverzahnte Belaglamellen ausgebildeten Innenlamellen des Lamellenpaketes 600 der Kupplung F ausgebildet. In Richtung Hauptradsatz HS gesehen, schließt sich dieser Innenlamellenträger (630) axial an die Servoeinrichtung 610 der Kupplung F an und ist zentrisch an eine erste Sonnenwelle 240 angekoppelt, welche die Verbindung zwischen dem Ausgangselement 630 der Kupplung F und dem ersten Sonnenrad S1_HS des Hauptradsatzes HS herstellt.

Das als Kupplung ausgebildete erste Schaltelement A ist räumlich gesehen in einem Bereich zumindest teilweise axial zwischen Kupplung F und Hauptradsatz HS angeordnet. Insbesondere eine - hier vereinfacht nur schematisch dargestellte - Servoeinrichtung 110 dieser Kupplung A ist räumlich gesehen in einem Bereich axial zwischen Kupplung F und Hauptradsatz angeordnet, axial angrenzend an das Ausgangselement 630 der Kupplung F. Dabei ist diese Servoeinrichtung 110 zumindest weitgehend innerhalb eines Zylinderraums angeordnet, der durch das hier als Außenlamellenträger ausgebildete Ausgangselement 130 der Kupplung A gebildet wird, an diesem Außenlamellenträger 130 der Kupplung A axial verschiebbar gelagert, und betätigt das ihr zugeordnete Lamellenpaket 100 beim Schließen der Kupplung A axial in Richtung Vorschaltradsatz VS. Dieser Außenlamellenträger 130 der Kupplung A ist hierbei als ein in Richtung Vorschaltradsatz VS geöffneter zylinderförmiger Topf ausgebildet, der in seinem Nabenbereich über eine zweite Sonnenwelle 140 mit dem zweiten Sonnnenrad S2_HS des Hauptradsatzes HS verdrehfest verbunden ist. Diese zweite Sonnenwelle 140 ist als Hohlwelle ausgeführt, welche die erste Sonnenwelle 240 radial umschließt und an dieser ersten Sonnenwelle 240 verdrehbar gelagert ist. Entsprechend rotiert die Servoeinrichtung 110 der Kupplung A ständig mit Drehzahl des zweiten Eingangselementes des Hauptradsatzes HS.

Das Lamellenpaket 100 der Kupplung A ist räumlich gesehen in einem Bereich radial oberhalb der Kupplung F angeordnet, in dem dargestellten Ausführungsbeispiel in axialer Richtung gesehen in etwa neben dem Lamellenpaket 600 der Kupplung F. Je nach Dimensionierung der Schaltelemente hinsichtlich ihrer Drehmomentübertragungsfähigkeit beanspruchen die entsprechenden Lamellenpakete eine mehr oder weniger große Baulänge im Getriebe. Insofern kann es auch vorgesehen sein, dass das Lamellenpaket 100 der Kupplung A räumlich gesehen zumindest teilweise in einem Bereich radial über dem Lamellenpaket 600 der Kupplung F angeordnet ist.

Das Eingangselement 120 der Kupplung A ist als Innenlamellenträger ausgebildet, geometrisch weitgehend in Form eines Zylinderrings, der sich ausgehend von dem Lamellenpaket 100 der Kupplung A axial in Richtung des Vorschaltradsatzes VS bis zu dem Lamellenpaket 200 des als Kupplung ausgebildeten zweiten Schaltelementes B erstreckt und dabei die Kupplung F in axialer Richtung teilweise übergreift. Räumlich gesehen ist dieses Lamellenpaket 200 der Kupplung B in einem Bereich in etwa radial über dem hauptradsatznahen Stegblech des Vorschaltradsatzes VS angeordnet. In diesem räumlichen Bereich innerhalb des Getriebegehäuses GG ist das Eingangselement 120 der Kupplung A mit dem als Außenlamellenträger ausgebildeten Eingangselement 220 der Kupplung B verdrehfest verbunden.

Axial in Richtung Hauptradsatz HS gesehen schließt sich das Lamellenpaket 500 des als Kupplung ausgebildeten fünften Schaltelementes E axial an das Lamellenpaket 100 der Kupplung A an. Das Lamellenpaket 500 der Kupplung E ist also in einem Bereich zwischen Vorschaltradsatz VS und Hauptradsatz HS angeordnet. Eine zur Vereinfachung nur schematisch dargestellte Servoeinrichtung 510 dieser Kupplung E zur Betätigung von deren Lamellenpaket 500 ist jedoch überwiegend auf der anderen Seite des Vorschaltradsatzes VS angeordnet, also auf der dem Hauptradsatz HS gegenüberliegenden Seite des Vorschaltradsatzes VS. Insbesondere ein (nicht näher bezeichneter) Druckraum dieser Servoeinrichtung 510 ist auf der dem Hauptradsatz HS abgewandten Seite des Vorschaltradsatzes VS angeordnet und rotiert stets mit Drehzahl der Antriebswelle AN. Entsprechend weist die Servoeinrichtung 510 einen auf das Lamellenpaket 500 wirkenden Kolben oder mindestens einen mit diesem Kolben wirkverbundenen Betätigungsfinger auf, welcher sowohl den Vorschaltradsatz VS als auch die Kupplungen B und A in axialer Richtung vollständig radial übergreift.

Das Eingangselement 520 der Kupplung E ist in dem dargestellten Ausführungsbeispiel als Außenlamellenträger ausgebildet, geometrisch in Form eines in Richtung Hauptradsatz geöffneten Topfes, mit einer Nabe 523, einem scheibenförmigen Abschnitt 522 und einem zylindrischen Abschnitt 521. Die Nabe 523 des Außenlamellenträgers (520) der Kupplung E ist auf der dem Hauptradsatz HS abgewandten Seite des Vorschaltradsatzes VS angeordnet, auf einer getriebegehäusefesten Nabe GN, über die das Sonnenrad SO_VS des Vorschaltradsatzes VS am Getriebegehäuse GG festgesetzt ist, verdrehbar gelagert, und über einen Durchgriff axial durch den Vorschaltradsatz VS hindurch mit der Antriebswelle AN verdrehfest verbunden. Ausgehend von der vorschaltradsatzfernen Seite der Nabe 523 schließt sich der genannte scheibenförmige Abschnitt 522 des Außenlamellenträgers 520 der Kupplung E an die Nabe 523 an und erstreckt sich radial nach außen bis knapp unterhalb des Innendurchmessers des Getriebegehäuses GG. Am Außendurchmesser des scheibenförmigen Abschnitts 522 schließt sich der genannte zylindrische Abschnitt 521 des Außenlamellenträgers (520) der Kupplung E an den scheibenförmigen Abschnitt 522 an und erstreckt sich axial weit in Richtung Hauptradsatz HS bis zu dem Lamellenpaket 500 der Kupplung E und übergreift dabei sowohl den Vorschaltradsatz VS als auch die Kupplungen B, F und A in axialer Richtung radial vollständig. Entsprechend ist am Innendurchmesser des zylindrischen Abschnitts 521 ein Mitnahmeprofil vorgesehen zur Aufnahme von vorzugsweise als außenverzahnte Stahllamellen ausgebildeten Außenlamellen des Lamellenpaketes 500 der Kupplung E.

Die Servoeinrichtung 510 der Kupplung E ist vollständig in dem Zylinderraum angeordnet, der durch den beschriebenen Außenlamellenträger (520) der Kupplung E gebildet wird. Eine Druckmittelzufuhr zu dem Druckraum der Servoeinrichtung 510 der Kupplung E und - soweit ein dynamischer Druckausgleich für den rotierenden Druckraum der Servoeinrichtung 510 vorgesehen ist - eine Schmiermittelzufuhr zu einem drucklos befüllbaren Druckausgleichsraum dieses dynamischen Druckausgleichs der Servoeinrichtung 510 der Kupplung E verlaufen abschnittsweise innerhalb der Nabe 523 des Eingangselementes 520 der Kupplung E und abschnittsweise innerhalb der genannten getriebegehäusefesten Nabe GN.

Das Ausgangselement 530 der Kupplung E ist in dem dargestellten Ausführungsbeispiel als Innenlamellenträger ausgebildet mit einem Mitnahmeprofil an seinem Außendurchmesser zur Aufnahme von vorzugsweise als innenverzahnte Belaglamellen ausgebildeten Innenlamellen des Lamellenpaketes 500 der Kupplung E. Räumlich gesehen ist dieser Innenlamellenträger 530 axial zwischen dem Ausgangselement 130 der Kupplung A und dem Hauptradsatz HS angeordnet und auf der dem Vorschaltradsatz VS zugewandten Seite des Hauptradsatzes HS mit dem gekoppelten Steg ST_HS des Hauptradsatzes HS verdrehfest verbunden. Bekanntlich bildet dieser Steg ST_HS das dritte Eingangselement des Hauptradsatzes HS.

Das als Kupplung ausgebildete zweite Schaltelement B ist vollständig innerhalb eines Zylinderraums angeordnet, der durch das hier als Außenlamellenträger ausgebildete Eingangselement 520 der Kupplung E gebildet wird. Ein mit dem Ausgangselement - also hier dem Hohlrad HO_VS - des Vorschaltradsatzes VS verbundenes Eingangselement 220 dieser Kupplung B ist als Außenlamellenträger ausgebildet, geometrisch in Form eines in Richtung Hauptradsatz HS geöffneten Topfes, mit einer Nabe 223, einem scheibenförmigen Abschnitt 222 und einem zylinderförmigen Abschnitt 221. Die Nabe 223 ist räumlich gesehen auf der dem Hauptradsatz HS abgewandten Seite des Vorschaltradsatzes VS angeordnet, an seiner vorschaltradsatznahen Seite über ein scheibenförmiges Element mit dem Hohlrad HO_VS des Vorschaltradsatzes VS verbunden und auf der Nabe 523 des Eingangselementes 520 der Kupplung E verdrehbar gelagert. An der vorschaltradsatzfernen Seite der Nabe 223 schließt sich der scheibenförmigen Abschnitt 222 des Außenlamellenträgers 220 der Kupplung B an die Nabe 223 an und erstreckt sich angrenzend an die Servoeinrichtung 510 der Kupplung E und weitgehend parallel zum scheibenförmigen Abschnitt 522 des Eingangselementes 520 der Kupplung E radial nach außen bis auf einen Durchmesser, der größer ist als der Außendurchmesser des Vorschaltradsatzes VS, aber kleiner ist als der Innendurchmesser der auf das Lamellenpaket 500 der Kupplung E wirkenden Betätigungsfinger der Servoeinrichtung 510 der Kupplung E. Am Außendurchmesser des scheibenförmigen Abschnitt 222 schließt sich der zylinderförmige Abschnitt 221 des Außenlamellenträgers 220 der Kupplung B an den scheibenförmigen Abschnitt 222 an und erstreckt sich axial in Richtung Hauptradsatz HS bis zu dem Lamellenpaket 200 der Kupplung B. Dieses Lamellenpaket 200 ist räumlich gesehen in einem Bereich zumindest teilweise radial über dem Vorschaltradsatz VS und zumindest teilweise radial über der an den Vorschaltradsatz VS unmittelbar angrenzenden Kupplung F angeordnet. Am Innendurchmesser weist der zylinderförmige Abschnitt 221 des Außenlamellenträgers 220 der Kupplung B ein Mitnahmeprofil auf zur Aufnahme der vorzugsweise als außenverzahnte Stahllamellen ausgebildeten Außenlamellen des Lamellenpaketes 200 der Kupplung B auf.

Die Servoeinrichtung 210 der Kupplung B ist zur Vereinfachung nur schematisch dargestellt, vollständig innerhalb einer Zylinderraums angeordnet, der durch das Eingangselement (Außenlamellenträger) 220 der Kupplung B gebildet wird, und an diesem Außenlamellenträger 220 auch verschiebbar gelagert. Da diese Servoeinrichtung 210 ständig mit Drehzahl des Ausgangselementes des Vorschaltradsatzes VS rotiert, kann sie zweckmäßigerweise auch einen dynamischen Druckausgleich zur Kompensation eines rotatorischen Drucks ihres Druckraums aufweisen. Eine Druckmittelzufuhr zu dem Druckraum der Servoeinrichtung 210 der Kupplung B und - soweit ein dynamischer Druckausgleich vorhanden - eine Schmiermittelzufuhr zu einem drucklos befüllbaren Druckausgleichsraum der Servoeinrichtung 210 der Kupplung B verläuft abschnittsweise innerhalb der Nabe 223 des Eingangselementes 220 der Kupplung B und abschnittsweise innerhalb der Nabe 523 des Eingangselementes 520 der Kupplung E und abschnittsweise innerhalb der getriebegehäusefesten Nabe GN, an der die Nabe 523 wie beschrieben verdrehbar gelagert ist. Beim Schließen der Kupplung B betätigt die Servoeinrichtung 210 das ihr zugeordnete Lamellenpaket 200 der Kupplung B axial in Richtung Hauptradsatz HS.

Ein mit dem ersten Eingangselement des Hauptradsatzes HS verbundenes Ausgangselement 230 der Kupplung B ist entsprechend als Innenlamellenträger ausgebildet, geometrisch in Form eines in Richtung Vorschaltradsatz VS geöffneten Topfes, mit einem zylinderförmigen Abschnitt 231 und einem scheibenförmigen Abschnitt 232. Dieser zylinderförmige Abschnitt 231 weist an seinem Außendurchmesser ein Mitnahmeprofil zur Aufnahme von vorzugsweise als innenverzahnte Belaglamellen ausgebildeten Innenlamellen des Lamellenpaketes 200 der Kupplung B auf und erstreckt sich ausgehend von diesem Lamellenpaket 200 axial in Richtung Hauptradsatz HS und übergreift dabei die Kupplung F in axialer Richtung radial vollständig. Der genannte scheibenförmige Abschnitt 232 bildet den sich an den genannten zylinderförmigen Abschnitt 231 anschließenden Topfboden des Innenlamellenträgers 230 der Kupplung B und ist räumlich gesehen axial direkt neben der Kupplung F auf deren hauptradsatznahen Seite angeordnet und mit dem Ausgangselement (Innenlamellenträger) 630 der Kupplung F und der zentrisch verlaufenden ersten Sonnenwelle 240 verdrehfest verbunden.

Wie bereits angedeutet, ist das als Innenlamellenträger ausgebildete Eingangselement 120 der Kupplung A über das Eingangselement 220 der Kupplung B mit dem Ausgangselement - also hier dem Hohlrad HO_VS - des Vorschaltradsatzes VS verbunden. Dabei erstreckt sich dieser zylinderringförmige Innenlamellenträger 120 der Kupplung A räumlich gesehen in axialer Richtung radial zwischen dem zylindrischen Abschnitt 231 des Ausgangselementes 230 der Kupplung B und dem zylindrischen Abschnitt 521 des Eingangselementes 520 der Kupplung E. Dieser zylindrische Abschnitt 231 des Ausgangselementes 230 der Kupplung B wiederum erstreckt sich räumlich gesehen in axialer Richtung zumindest überwiegend radial zwischen dem zylindrischen Abschnitt 621 des Eingangselementes 620 der Kupplung F bzw. dem Außendurchmesser der Kupplung F und dem genannten Eingangselement 120 der Kupplung A.

Entsprechend der konstruktiven Ausführung und räumlichen Anordnung des Ausgangselementes 530 der Kupplung E, ist das hier beispielhaft als Lamellenbremse ausgebildete vierte Schaltelement D, über das bekanntlich der gekoppelte Steg ST_HS als drittes Eingangselement des Hauptradsatzes HS am Getriebegehäuse GG festsetzbar ist, unmittelbar benachbart zum Hauptradsatz HS angeordnet. Das Lamellenpaket 400 dieser Bremse D schließt sich dabei in Richtung Hauptradsatz HS gesehen axial an das Lamellenpaket 500 der Kupplung E an, die Lamellenpakete 500 und 400 sind also benachbart zueinander angeordnet. Eine Servoeinrichtung zum Betätigen des Lamellenpaketes 400 ist zur Vereinfachung nicht explizit dargestellt und kann beispielsweise in dem Getriebegehäuse GG oder einem getriebegehäusefesten Außenlamellenträger des Bremse D integriert sein. In dem dargestellten Ausführungsbeispiel ist das als Innenlamellenträger ausgebildete Ausgangselement 430 der Bremse D direkt an den Steg ST_HS des Hauptradsatzes HS angekoppelt, wobei das entsprechende vorschaltradsatznahe Stegblech dieses Stegs ST_HS und der Innenlamellenträger 430 der Bremse D auch einstückig ausgebildet sein können. In einer anderen Ausgestaltung könnte das Ausgangselement 430 der Bremse D auch über das Ausgangselement 530 der Kupplung E oder das Ausgangselement 530 der Kupplung E über das Ausgangselement 430 der Bremse D mit dem Steg ST_HS verbunden sein.

Wie bereits erwähnt, verlaufen Antriebswelle AN und Abtriebswelle AB zueinander nicht koaxial. Insofern kann das als Bremse ausgebildete dritte Schaltelement C in einfacher Weise auf der dem Vorschattradsatz VS abgewandten Seite des Hauptradsatzes HS angeordnet werden, axial angrenzend an einen getriebgehäusefesten Gehäusedeckel GD, der gleichzeitig eine - im dargestellten Ausführungsbeispiel dem Getriebeantrieb gegenüberliegende - Stirnseite des Getriebe bildet. Eine zur Vereinfachung nicht dargestellte Servoeinrichtung zum Betätigen des Lamellenpaketes 300 der Bremse C kann beispielsweise konstruktiv einfach in diesem Gehäusedeckel GD integriert sein. Das als Innenlamellenträger ausgebildete Ausgangselement 330 der Bremse C erstreckt sich in radialer Richtung weitgehend parallel zum Hauptradsatz HS und ist an seinem Innendurchmesser entweder direkt mit dem ersten Sonnenrad S1_HS des Hauptradsatzes HS verdrehfest verbunden oder aber mit der ersten Sonnenwelle 240, wenn diese das erste Sonnenrad S1_HS des Hauptradsatzes HS in axialer Richtung durchdringt.

Für den Fachmann ist leicht ersichtlich, dass die in Fig. 3 dargestellte räumliche Lage der Antriebsseite des Getriebes auf der dem Hauptradsatz HS gegenüberliegenden Seite des Vorschaltradsatzes VS als beispielhaft zu verstehen ist. Bei Bedarf wird der Fachmann die erste Sonnenwelle 240 als Hohlwelle ausführen und den Antrieb des Getriebes ohne großen konstruktiven Aufwand auch auf der dem Vorschaltradsatz VS gegenüberliegenden Seite des Hauptradsatzes HS anordnen.

Auch ist dem Fachmann klar, dass sich die in Fig. 2 und Fig. 3 dargestellten erfindungsgemäßen Bauteilanordnungen auch auf andere konstruktive Ausgestaltungen des Hauptradsatzes HS problemlos übertragen lassen. Voraussetzung dabei ist nur die Beibehaltung der kinematischen Kopplung des Ausgangselementes des Hauptradsatzes HS an die Abtriebswelle AB und die Beibehaltung der kinematischen Kopplung der mindestens drei Eingangselemente des Hauptradsatzes HS an die sechs Schaltelemente A bis F (und damit die Beibehaltung der kinematischen Kopplung der mindestens drei Eingangselemente des Hauptradsatzes HS über diese sechs Schaltelemente A bis F an die Antriebswelle AN und den Vorschaltradsatz VS), sodaß ein Drehzahlplan des Automatgetriebes zumindest im wesentlichen unverändert bleibt. Auch sollte der "neue" Hauptradsatz in Verbindung mit dem Vorschaitradsatz VS und den sechs Schaltelementen A bis F eine sinnvolle und verwertbare Gangabstufung ermöglichen. Insofern ist die in Fig. 2 und Fig. 3 dargestellte konstruktive Ausgestaltung des Hauptradsatzes HS als Zweisteg-VierwellenPlanetengetriebe in Bauform eines Ravigneaux-Planetenradsatzes mit zwei Sonnenrädern und einem Hohlrad nur als beispielhaft anzusehen.

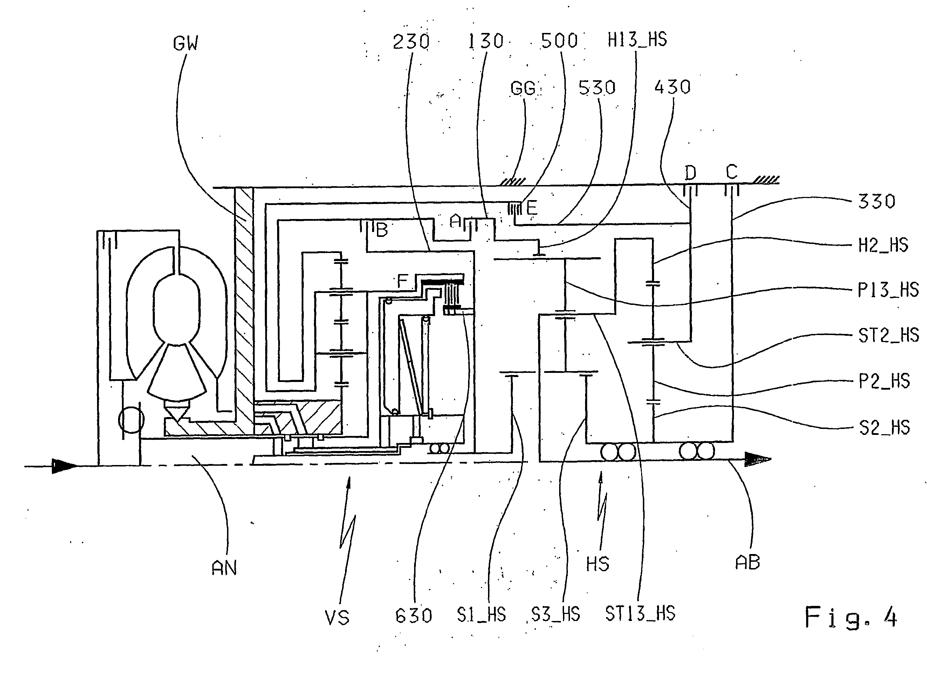

So wird im folgenden anhand Fig. 4 ein drittes Ausführungsbeispiel für ein Getriebeschema gemäß der vorliegenden Erfindung erläutert, basierend auf dem zuvor in Fig. 3 beschriebenen Getriebeschema, jedoch mit einem konstruktiv anderen Hauptradsatz HS. Im Unterschied zu Fig. 3 wird der "neue" Hauptradsatz HS nunmehr aus zwei miteinander gekoppelten Einzel-Planetenradsätzen gebildet, wobei der erste dieser beiden Einzel-Planetenradsätze zudem noch ein "geteiltes Sonnenrad" aufweist. Von seiner Bauform her ist der "neue" Hauptradsatz HS ein "auf eine Zweisteg-Einheit reduziertes Dreisteg-Fünfwellen-Planetengetriebe" mit vier nicht miteinander verbundenen Eingangselementen und einem Ausgangselement.

Der Hauptradsatzes HS umfasst demnach ein gekoppeltes erstes Hohlrad H13_HS, ein zweites Hohlrad H2_HS, drei Sonnenräder S1_HS, S2_HS und S3_HS, einen gekoppelten ersten Steg ST13_HS mit daran verdrehbar gelagerten langen Planetenrädern P13_HS, sowie einen zweiten Steg ST2_HS mit daran verdrehbar gelagerten kurzen Planetenrädern P2_HS. Das gekoppelte Hohlrad H13_HS, der gekoppelte Steg ST13_HS mit seinen langen Planetenrädern P13_HS, das erste Sonnenrad S1_HS und das dritte Sonnenrad S3_HS sind dem ersten der beiden Einzel-Planetenradsätze des Hauptradsatzes HS zugeordnet. Das erste und dritte Sonnenrad S1_HS, S3_HS des Hauptradsatzes HS bilden somit das "geteilte Sonnenrad" dieses ersten Einzel-Planetenradsatzes des Hauptradsatzes HS. Dabei kämmen die langen Planetenräder P13_HS mit dem ersten Hohlrad H13_HS, dem ersten Sonnenrad S1_HS und dem dritten Sonnenrad S3_HS. Das zweite Hohlrad H2_HS, das zweite Sonnenrad S2_HS sowie der zweite Steg ST2_HS mit seinen kurzen Planetenrädern P2_HS sind dem zweiten der beiden Einzel-Planetenradsätze des Hauptradsatzes HS zugeordnet, wobei die kurzen Planetenräder P2_HS mit dem zweiten Hohlrad H2_HS und dem zweiten Sonnenrad S2_HS kämmen. Im dargestellten Ausführungsbeispiel sind die langen Planetenräder P13_HS nicht als Stufenplaneten ausgeführt, die beiden Sonnenräder S1_HS und S3_HS des Hauptradsatzes HS weisen hier identische Zähnezahlen auf. Räumlich gesehen ist das dritte Sonnenrad S3_HS des Hauptradsatzes HS axial zwischen dem ersten und zweiten Sonnenrad S1_HS, S2_HS des Hauptradsatzes HS angeordnet, wobei hier das erste Sonnenrad S1_HS des Hauptradsatzes HS näher am Vorschaltradsatz VS angeordnet als das zweite Sonnenrad S2_HS des Hauptradsatzes HS.

Das erste Sonnenrad S1_HS bildet das erste Eingangselement des Hauptradsatzes HS und ist mit dem Ausgangselement 230 des als Kupplung ausgebildeten zweiten Schaltelementes B und mit dem Ausgangselement 630 des als Kupplung ausgebildeten sechsten Schaltelementes F verbunden. Das erste Hohlrad H13_HS des Hauptradsatzes HS bildet das zweite Eingangselement des Hauptradsatzes HS und ist mit dem Ausgangselement 130 des ersten Schaltelementes A verbunden. Der zweite Steg ST2_HS des Hauptradsatzes HS bildet das dritte Eingangselement des Hauptradsatzes HS und ist mit dem Ausgangselement 530 des als Kupplung ausgebildeten fünften Schaltelementes E und dem Ausgangselement 430 des als Bremse ausgebildeten vierten Schaltelementes D verbunden. Das vierte Eingangselement des Hauptradsatzes HS wird durch die fest miteinander verbundenen Sonnenräder S2_HS und S3_HS gebildet, welche mit dem Ausgangselement 330 des als Bremse ausgebildeten dritten Schaltelementes C verbunden sind. Das zweite Hohlrad H2_HS und der gekoppelte erste Steg ST13 sind fest miteinander verbunden und bilden das mit der Abtriebswelle AB des Getriebes verbundene Ausgangselement des Hauptradsatzes HS. In einem Drehzahlplan des Automatgetriebes gemäß Fig. 4 fallen die Linien des ersten und vierten Eingangselementes des Hauptradsatzes HS entsprechend der beschriebenen bauteilseitigen und kinematischen Koppelung der drei Sonnenräder S1_HS, S2_HS und S3_HS des Hauptradsatzes HS zusammen.

Zur Anbindung des Ausgangselementes des Hauptradsatzes HS an die Abtriebswelle AB weist der erste Einzel-Planetenradsatz des Hauptradsatzes HS ein dem Vorschaltradsatz VS zugewandtes und mit dem gekoppelten ersten Steg ST13_HS verbundenes Stegblech auf, welches in radialer Richtung axial zwischen dem ersten und dritten Sonnenrad S1_HS, S3_HS des Hauptradsatzes HS nach innen hindurchgreift und zentrisch mit der Abtriebswelle AB verbunden ist. Die Abtriebswelle AB durchdringt das zweite und dritte Sonnenrad S2_HS, S3_HS des Hauptradsatzes HS in axialer Richtung. Selbstverständlich kann in einer anderen Ausgestaltung der Anbindung der Abtriebswelle AB an das Ausgangselement des Hauptradsatzes HS auch vorgesehen sein, dass das genannte Stegblech des gekoppelten Stegs ST13_HS in seinem Nabenbereich eine zylindrische Nabe mit großer axialer Erstreckung aufweist, die dann das zweite und dritte Sonnenrad S2_HS, S3_HS des Hauptradsatzes HS zentrisch durchgreift und erst auf der dem Vorschaltradsatz VS abgewandten Seite des Hauptradsatzes HS mit der Abtriebswelle AB verbunden ist.

Wie in Fig. 4 weiterhin ersichtlich, sind Kupplung E und Bremse D im Unterschied zu Fig. 2 nunmehr auf der dem Vorschaltradsatz VS abgewandten Seite des Hauptradsatzes HS mit dem zweiten Steg ST2_HS des Hautradsatzes HS verbunden. Das Lamellenpaket 500 der Kupplung E ist beispielhaft in einem Bereich radial über dem ersten Einzel-Planetenradsatz des Hauptradsatzes HS angeordnet. Entsprechend übergreift das Ausgangselement 530 der Kupplung E den Hauptradsatz HS in axialer Richtung zumindest teilweise. In fertigungstechnisch günstiger Weise ist die Bremse D nunmehr unmittelbar neben der Bremse C auf der dem Vorschaltradsatz VS abgewandten Seite des Hauptradsatzes HS angeordnet, wobei das in dem dargestellten Beispiel axial neben dem zweiten Einzel-Planetenradsatz des Hauptradsatzes HS angeordnete Reibelement der Bremse D räumlich gesehen auch in einem Bereich radial über dem Hauptradsatz HS angeordnet sein kann.

Da die räumliche Anordnung und konstruktive Ausgestaltung der sonstigen Getriebekomponenten in Fig. 4 unverändert aus Fig. 2 übernommen sind, kann auf deren nochmalige detaillierte Beschreibung an dieser Stelle verzichtet werden. Es sei aber noch darauf hingewiesen, dass die in Fig. 1B dargestellte Schaltlogik zur Darstellung der Vorwärts- und Rückwärtsgänge auch für das in Fig. 4 dargestellte dritte Ausführungsbeispiel für ein Getriebe gemäß der vorliegenden Erfindung zutrifft.

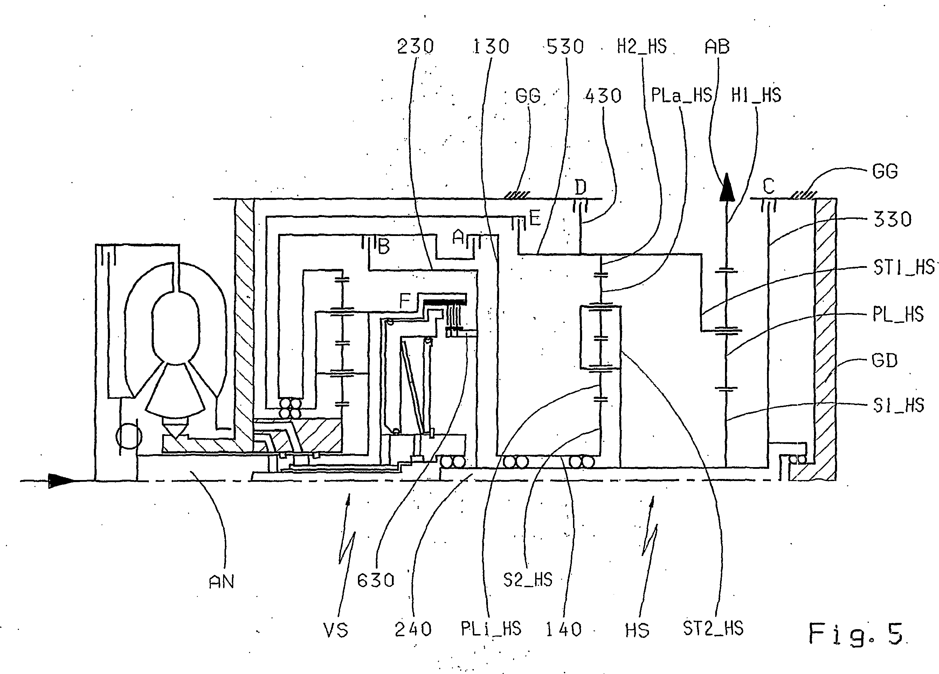

Anhand Fig. 5 wird im folgenden ein viertes Ausführungsbeispiel für ein Getriebeschema gemäß der vorliegenden Erfindung erläutert, wieder basierend auf dem zuvor in Fig. 3 beschriebenen Getriebeschema, jedoch mit einem konstruktiv anderen Hauptradsatz HS. Vorschaltradsatz VS und Hauptradsatz HS sind wiederum koaxial nebeneinander angeordnet, allerdings nicht unmittelbar aneinander angrenzend. An- und Abtriebswelle AN, AB des Getriebes verlaufen wie in Fig. 3 nicht koaxial zueinander. Im Unterschied zu Fig. 3 wird der "neue" Hauptradsatz HS nunmehr aus zwei miteinander gekoppelten Einzel-Planetenradsätzen gebildet, wobei der erste dieser beiden Einzel-Planetenradsätze als "Minus-Planetenradsatz" in Einfachplanetenbauweise ausgeführt ist und der zweite dieser beiden Einzel-Planetenradsätze als "Plus-Planetenradsatz" in Doppelplanetenbauweise, wobei der zweite Einzel-Planetenradsatz des Hauptradsatzes HS näher am Vorschaltradsatz VS angeordnet ist als der erste Einzel-Planetenradsatz des Hauptradsatzes HS. Von seiner Bauform her ist der "neue" Hauptradsatz HS also ein Zweisteg-Vierwellen-Planetengetriebe.

Der erste Einzel-Planetenradsatz des Hauptradsatzes HS umfasst ein Sonnenrad S1_HS, ein Hohlrad H1_HS, sowie einen Steg ST1_HS, an dem Planetenräder PL_HS verdrehbar gelagert sind, welche mit dem genannten Sonnenrad S1_H und dem genannten Hohlrad H1_HS kämmen. Der zweite Einzel-Planetenradsatz des Hauptradsatzes HS umfasst ein Sonnenrad S2_HS, ein Hohlrad H2_HS, sowie einen gekoppelten Steg ST2_HS, an dem innere und äußere Planetenräder PLi_HS, PLa_HS gelagert sind, wobei diese inneren Planetenräder PLi_HS mit diesen äußeren Planetenrädern PLa_HS und dem genannten Sonnenrad S2_HS kämmen, und wobei die äußeren Planetenräder PLa_HS mit den inneren Planetenrädern PLi_HS und dem genannten Hohlrad H2_HS kämmen.

Das (erste) Sonnenrad S1_HS und der gekoppelte (zweite) Steg ST2_HS des Hauptradsatzes HS sind ständig miteinander verbunden und bilden das erste Eingangselement des Hauptradsatzes HS, welches einerseits (auf der dem Vorschaltradsatz VS abgewandten Seite des Hauptradsatzes HS) mit dem Ausgangselement 330 der Bremse C verbunden ist und andererseits über die erste Sonnenwelle 240 (auf der dem Vorschaltradsatz VS zugewandten Seite des Hauptradsatzes HS) mit dem Ausgangselement 630 der Kupplung F und dem Ausgangselement 230 der Kupplung B verbunden ist. Das (zweite) Sonnenrad S2_HS des Hauptradsatzes HS ist dem Vorschaltradsatz VS zugewandt und bildet das zweite Eingangselement des Hauptradsatzes HS, welches über die zweite Sonnenwelle 140 mit dem Ausgangselement 130 der Kupplung A verbunden ist. Der (erste) Steg ST1_HS und das (zweite) Hohlrad H2_HS des Hauptradsatzes HS sind ständig miteinander verbunden und bilden das dritte Eingangselement des Hauptradsatzes HS, welches mit dem Ausgangselement 530 der Kupplung E und dem Ausgangselement 430 der Bremse D verbunden ist. In dem dargestellten Ausführungsbeispiel sind Kupplung E und Bremse D auf der dem Vorschaltradsatz VS zugewandten Seite des Hauptradsatzes HS angeordnet; in einer anderen Ausgestaltung kann insbesondere die Bremse D aber auch räumlich gesehen zumindest teilweise in einem Bereich radial über dem zweiten Hohlrad H2_HS des Hauptradsatzes HS angeordnet sein. Das (erste) Hohlrad H1_HS des Hauptradsatzes HS bildet das Ausgangselement des Hauptradsatzes HS und ist ständig mit der Abtriebswelle AB des Getriebes verbunden.

Auch durch einen derart aufgebauten Hauptradsatz HS sind in Verbindung mit dem als Plus-Planetenradsatz in Doppelplanetenbauweise ausgeführten Vorschaltradsatz VS und der gegenüber Fig. 3 unveränderten kinematischen Kopplung der einzelnen Eingangs- und Ausgangselemente von Haupt-und Vorschaltradsatz VS, HS an die sechs Schaltelemente A bis F und die Antriebs- und Abtriebswelle AN, AB insgesamt acht Vorwärtsgänge gruppenschaltungsfrei schaltbar, mit gleicher Schaltlogik wie in Fig. 1B dargestellt.

Da die räumliche Anordnung und konstruktive Ausgestaltung der sonstigen Getriebekomponenten in Fig. 5 unverändert aus Fig. 3 übernommen sind, kann auf deren nochmalige detaillierte Beschreibung an dieser Stelle verzichtet werden.

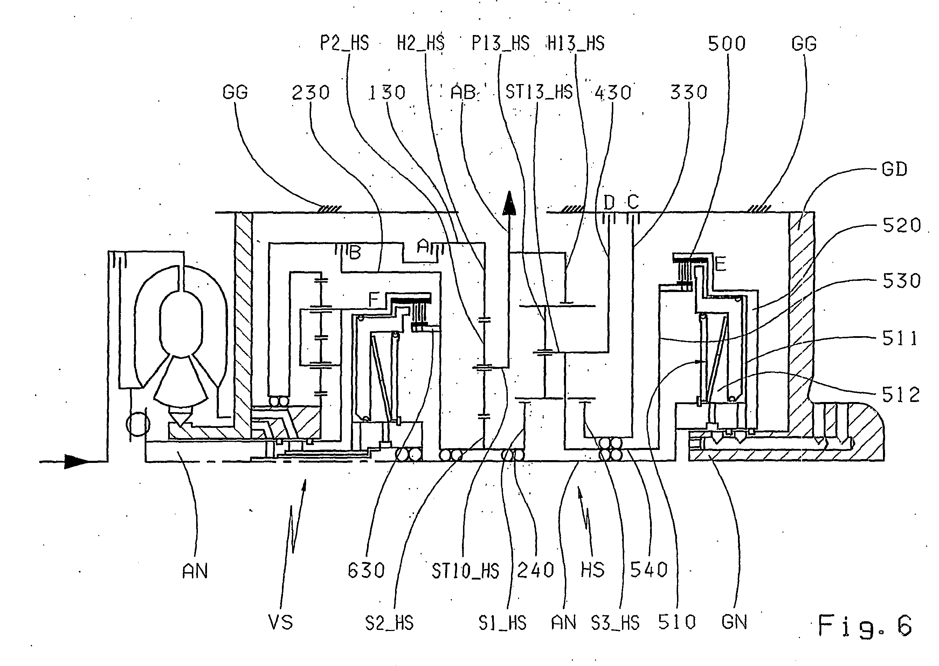

Anhand Fig. 6 wird im folgenden ein fünftes Ausführungsbeispiel für ein Getriebeschema gemäß der vorliegenden Erfindung erläutert, basierend auf dem zuvor in Fig. 4 beschriebenen Getriebeschema, jedoch mit einer alternativen Anordnung des fünften Schaltelementes E, speziell für ein Getriebe mit nicht koaxialer Anordnung von Antriebs- und Abtriebswelle AN, AB. Der als einfacher Plus-Planetenradsatz ausgeführte Vorschaltradsatz VS und der als ein "auf eine Zweisteg-Einheit reduziertes Dreisteg-Fünfwellen-Planetengetriebe" ausgeführte Hauptradsatz HS sind koaxial nebeneinander und koaxial zur Antriebswelle AN angeordnet. Der Hauptradsatz HS weist vier nicht miteinander verbundene Eingangselemente und ein Ausgangselement auf und wird aus zwei miteinander gekoppelten Einzel-Planetenradsätzen gebildet, wobei einer dieser beiden Einzel-Planetenradsätze ein "geteiltes Sonnenrad aufweist". Entsprechend umfasst der Hauptradsatz HS drei Sonnenräder S1_HS, S2_HS, S3_HS, ein gekoppeltes erstes Hohlrad H13 HS, ein zweites Hohlrad H2_HS, einen gekoppelten ersten Steg ST13_HS mit daran verdrehbar gelagerten langen Planetenrädern P13_HS, sowie einen zweiten Steg ST2_HS mit daran verdrehbar gelagerten kurzen Planetenrädern P2_HS.

Entsprechend der Nomenklatur der Anbindung der Eingangselemente des Hauptradsatzes HS an die verschiedenen Schaltelemente A bis F ist der zweite der beiden Einzel-Planetenradsätze des Hauptradsatzes HS vorschaltradsatznah angeordnet und umfasst das zweite Sonnenrad S2_HS, das zweite Hohlrad H2_HS und den zweiten Steg ST2_HS mit den daran verdrehbar gelagerten kurzen Planetenrädern P2_HS. Entsprechend umfasst der vorschaltradsatzferne erste Einzel-Planetenradsatz des Hauptradsatzes HS das erste und dritte Sonnenrad S1_HS, S3_HS, das gekoppelte Hohlrad H13_HS und den gekoppelten Steg ST13_HS mit den daran verdrehbar gelagerten langen Planetenrädern P13_HS. Die kurzen Planetenräder P2_HS kämmen dabei mit dem zweiten Hohlrad H2_HS und dem zweiten Sonnenrad S2_HS, die langen Planetenräder P13_HS mit den gekoppelten Hohlrad H13_HS und dem ersten und dritten Sonnenrad S1_HS, S3_HS. Im dargestellten Ausführungsbeispiel sind die langen Planetenräder P13_HS nicht als Stufenplaneten ausgeführt, die beiden Sonnenräder S1_HS und S3_HS des Hauptradsatzes HS weisen hier identische Zähnezahlen auf. Räumlich gesehen ist das erste Sonnenrad S1_HS des Hauptradsatzes HS axial zwischen dem zweiten und dritten Sonnenrad S2_HS, S3_HS des Hauptradsatzes HS angeordnet, wobei dieses zweite Sonnenrad S2_HS näher am Vorschaltradsatz VS angeordnet ist als dieses dritte Sonnenrad S3_HS.

Das erste und zweite Sonnenrad S1_HS, S2_HS sind fest miteinander verbunden und bilden das erste Eingangselement des Hauptradsatzes HS, welches mit den Ausgangselementen 230, 630 der Kupplungen B und F auf der vorschaltradsatznahen Seite des Hauptradsatzes HS verdrehfest verbunden ist. Das zweite Hohlrad H2_HS bildet das zweite Eingangselement des Hauptradsatzes HS und ist mit dem Ausgangselement 130 der Kupplung A verdrehfest verbunden. Der gekoppelte Steg ST13_HS bildet das dritte Eingangselement des Hauptradsatzes HS und ist - entsprechend der räumlichen Lage von Bremse D und Kupplung E - auf der dem Vorschaltradsatz VS abgewandten Seite des Hauptradsatzes HS verdrehfest mit dem Ausgangselement 430 der Bremse D und dem Ausgangselement 530 der Kupplung E verbunden. Das dritte Sonnenrad S3_HS bildet das vierte Eingangselement des Hauptradsatzes HS und ist - entsprechend der räumlichen Lage der Bremse C - auf der dem Vorschaltradsatz VS abgewandten Seite des Hauptradsatzes HS verdrehfest mit dem Ausgangselement 330 der Bremse C verbunden. Das gekoppelte Hohlrad H13_HS und der zweite Steg ST2_HS sind fest miteinander verbunden und bilden das mit der Abtriebswelle AB des Getriebes verbundene Ausgangselement des Hauptradsatzes HS. In einem Drehzahlplan des Automatgetriebes gemäß Fig. 6 fallen die Linien des ersten und vierten Eingangselementes des Hauptradsatzes HS entsprechend der beschriebenen bauteilseitigen und kinematischen Koppelung dessen drei Sonnenräder S1_HS, S2_HS, S3_HS zusammen.

Zur kinematischen Anbindung des dritten Eingangselementes des Hauptradsatzes HS an das Ausgangselement 530 der Kupplung E ist das Sonnenrad des zweiten Einzel-Planetenradsatzes des Hauptradsatzes HS in die beiden Sonnenräder S1_HS und S3_HS geteilt. Der gekoppelte Steg ST13_HS des Hauptradsatzes HS weist ein mit dem Ausgangselement 530 der Kupplung E verbundenes Stegblech auf, welches in radialer Richtung axial zwischen dem ersten und dritten Sonnenrad S1_HS, S3_HS des Hauptradsatzes HS nach innen hindurchgreift. Dabei durchdringt eine mit diesem Stegblech verbundene Nabe des Ausgangselementes 530 der Kupplung E oder eine mit diesem Stegblech und dem Ausgangselement 530 verdrehfest verbundene Stegwelle 540 das (vorschaltradsatzfeme) dritte Sonnenrad S3_HS des Hauptradsatzes HS in axialer Richtung zentrisch.

Die Kupplung E ist nunmehr vollständig auf der dem Vorschaltradsatz VS abgewandten Seite des Hauptradsatzes HS angeordnet. Auf ihrer hauptradsatznahen Seite grenzt die Kupplung E dabei an die Bremse C und deren Ausgangselement (Innenlamellenträger) 330 an. Auf ihrer hauptradsatzfernen Seite grenzt die Kupplung E an eine Außenstirnwand des Getriebegehäuses GG an, die hier beispielhaft durch einen getriebegehäusefesten Gehäusedeckel GD gebildet wird. Das mit der Antriebswelle AN verbundene Eingangselement 520 der Kupplung E ist hier beispielhaft als Außenlamellenträger ausgebildet, geometrisch in Form eines in Richtung Hauptradsatz HS hin geöffneten Topfes, der an einer sich ausgehend von der Außenstirnwand axial in den Getriebeinnenraum hin erstreckenden getriebegehäusefesten Nabe GN verdrehbar gelagert ist. Die Servoeinrichtung 510 der Kupplung E zum Betätigen des ihr zugeordneten Lamellenpaketes 500 ist vollständig innerhalb eines Zylinderraums angeordnet, der durch diesen Außenlamellenträger 520 gebildet wird. Entsprechend einfach können Druckmittelzufuhr zu dem Druckraum 511 der Servoeinrichtung 510 der Kupplung E und Schmiermittelzufuhr zu dem drucklos befüllbaren Druckausgleichsraum 512 des dynamischen Druckausgleichs der Servoeinrichtung 510 der Kupplung E abschnittsweise innerhalb einer Nabe des Eingangselementes 520 der Kupplung E und abschnittsweise innerhalb dieser getriebegehäusefesten Nabe GN verlaufen. Beim Schließen der Kupplung E betätigt die Servoeinrichtung 510 das Lamellenpaket 500 der Kupplung E axial in Richtung Hauptradsatz HS.

Die in Fig. 6 dargestellte Bauteilanordnung ermöglicht einen Getriebeabtrieb über eine nicht näher dargestellte Stirnradstufe oder Kegelradstufe, die räumlich gesehen etwa auf der halben axialen Getriebebaulänge an den Hauptradsatz HS kinematisch angebunden ist. In dem in Fig. 6 dargestellten Ausführungsbeispiel ist ein nicht näher dargestellter, mit der Antriebswelle AN wirkverbundener Antriebsmotor des Getriebes auf der dem Hauptradsatz HS abgewandten Seite des Vorschaltradsatzes VS angeordnet. Entsprechend ist die Kupplung E hier auf der dem Antriebsmotor abgewandten Stirnseite des Getriebegehäuses angeordnet. Entsprechend durchdringt die Antriebswelle AN hier auch praktisch das ganze Getriebe in axialer Richtung, zumindest alle Radsätze VS, HS. Insofern bedarf es keinen besonderen konstruktiven Aufwand, um den Antriebsmotor auf der anderen Getriebestirnseite, an der die Kupplung E angrenzt, anzuordnen.

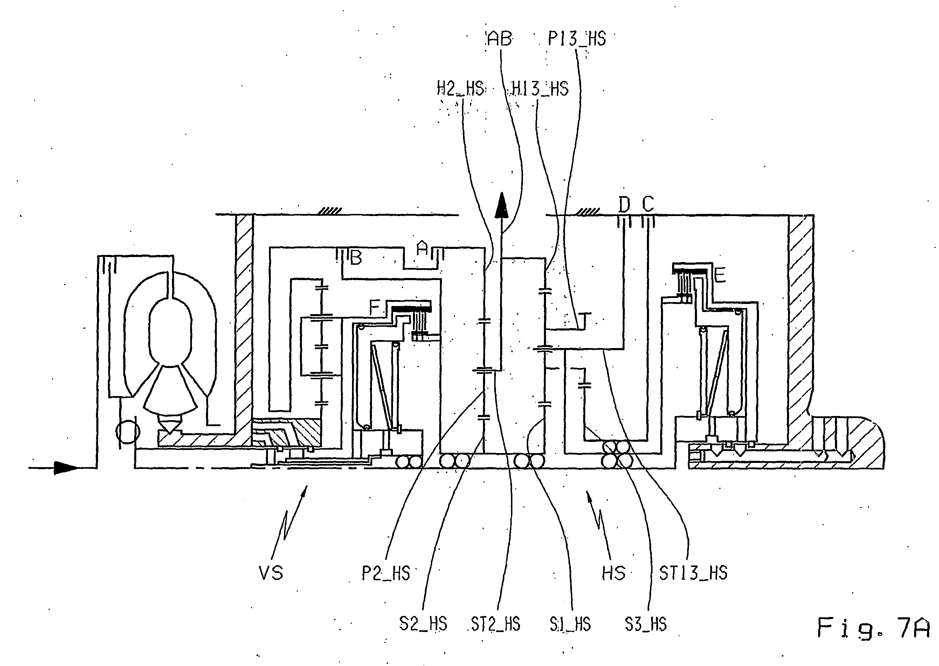

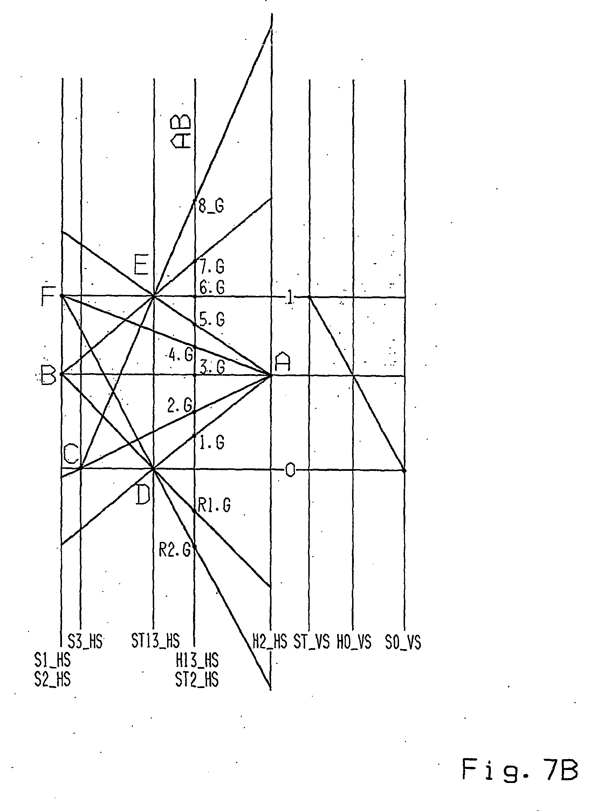

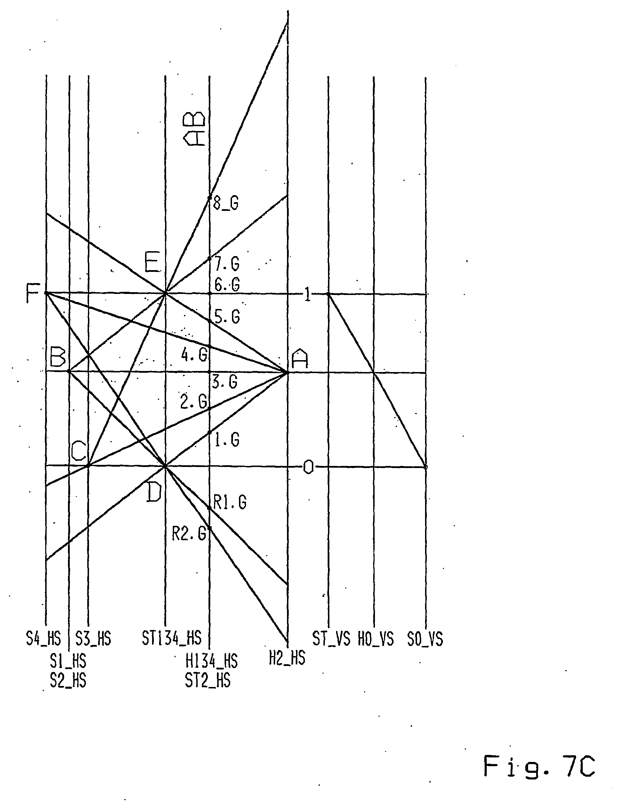

Wie bereit im Rahmen der Beschreibung von Fig. 4 und Fig. 6 angedeutet, ermöglicht die Teilung eines Zentralrades (also eines Sonnen- oder Hohlrades) eines Einzel-Planetenradsatzes in zwei getrennte Zentralräder nicht nur hinsichtlich einer Bauteilankoppelung an dieses ursprünglich ungeteilte Zentralrad einen zusätzlichen Freiheitsgrad, sondern auch einen zusätzlichen Freiheitsgrad hinsichtlich des Drehzahlplans des Getriebes. Dies soll nun an einem weiteren sechsten Ausführungsbeispiel für ein Getriebeschema gemäß der vorliegenden Erfindung näher erläutert werden, welches in Fig. 7 dargestellt ist. Dabei basiert dieses sechste Ausführungsbeispiel auf dem zuvor in Fig. 6 beschriebenen Getriebeschema, jedoch mit einer alternativen konstruktiven Ausgestaltung des Hauptradsatzes HS.

Wie in Fig. 7A ersichtlich, wurden in diesem sechsten Ausführungsbeispiel sowohl räumliche Bauteilanordnung als auch die kinematische Kopplung der Planetenradsätze VS und HS, der sechs Schaltelemente A bis F, sowie der Antriebs- und Abtriebswelle AN, AB vollständig von dem zuvor im Detail beschriebenen fünften Ausführungsbeispiel gemäß Fig. 6 übernommen. Der "neue" Hauptradsatz HS ist ähnlich wie in Fig. 6 als ein "auf eine Zweisteg-Einheit reduziertes Dreisteg-Fünfwellen-Planetengetriebe" ausgeführt, mit vier nicht miteinander verbunden Eingangselementen, einem Ausgangselement und drei Einzel-Planetenradsätzen, von denen zwei zu einer Einsteg-Einheit mit einem gekoppelten Steg ST13_HS und einem gemeinsamen Hohlrad H13_HS und getrennten Sönnenrädern S1_HS, S3_HS zusammengefaßt sind. Im Unterschied zu Fig. 6 sind die am gekoppelten Steg ST13_HS verdrehbar gelagerten langen Planetenräder P13_HS des Hauptradsatzes HS nunmehr als Stufenplanet ausgebildet mit unterschiedlichen Verzahnungen für die beiden Sonnenräder S1_HS und S3_HS des Hauptradsatzes HS. Entsprechend haben das erste und dritte Sonnenrad S1_HS, S3_HS des Hauptradsatzes HS nunmehr eine unterschiedliche Zähnezahl. Beispielhaft kämmt das gekoppelte Hohlrad H13_HS des Hauptradsatzes HS mit der gleichen Verzahnung der langen Planetenräder P13_HS des Hauptradsatzes HS, mit der auch das erste Sonnenrad S1_HS des Hauptradsatzes HS kämmt. Selbstverständlich könnte in einer anderen Ausgestaltung auch vorgesehen sein, dass das gekoppelte Hohlrad H13_HS des Hauptradsatzes mit der gleichen Verzahnung der langen Planetenräder P13_HS des Hauptradsatzes kämmt, mit der auch das dritte Sonnenrad S3_HS des Hauptradsatzes kämmt. Wesentlich ist, dass in einem Drehzahlplan dieses Automatgetriebes gemäß Fig. 7A das vierte Eingangselement und das erste Eingangselement des Hauptradsatzes HS nunmehr nicht mehr zusammenfallen, sondern in diesem Drehzahlplan benachbart zueinander liegen.

Zur Verdeutlichung dieses Sachverhaltes ist in Fig. 7B ein Drehzahlplan für das in Fig. 7A dargestellte Automatgetriebe dargestellt. Ist beispielsweise die Standgetriebeübersetzung des ersten der drei gekoppelten Planetenradsätze des Hauptradsatzes HS, definiert durch das Verhältnis der Zähnezahlen von Hohlrad H13_HS und Sonnenrad S1_HS, betragsmäßig größer als die Standgetriebeübersetzung des dritten der drei gekoppelten Planetenradsätze des Hauptradsatzes HS, definiert durch das Verhältnis der Zähnezahlen von Hohlrad H13_HS und Sonnenrad S3_HS sowie durch das Verhältnis der Zähnezahlen der beiden Stufen der Stufenplanetenräder P13_HS, so liegt die Linie des vierten Eingangselementes S3_HS des Hauptradsatzes HS im Drehzahlplan benachbart zur Linie des ersten Eingangselementes S1_HS bzw. S2_HS des Hauptradsatzes HS rechts von dieser, also näher an der Linie des Abtriebselementes H13_HS bzw. ST2_HS des Hauptradsatzes HS als die genannte Linie des ersten Eingangselementes S1_HS bzw. S2_HS des Hauptradsatzes HS. Die drei Schaltelemente B, C und F haben im Drehzahlplan also auch nicht mehr eine gemeinsame Linie, nur die beiden Kupplungen B und F liegen noch auf einer gemeinsamen Linie. Insofern kann der in Fig. 6 dargestellte Hauptradsatz auch als ein Sonderfall des Hauptradsatzes gemäß Fig. 7A verstanden werden, bei dem - im Unterschied zu Fig. 7A bzw. Fig. 7B - die Linien des ersten und vierten Eingangselementes S1_HS bzw. S2_HS, S3_HS des Hauptradsatzes HS zusammenfallen.

Dem Fachmann ist hieraus klar, dass es auch ohne Probleme möglich ist, alle Zentralräder (Sonnenräder, Hohlräder) des mehrgliedrigen Hauptradsatzes HS ähnlich den in Fig. 6 und Fig. 7A dargestellten Beispielen bauteilseitig in zwei oder mehr Bauteile zu teilen unter Beibehaltung der Anzahl der Hauptradsatz-Stege von zwei, sodass diese geteilten Zentralräder dann jeweils über die ihnen zugeordneten Planetenräder kinematisch miteinander wirkverbunden sind. Selbstverständlich können die zu diesem geteilten Zentralrad korrespondierenden Planetenräder als ungestufte oder gestufte Planetenräder ausgeführt sein. Ein Beispiel für eine derartige weitere Teilung von Zentralrädern des Hauptradsatzes ist in einem in Fig. 7C dargestellten weiteren Drehzahlplan angedeutet, bei dem - ausgehend von dem Automatgetriebe gemäß Fig. 7A - im Hauptradsatz das ursprüngliche dritte Sonnenrad nochmals geteilt ist in die Sonnenräder S3_HS und S4_HS, in der Summe also nunmehr vier Sonnenräder S1_HS, S2_HS, S3_HS und S4_HS, ein gekoppeltes Hohlrad H134_HS, ein einfaches Hohlrad H2_HS, ein gekoppelter Steg ST134_HS sowie ein einfacher Steg ST2 vorgesehen sind. Vom Prinzip her ist dieser Hauptradsatz hier also ein Viersteg-Fünfwellen-Planetengetriebe, das auf eine Zweisteg-Einheit mit fünf nicht miteinander verbundenen Eingangselementen und einem Ausgangselement reduziert ist. Dabei kämmen die Planetenräder des einfachen Stegs ST2_HS unverändert mit dem einfachen Hohlrad H2_HS und dem zweiten Sonnenrad S2_HS, die Planetenräder des "neuen" gekoppelten Stegs ST134_HS jedoch sind als Stufenplaneten ausgeführt und kämmen mit dem gekoppelten Hohlrad H134_HS und den anderen drei Sonnenrädern S1_HS, S3_HS, S4_HS des Hauptradsatzes, wobei diese beiden "neuen" Sonnenräder S3_HS, S4_HS eine unterschiedliche Zähnezahl aufweisen. Die beiden miteinander gekoppelten Sonnenräder S1_HS, S2_HS bilden das erste Eingangselement des Hauptradsatzes und sind mit dem Ausgangselement der Kupplung B verbunden. Das Hohlrad H2_HS bildet das zweite Eingangselement des Hauptradsatzes und ist mit dem Ausgangselement der Kupplung A verbunden. Der Steg ST134_HS bildet das dritte Eingangselement des Hauptradsatzes und ist mit den Ausgangselementen der Schaltelemente E und D verbunden. Das "neue" dritte Sonnenrad S3_HS, bildet das vierte Eingangselement des Hauptradsatzes, welches nunmehr ausschließlich mit dem Ausgangselement der Bremse C verbunden ist. Das "neue" vierte Sonnenrad S4_HS bildet das fünfte Eingangselement des Hauptradsatzes, welches ausschließlich mit dem Ausgangselement der Kupplung F verbunden ist. Hohlrad H134_HS und Steg ST2_HS schließlich sind miteinander gekoppelt und bilden das mit der Abtriebswelle AB verbundene Ausgangselement des Hauptradsatzes.

In dem in Fig. 7C dargestellten Beispiel ist die Standgetriebeübersetzung des ersten der vier gekoppelten Planetenradsätze des Hauptradsatzes, definiert durch das Verhältnis der Zähnezahlen von Hohlrad H134_HS und Sonnenrad S1_HS, betragsmäßig größer als die Standgetriebeübersetzung des dritten der vier gekoppelten Planetenradsätze des Hauptradsatzes, definiert durch das Verhältnis der Zähnezahlen von Hohlrad H134_HS und Sonnenrad S3_HS sowie durch das Verhältnis der Zähnezahlen der Stufen der Stufenplanetenräder des Hauptradsatzes, und betragsmäßig kleiner als die Standgetriebeübersetzung des vierten der vier gekoppelten Planetenradsätze des Hauptradsatzes, definiert durch das Verhältnis der Zähnezahlen von Hohlrad H134_HS und Sonnenrad S4_HS sowie durch das Verhältnis der Zähnezahlen der Stufen der Stufenplanetenräder des Hauptradsatzes. Hieraus ergibt sich einerseits, dass die Linie des vierten Eingangselementes S3_HS des Hauptradsatzes im Drehzahlplan benachbart zur Linie des ersten Eingangselementes S1_HS bzw. S2_HS des Hauptradsatzes rechts von dieser liegt, also näher an der Linie des Abtriebselementes H13_HS bzw. ST2_HS des Hauptradsatzes als die genannte Linie des ersten Eingangselementes S1_HS bzw. S2_HS des Hauptradsatzes. Andererseits ergibt sich hieraus auch, dass die Linie des fünften Eingangselementes S4_HS des Hauptradsatzes im Drehzahlplan benachbart zur Linie des ersten Eingangselementes S1_HS bzw. S2_HS des Hauptradsatzes links von dieser liegt, also weiter von der Linie des Abtriebselementes H13_HS bzw. ST2_HS des Hauptradsatzes entfernt als die genannte Linie des ersten Eingangselementes S1_HS bzw. S2_HS des Hauptradsatzes. Bezogen auf die Eingangselemente des Hauptradsatzes liegen alle drei Schaltelemente B, C und F im Drehzahlplan also auf unterschiedlichen Linien.

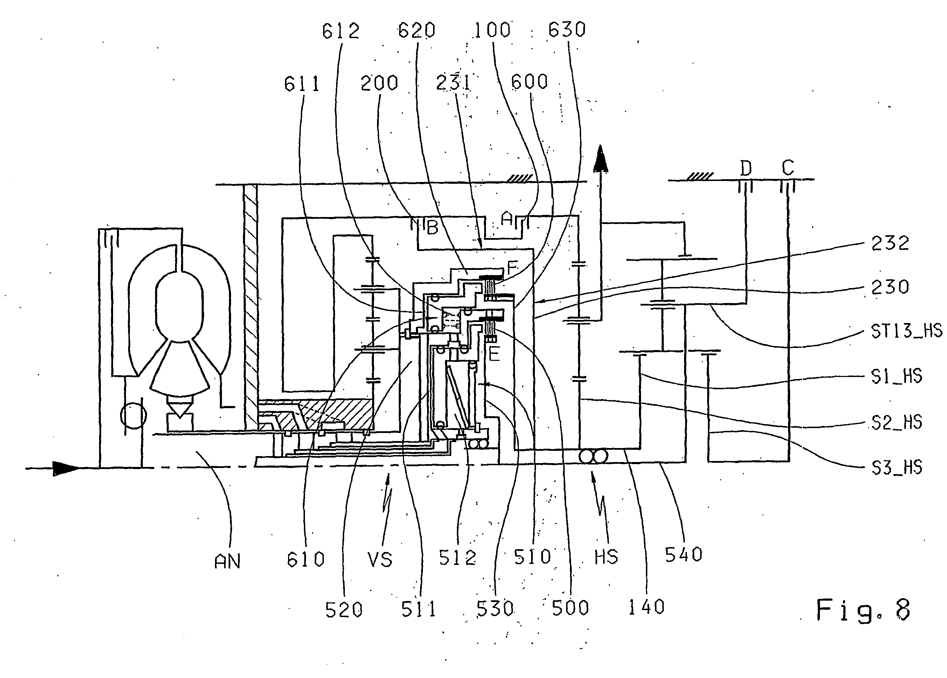

Anhand Fig. 8 wird im folgenden ein siebtes Ausführungsbeispiel für ein Getriebeschema gemäß der vorliegenden Erfindung erläutert, wieder basierend auf dem zuvor in Fig. 6 beschriebenen Getriebeschema, jedoch mit einer weiteren alternativen Anordnung des fünften Schaltelementes E, wiederum für ein Getriebe mit nicht koaxialer Anordnung von Antriebs- und Abtriebswelle AN, AB. Im Unterschied zu Fig. 6 ist die Kupplung E nunmehr wie die Kupplung F in einem Bereich axial zwischen Vorschaltradsatz VS und Hauptradsatz HS angeordnet, axial unmittelbar angrenzend an den Vorschaltradsatz VS. Die Kupplungen E und F bilden eine fertigungstechnisch einfach vormontierbare Baugruppe, umfassend die hier beide beispielhaft als Außenlamellenträger ausgebildeten Eingangselemente 520, 620 der Kupplungen E und F, die Servoeinrichtungen 510, 610 beider Kupplungen E und F, sowie die Lamellenpakete 500, 600 beider Kupplungen E und F.

Die Kupplung F ist hierbei räumlich gesehen radial über der Kupplung E angeordnet, wobei insbesondere das Lamellenpaket 600 der Kupplung F räumlich gesehen radial über dem Lamellenpaket 500 der Kupplung E angeordnet ist. Das Eingangselement bzw. der Außenlamellenträger 520 der Kupplung E ist geometrisch in Form eines in Richtung Hauptradsatz HS geöffneten Topfes ausgebildet, dessen Nabe mit der Antriebswelle AN drehfest verbunden ist, im dargestellten Beispiel sogar ein mit der Antriebswelle AN gemeinsames Bauteil bildet. Die Servoeinrichtung 510 der Kupplung E ist vollständig innerhalb eines Zylinderraums angeordnet, der durch den Außenlamellenträger 520 der Kupplung E gebildet wird, und an diesem Außenlamellenträger 520 axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem Druckausgleichsraum 512 vorgesehen, wobei dieser Druckraum 511 näher am Vorschaltradsatz VS angeordnet ist als der genannte Druckausgleichsraum 512.

Das Eingangselement bzw. der Außenlamellenträger 620 der Kupplung F ist ebenso geometrisch in Form eines in Richtung Hauptradsatz HS geöffneten Topfes ausgebildet, dessen Nabe mit dem Eingangselement bzw. Außenlamellenträger 520 der Kupplung E an dessen Außendurchmesser verdrehfest verbunden ist. Das Eingangselement 620 der Kupplung F ist also über das Eingangselement 520 der Kupplung E mit der Antriebswelle AN verbunden. Die Servoeinrichtung 610 der Kupplung F ist vollständig innerhalb eines Zylinderraums angeordnet, der durch den Außenlamellenträger 620 der Kupplung F gebildet wird, und an diesem Außenlamellenträger 620 axial verschiebbar gelagert. Entsprechend rotiert die Servoeinrichtung 610 ständig mit Drehzahl der Antriebswelle AN. Zum Ausgleich des rotatorischen Drucks des rotierenden Druckraums 611 der Servoeinrichtung 610 ist ein dynamischer Druckausgleich mit dem Druckausgleichsraum 612 vorgesehen, wobei dieser Drurckraum 611 näher am Vorschaltradsatz VS angeordnet ist als der genannte Druckausgleichsraum 612.

Räumlich gesehen ist die Servoeinrichtung 610 der (radial äußeren) Kupplung F in einem Bereich radial über der Servoeinrichtung 510 der (radial inneren) Kupplung E angeordnet. Entsprechend ist der Druckraum 611 der (radial äußeren) Servoeinrichtung 610 der Kupplung F zumindest in etwa radial über dem Druckraum 511 der (radial inneren) Servoeinrichtung 510 der Kupplung E und der Druckausgleichsraum 612 der (radial äußeren) Servoeinrichtung 610 der Kupplung F zumindest in etwa radial über dem Druckausgleichsraum 512 der (radial inneren) Servoeinrichtung 510 der Kupplung E angeordnet. Eine Druckmittelzufuhr zu dem Druckraum 511 und eine Schmiermittelzufuhr zu dem drucklos befüllbaren Druckausgleichsraum 512 der Servoeinrichtung 510 der Kupplung E verläuft dabei abschnittsweise innerhalb der Nabe des Eingangselementes (Außenlamellenträgers) 520 der Kupplung E und abschnittsweise innerhalb der Antriebswelle AN. Eine Druckmittelzufuhr zu dem Druckraum 611 Servoeinrichtung 610 der (radial äußeren) Kupplung F verläuft abschnittsweise ebenfalls innerhalb des (Außenlamellenträgers) 520 der (radial inneren) Kupplung E und abschnittsweise innerhalb der Antriebswelle AN. Der Druckausgleichsraum 612 der Servoeinrichtung 610 der Kupplung F wird hier beispielhaft direkt über den Druckausgleichsraum 512 der Servoeinrichtung 510 der Kupplung E drucklos mit Schmiermittel befüllt. Zum Schließen der Kupplung E wird der Druckraum 511 der Servoeinrichtung 510 mit Druckmittel befüllt, die dann das ihr zugeordnete Lamellenpaket 500 der Kupplung E axial in Richtung Hauptradsatz HS betätigt. Zum Schließen der Kupplung F wird der Druckraum 611 der Servoeinrichtung 610 mit Druckmittel befüllt, die dann das ihr zugeordnete Lamellenpaket 600 der Kupplung F axial in Richtung Hauptradsatz HS betätigt.

Die Ausgangselemente 530, 630 der beiden Kupplungen E, F sind in dem dargestellten Ausführungsbeispiel beide als Innenlamellenträger ausgebildet. Der Innenlamellenträger 530 der Kupplung E erstreckt sich ausgehend von dem Lamellenpaket 500 der Kupplung E axial angrenzend an die Servoeinrichtung 510 der Kupplung E radial nach innen und ist zentrisch mit der Stegwelle 540 verdrehfest verbunden. Diese Stegwelle 540 erstreckt sich axial in Richtung Hauptradsatz HS bis zu dem Stegblech des vorschaltradsatzfernen (gekoppelten) ersten Stegs ST13_HS des Hauptradsatzes HS, durchgreift dabei das zweite und erste Sonnenrad S2_HS, SL_HS des Hauptradsatzes HS zentrisch in axialer Richtung, und ist in einem Bereich axial zwischen dem dritten und ersten Sonnenrad S3_HS, S1_HS des Hauptradsatzes HS mit dem genannten Stegblech des Stegs ST13_HS verdrehfest verbunden. Selbstverständlich können das genannte Stegblech des Stegs ST13_HS und die Stegwelle 540 auch einstückig ausgeführt sein. Der Innenlamellenträger 630 der Kupplung F erstreckt sich ausgehend von dem Lamellenpaket 600 der Kupplung F abschnittsweise axial angrenzend an den Innenlamellenträger 530 der Kupplung E radial nach innen bis auf einen Durchmesser knapp oberhalb der Stegwelle 540 und ist in diesem Nabenbereich mit einer Nabe des Ausgangselementes 230 der Kupplung B und über die Sonnenwelle 140 mit den beiden Sonnenrädern S2_HS und S1_HS des Hauptradsatzes HS verdrehfest verbunden. Die Stegwelle 540 verläuft also zentrisch innerhalb dieser Nabe des Ausgangselementes 630 der Kupplung F bzw. dieser Nabe des Ausgangselementes 230 der Kupplung B und zentrisch innerhalb der Sonnenwelle 140. Bei Bedarf wird der Fachmann die Verbindung zwischen den Naben der beiden Ausgangselemente 230, 630 auch über die Sonnenwelle 140 herstellen oder auch die beiden Sonnenräder S2_HS, S1_HS einstückig ausführen.

In dem dargestellten Ausführungsbeispiel sind die Lamellenpakete 200 und 100 der beiden Kupplungen B und A räumlich gesehen axial nebeneinander auf zumindest ähnlichem Durchmesser in einem Bereich zumindest teilweise radial über der aus den beiden Kupplungen E und F gebildeten Baugruppe angeordnet. Das Ausgangselement 230 der Kupplung B umgreift dabei die aus den beiden Kupplungen E, F gebildete Baugruppe in axialer Richtung radial, wobei sich der zylindrische Abschnitt 231 dieses Ausgangselementes 230 zumindest weitgehend radial oberhalb des Außendurchmessers des Eingangselementes (Außenlamellenträgers) 620 der Kupplung F erstreckt und dabei die Kupplung F vollständig übergreift, und wobei sich der scheibenförmige Abschnitt 232 dieses Ausgangselementes 230 zumindest weitgehend parallel zum Ausgangselement (Innenlamellenträger) 630 der Kupplung F erstreckt.

Ansonsten entspricht die in Fig. 8 dargestellte Bauteilanordnung im wesentlichen der bereits in Fig. 6 dargestellten Anordnung.

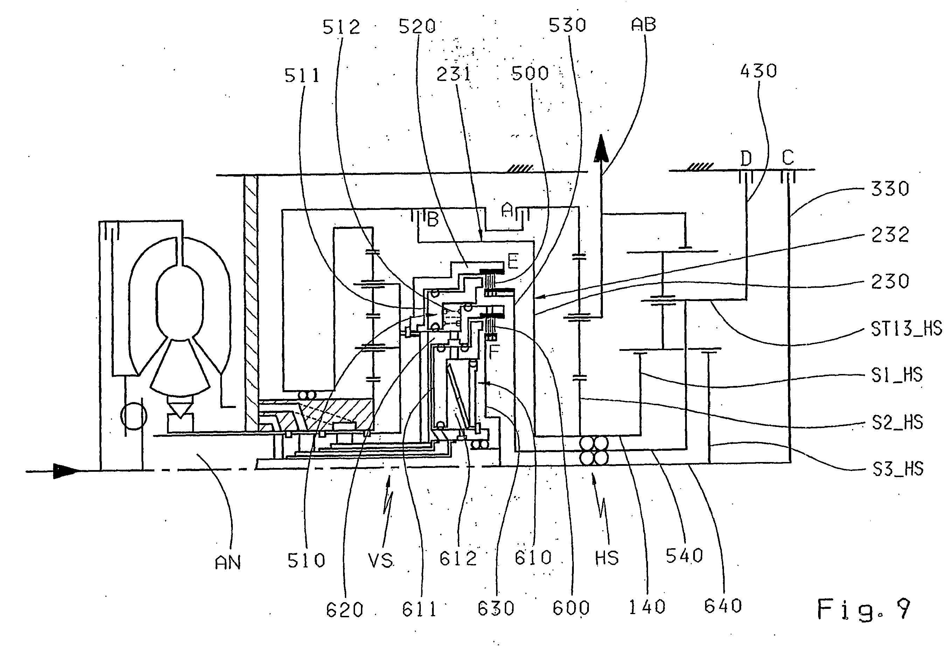

Anhand Fig. 9 wird im folgenden ein achtes Ausführungsbeispiel für ein Getriebeschema gemäß der vorliegenden Erfindung erläutert, wieder basierend auf dem zuvor in Fig. 8 beschriebenen Getriebeschema, jedoch mit einer weiteren alternativen Anordnung des fünften Schaltelementes E, wiederum für ein Getriebe mit nicht koaxialer Anordnung von Antriebs- und Abtriebswelle AN, AB. Wie in Fig. 8 bilden die Kupplungen E und F eine fertigungstechnisch einfach vormontierbare Baugruppe, umfassend die hier beide beispielhaft als Außenlamellenträger ausgebildeten Eingangselement 520, 620 der Kupplungen E und F, die Servoeinrichtungen 510, 610 beider Kupplungen E und F, sowie die Lamellenpakete 500, 600 beider Kupplungen E und F. Im Unterschied zu Fig. 8 jedoch ist nunmehr die Kupplung E räumlich gesehen radial über der Kupplung F angeordnet, wobei insbesondere das Lamellenpaket 500 der Kupplung E räumlich gesehen radial über dem Lamellenpaket 600 der Kupplung F angeordnet ist.

Das Eingangselement bzw. der Außenlamellenträger 620 der Kupplung F ist geometrisch in Form eines in Richtung Hauptradsatz HS geöffneten Topfes ausgebildet, dessen Nabe mit der Antriebswelle AN drehfest verbunden ist, im dargestellten Beispiel sogar ein mit der Antriebswelle AN gemeinsames Bauteil bildet. Die Servoeinrichtung 610 der Kupplung F ist vollständig innerhalb eines Zylinderraums angeordnet, der durch den Außenlamellenträger 620 der Kupplung F gebildet wird, und an diesem Außenlamellenträger 620 axial verschiebbar gelagert. Entsprechend rotiert die Servoeinrichtung 610 ständig mit Drehzahl der Antriebswelle AN. Zum Ausgleich des rotatorischen Drucks des rotierenden Druckraums 611 der Servoeinrichtung 610 ist ein dynamischer Druckausgleich mit dem Druckausgleichsraum 612 vorgesehen, wobei dieser Durckraum 611 näher am Vorschaltradsatz VS angeordnet ist als der genannte Druckausgleichsraum 612.

Das Eingangselement bzw. der Außenlamellenträger 520 der Kupplung E ist ebenfalls geometrisch in Form eines in Richtung Hauptradsatz HS geöffneten Topfes ausgebildet, dessen Nabe mit dem Eingangselement bzw. Außenlamellenträger 620 der Kupplung F an dessen Außendurchmesser verdrehfest verbunden ist. Das Eingangselement 520 der Kupplung E ist also über das Eingangselement 620 der Kupplung F mit der Antriebswelle AN verbunden. Die Servoeinrichtung 510 der Kupplung E ist vollständig innerhalb eines Zylinderraums angeordnet, der durch den Außenlamellenträger 520 der Kupplung E gebildet wird, und an diesem Außenlamellenträger 520 axial verschiebbar gelagert. Entsprechend rotiert die Servoeinrichtung 510 ständig mit Drehzahl der Antriebswelle AN. Zum Ausgleich des rotatorischen Drucks des rotierenden Druckraums 511 der Servoeinrichtung 510 ist ein dynamischer Druckausgleich mit dem Druckausgleichsraum 512 vorgesehen, wobei dieser Drurckraum 511 näher am Vorschaltradsatz VS angeordnet ist als der genannte Druckausgleichsraum 512.

Räumlich gesehen ist die Servoeinrichtung 510 der (radial äußeren) Kupplung E in einem Bereich radial über der Servoeinrichtung 610 der (radial inneren) Kupplung F angeordnet. Entsprechend ist der Druckraum 511 der (radial äußeren) Servoeinrichtung 510 der Kupplung E zumindest in etwa radial über dem Druckraum 611 der (radial inneren) Servoeinrichtung 610 der Kupplung F und der Druckausgleichsraum 512 der (radial äußeren) Servoeinrichtung 510 der Kupplung E zumindest in etwa radial über dem Druckausgleichsraum 612 der (radial inneren) Servoeinrichtung 610 der Kupplung F angeordnet. Eine Druckmittelzufuhr zu dem Druckraum 611 und eine Schmiermittelzufuhr zu dem drucklos befüllbaren Druckausgleichsraum 612 der Servoeinrichtung 610 der Kupplung F verläuft dabei abschnittsweise innerhalb der Nabe des Eingangselementes (Außenlamellenträgers) 620 der Kupplung F und abschnittsweise innerhalb der Antriebswelle AN. Eine Druckmittelzufuhr zu dem Druckraum 511 Servoeinrichtung 510 der (radial äußeren) Kupplung E verläuft abschnittsweise ebenfalls innerhalb des (Außenlamellenträgers) 620 der (radial inneren) Kupplung F und abschnittsweise innerhalb der Antriebswelle AN. Der Druckausgleichsraum 512 der Servoeinrichtung 510 der Kupplung E wird hier beispielhaft direkt über den Druckausgleichsraum 612 der Servoeinrichtung 610 der Kupplung F drucklos mit Schmiermittel befüllt. Zum Schließen der Kupplung E wird der Druckraum 511 der Servoeinrichtung 510 mit Druckmittel befüllt, die dann das ihr zugeordnete Lamellenpaket 500 der Kupplung E axial in Richtung Hauptradsatz HS betätigt. Zum Schließen der Kupplung F wird der Druckraum 611 der Servoeinrichtung 610 mit Druckmittel befüllt, die dann das ihr zugeordnete Lamellenpaket 600 der Kupplung F axial in Richtung Hauptradsatz HS betätigt.

Entsprechend der kinematischen Kopplung zwischen den Ausgangselementen 230, 530, 630 der Kupplungen B, E, F und den drei Sonnenrädern S1_HS, S2_HS, S3_HS des Hauptradsatzes HS ist das genannte zweite Sonnenrad S2_HS wie in Fig. 8 vorschaltradsatznah angeordnet und das ersten Sonnenrad S1_HS axial zwischen dem zweiten und dritten Sonnenrad S1_HS, S3_HS. Im Unterschied zu Fig. 8 ist das durch die fest miteinander verbundenen Sonnenräder S1_HS und S2_HS gebildete erste Eingangselement des Hauptradsatzes HS nur noch mit dem Ausgangselement 230 des Kupplung B verbunden, hingegen ist das durch das dritte Sonnenrad S3_HS gebildete vierte Eingangselement des Hauptradsatzes HS nunmehr sowohl mit dem Ausgangselement 330 der Bremse C als auch mit dem Ausgangselement 630 der Kupplung F verbunden. Natürlich können die hier über die kurze Sonnenwelle 140 miteinander verbundenen Sonnenräder S2_HS und S3_HS bei Bedarf auch einstückig ausgeführt sein.

Die Ausgangselemente 530, 630 der beiden Kupplungen E, F sind in dem dargestellten Ausführungsbeispiel beide als Innenlamellenträger ausgebildet. Der Innenlamellenträger 630 der Kupplung F erstreckt sich ausgehend von dem Lamellenpaket 600 der Kupplung F axial angrenzend an die Servoeinrichtung 610 der Kupplung F radial nach innen und ist zentrisch mit einer dritten Sonnenwelle 640 verdrehfest verbunden. Diese dritte Sonnenwelle 640 erstreckt sich axial in Richtung Hauptradsatz HS bis zumindest zu dessen vorschaltradsatzfernen dritten Sonnenrad S3_HS, durchgreift dabei zumindest das (vorschaltradsatznahe) zweite Sonnenrad S2_HS und das (räumlich gesehen mittlere) erste Sonnenrad S1_HS des Hauptradsatzes HS in axialer Richtung zentrisch und ist mit diesem dritten Sonnenrad S3_HS verdrehfest verbunden. Im Prinzip durchgreift die dritte Sonnenwelle 640 auch dieses dritte Sonnenrad S3_HS zentrisch, da das Ausgangselement 330 der Bremse C auf der vorschaltradsatzfernen Seite des Hauptradsatzes HS mit diesem dritten Sonnenrad S3_HS oder eben mit diesem dritten Sonnenwelle 640 verdrehfest verbunden ist. Der Innenlamellenträger 530 der Kupplung E erstreckt sich ausgehend von dem Lamellenpaket 500 der Kupplung E abschnittsweise axial angrenzend an den Innenlamellenträger 630 der Kupplung F radial nach innen bis auf einen Durchmesser knapp oberhalb der dritten Sonnenwelle 640 und ist in diesem Nabenbereich mit der Stegwelle 540 verdrehfest verbunden. Diese Stegwelle 540 wiederum umschließt die dritte Sonnenwelle 640 radial, erstreckt sich dabei axial in Richtung Hauptradsatz HS bis zu dem Stegblech des vorschaltradsatzfemen gekoppelten Stegs ST13_HS des Hauptradsatzes HS, durchgreift dabei ebenfalls das zweite und erste Sonnenrad S2_HS, S1_HS des Hauptradsatzes HS in axialer Richtung, und ist in einem Bereich axial zwischen dem ersten und dritten Sonnenrad S1_HS, S3_HS des Hauptradsatzes HS mit dem genannten Stegblech des gekoppelten Stegs ST13_HS verdrehfest verbunden. Selbstverständlich können das genannte Stegblech des Stegs ST13_HS und die Stegwelle 540 auch einstückig ausgeführt sein.

In dem dargestellten Ausführungsbeispiel sind die Lamellenpakete 200 und 100 der beiden Kupplungen B und A räumlich gesehen axial nebeneinander auf zumindest ähnlichem Durchmesser in einem Bereich zumindest teilweise radial über der aus den beiden Kupplungen E und F gebildeten Baugruppe angeordnet. Das Ausgangselement 230 der Kupplung B umgreift dabei die aus den beiden Kupplungen E, F gebildete Baugruppe in axialer Richtung radial, wobei sich der zylindrische Abschnitt 231 dieses Ausgangselementes 230 zumindest weitgehend radial oberhalb des Außendurchmessers des Eingangselementes (Außenlamellenträgers) 520 der Kupplung E erstreckt und dabei die Kupplung E vollständig übergreift, und wobei sich der scheibenförmige Abschnitt 232 dieses Ausgangselementes 230 zumindest weitgehend parallel zum Ausgangselement (Innenlamellenträger) 530 der Kupplung E radial nach innen erstreckt bis zu einem Durchmesser knapp oberhalb der Stegwelle 540. In seinem Nabenbereich ist das Ausgangselement 230 der Kupplung B mit dem vorschaltradsatznahen zweiten Sonnenrad S2_HS des Hauptradsatzes HS und über die Sonnenwelle 140 auch mit dem (räumlich gesehen mittleren) ersten Sonnenrads S1_HS des Hauptradsatzes HS verdrehfest verbunden. Die Stegwelle 540 verläuft also zentrisch innerhalb dieser Nabe des Ausgangselementes 230 der Kupplung E und zentrisch innerhalb der Sonnenwelle 140.

Ansonsten entspricht die in Fig. 9 dargestellte Bauteilanordnung im wesentlichen der bereits in Fig. 8 dargestellten Anordnung.

### Bezugszeichen

- A: erstes Schaltelement, Kupplung
- B: zweites Schaltelement, Kupplung
- C: drittes Schaltelement, Bremse
- D: viertes Schaltelement, Bremse
- E: fünftes Schaltelement, Kupplung
- F: sechstes Schaltelement, Kupplung

- AN: Antriebswelle
- AB: Abtriebswelle
- GG: Getriebegehäuse
- GW: Gehäusewand
- GN: Nabe der Gehäusewand
- GZ: Gehäusezwischenwand
- ZYLAB: Lamellenträger des ersten und zweiten Schaltelementes

- VS: Vorschaltradsatz
- HO_VS: Hohlrad des Vorschaltradsatzes
- SO_VS: Sonnenrad des Vorschaltradsatzes
- ST_VS: (gekoppelter) Steg des Vorschaltradsatzes
- P1_VS: inneres Planetenrad des Vorschaltradsatzes
- P2_VS: äußeres Planetenrad des Vorschaltradsatzes

- HS: Hauptradsatz
- HO_HS: (einziges) Hohlrad des Hauptradsatzes
- H1_HS: erstes Hohlrad des Hauptradsatzes
- H13_HS: gekoppeltes (erstes) Hohlrad des Hauptradsatzes
- H134_HS: gekoppeltes (erstes) Hohlrad des Hauptradsatzes

- H2_HS: zweites Hohlrad des Hauptradsatzes
- S1_HS: erstes Sonnenrad des Hauptradsatzes
- S2_HS: zweites Sonnenrad des Hauptradsatzes
- S3_HS: drittes Sonnenrad des Hauptradsatzes
- S4_HS: viertes Sonnenrad des Hauptradsatzes
- ST_HS: gekoppelter (einziger) Steg des Hauptradsatzes
- ST1_HS: erster Steg des Hauptradsatzes
- ST13_HS: gekoppelter (erster) Steg des Hauptradsatzes
- ST134_HS: gekoppelter (erster) Steg des Hauptradsatzes
- ST2_HS: zweiter Steg des Hauptradsatzes
- P1_HS: langes Planetenrad des Hauptradsatzes
- P13_HS: gekoppeltes langes Planetenrad des Hauptradsatzes
- P2_HS: kurzes Planetenrad des Hauptradsatzes
- PL_HS: erstes Planetenrad des Hauptradsatzes
- PLa_HS: äußeres Planetenrad des Hauptradsatzes
- PLi_HS: inneres Planetenrad des Hauptradsatzes

- 100: Lamellen des ersten Schaltelementes
- 110: Servoeinrichtung des ersten Schaltelementes
- 111: Druckraum des ersten Schaltelementes
- 112: Druckausgleichsraum des ersten Schaltelementes
- 113: Rückstellelement der Servoeinrichtung des ersten Schaltelementes
- 114: Kolben der Servoeinrichtung des ersten Schaltelementes
- 115: Stauscheibe der Servoeinrichtung des ersten Schaltelementes
- 120: Eingangselement des ersten Schaltelementes, Außenlamellenträger
- 121: zylindrischer Abschnitt des Eingangselementes des ersten Schaltelementes
- 123: Nabe des Eingangselementes des ersten Schaltelementes
- 130: Ausgangselement des ersten Schaltelementes
- 131: zylindrischer Abschnitt des Ausgangselementes des ersten Schaltelementes
- 132: scheibenförmiger Abschnitt des Ausgangselementes des ersten Schaltelementes
- 140: zweite Sonnenwelle

- 200: Lamellen des zweiten Schaltelementes
- 210: Servoeinrichtung des zweiten Schaltelementes
- 211: Druckraum des zweiten Schaltelementes
- 212: Druckausgleichsraum des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 223: Nabe des Eingangselementes des zweiten Schaltelementes
- 230: Ausgangselement des zweiten Schaltelementes
- 231: erster zylindrischer Abschnitt des Ausgangselementes des zweiten Schaltelementes
- 232: scheibenförmiger Abschnitt des Ausgangselementes des zweiten Schaltelementes
- 234: zweiter zylindrischer Abschnitt des Ausgangselementes des zweiten Schaltelementes
- 240: erste Sonnenwelle

- 300: Lamellen des dritten Schaltelementes
- 310: Servoeinrichtung des dritten Schaltelementes
- 330: Ausgangsetement des dritten Schaltelementes

- 400: Lamellen des vierten Schaltelementes
- 410: Servoeinrichtung des vierten Schaltelementes
- 411: Druckräume des vierten Schaltelementes
- 430: Ausgangselement des vierten Schaltelementes

- 500: Lamellen des fünften Schaltelementes
- 510: Servoeinrichtung des fünften Schaltelementes
- 520: Eingangselement des fünften Schaltelementes, Außenlamellenträger
- 521: zylindrischer Abschnitt des Eingangselementes des fünften Schaltelementes
- 522: scheibenförmiger Abschnitt des Eingangselementes des fünften Schaltelementes
- 523: Nabe des Eingangselementes des fünften Schaltelementes
- 530: Ausgangselement des fünften Schaltelementes
- 540: Stegwelle

- 600: Lamellen des sechsten Schaltelementes
- 610: Servoeinrichtung des sechsten Schaltelementes
- 611: Druckraum des sechsten Schaltelementes
- 612: Druckausgleichsraum des sechsten Schaltelementes
- 613: Rückstellelement der Servoeinrichtung des sechsten Schaltelementes
- 614: Kolben der Servoeinrichtung des sechsten Schaltelementes
- 615: Stauscheibe der Servoeinrichtung des sechsten Schaltelementes
- 620: Eingangselement des sechsten Schaltelementes, Außenlamellenträger
- 621: zylindrischer Abschnitt des Eingangselementes des sechsten Schaltelementes
- 622: scheibenförmiger Abschnitt des Eingangselementes des sechsten Schaltelementes
- 623: Nabe des Eingangselementes des sechsten Schaltelementes
- 630: Ausgangselement des ersten Schaltelementes
- 631: zylindrischer Abschnitt des Ausgangselementes des sechsten Schaltelementes
- 632: scheibenförmiger Abschnitt des Ausgangselementes des sechsten Schaltelementes
- 633: Nabe des Ausgangselementes des sechsten Schaltelementes
- 640: dritte Sonnenwelle

## Patentansprüche (Patentansprüche für folgende(n) Vertragsstaat(en): DE, FR, GB)

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
**dadurch gekennzeichnet,**
• **dass** das sechste Schaltelement (F), insbesondere ein Lamellenpaket (600) dieses sechsten Schaltelementes (F) und eine Servoeinrichtung (610) zum Betätigen dieses Lamellenpaketes (600) des sechsten Schaltelementes (F) räumlich gesehen in einem Bereich axial zwischen Vorschaltradsatz (VS) und Hauptradsatz (HS) angeordnet ist,
• **dass** ein Druckraum (211) einer Servoeinrichtung (210) zum Betätigen eines Lamellenpaketes (200) des zweiten Schaltelementes (B) räumlich gesehen auf dem Hauptradsatz (HS) abgewandten Seite des Vorschaltradsatzes (VS) angeordnet ist,
• **dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
o die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
o die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
o der Steg (ST_VS) des Vorschaltradsatzes (VS) das ständig mit der Antriebswelle (AN) verbundene Eingangselement des Vorschaltradsatzes (VS) bildet,
o das Hohlrad (HO_VS) des Vorschaltradsatzes (VS) das mit Eingangselementen des Hauptradsatzes (HS) verbindbare Ausgangselement des Vorschaltradsatzes (VS) bildet und
o das Sonnenrad (SO_VS) des Vorschaltradsatzes (VS) am Getriebegehäuse (GG) festgesetzt ist,
• und **dass** der Hauptradsatz (HS) als Zweisteg-Vierwellen-Getriebe mit zwei gekoppelten Einzel-Planetenradsätzen ausgeführt ist, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS. PLa_HS) verdrehbar gelagert sind, wobei
o die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
o die inneren Planetenräder (PLi_HS) des Hauptradsatzes (HS) mit den äu-ßeren Planetenräder (PLa_HS) und dem zweiten Sonnenrad (S2_HS) des Hauptradsatzes (HS) kämmen,
o die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
o das erste Sonnenrad (S1_HS) und der gekoppelte zweite Steg (ST2_HS) des Hauptradsatzes (HS) miteinander verbunden sind und das erste Eingangselement des Hauptradsatzes (HS) bilden und mit den Ausgangselementen (230, 330, 630) des zweiten, dritten und sechsten Schaltelementes (B, C, F) verbunden sind,
o das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
o der erste Steg (ST1_HS) und das zweite Hohlrad (H2_HS) des Hauptradsatzes (HS) miteinander verbunden sind und das dritte Eingangselement des Hauptradsatzes (HS) bilden und mit den Ausgangselementen (430, 530) des vierten und fünften Schaltelementes (D, E) verbunden sind, und
o das erste Hohlrad (H1_HS) des Hauptradsatzes (HS) das Ausgangselement des Hauptradsatzes (HS) bildet und mit der Abtriebswelle (AB) verbunden ist.

2. Mehrstufen-Automatgetriebe nach dem Oberbegriff von Anspruch 1, **dadurch gekennzeichnet,**
• **dass** das sechste Schaltelement (F), insbesondere ein Lamellenpaket (600) dieses sechsten Schaltelementes (F) und eine Servoeinrichtung (610) zum Betätigen dieses Lamellenpaketes (600) des sechsten Schaltelementes (F) räumlich gesehen in einem Bereich axial zwischen Vorschaltradsatz (VS) und Hauptradsatz (HS) angeordnet ist,
• **dass** ein Druckraum (211) einer Servoeinrichtung (210) zum Betätigen eines Lamellenpaketes (200) des zweiten Schaltelementes (B) räumlich gesehen auf dem Hauptradsatz (HS) abgewandten Seite des Vorschaltradsatzes (VS) angeordnet ist,
• **dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
o die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
o die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
o der Steg (ST_VS) des Vorschaltradsatzes (VS) das ständig mit der Antriebswelle (AN) verbundene Eingangselement des Vorschaltradsatzes (VS) bildet,
o das Hohlrad (HO_VS) des Vorschaltradsatzes (VS) das mit Eingangselementen des Hauptradsatzes (HS) verbindbare Ausgangselement des Vorschaltradsatzes (VS) bildet und
o das Sonnenrad (SO_VS) des Vorschaltradsatzes (VS) am Getriebegehäuse festgesetzt ist,
• und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
o das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
o die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
o die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
o das erste und zweite Sonnenrad (S1_HS, S2_HS) des Hauptradsatzes (HS) fest miteinander verbunden sind und das erste Eingangselement des Hauptradsatzes (HS) bilden und mit den Ausgangselementen (230, 630) des zweiten und sechsten Schaltelementes (B, F) verbunden sind,
o das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
o der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
o das dritte Sonnenrad (S3_HS) des Hauptradsatzes (HS) ein viertes Eingangselement des Hauptradsatzes (HS) bildet und mit dem Ausgangselement (330) des dritten Schaltelementes (C) verbunden ist, und
o das gekoppelte Hohlrad (H 13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

3. Mehrstufen-Automatgetriebe nach dem Oberbegriff von Anspruch 1, **dadurch gekennzeichnet,**
• **dass** das sechste Schaltelement (F), insbesondere ein Lamellenpaket (600) dieses sechsten Schaltelementes (F) und eine Servoeinrichtung (610) zum Betätigen dieses Lamellenpaketes (600) des sechsten Schaltelementes (F) räumlich gesehen in einem Bereich axial zwischen Vorschaltradsatz (VS) und Hauptradsatz (HS) angeordnet ist,
• **dass** ein Druckraum (211) einer Servoeinrichtung (210) zum Betätigen eines Lamellenpaketes (200) des zweiten Schaltelementes (B) räumlich gesehen auf dem Hauptradsatz (HS) abgewandten Seite des Vorschaltradsatzes (VS) angeordnet ist,
• **dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
o die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
o die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
o der Steg (ST_VS) des Vorschaltradsatzes (VS) das ständig mit der Antriebswelle (AN) verbundene Eingangselement des Vorschaltradsatzes (VS) bildet,
o das Hohlrad (HO_VS) des Vorschaltradsatzes (VS) das mit Eingangselementen des Hauptradsatzes (HS) verbindbare Ausgangselement des Vorschaltradsatzes (VS) bildet und
o das Sonnenrad (SO_VS) des Vorschaltradsatzes (VS) am Getriebegehäuse festgesetzt ist,
• und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
o das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
o die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
o die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
o das erste und zweite Sonnenrad (S1_HS, S2_HS) des Hauptradsatzes (HS) fest miteinander verbunden sind und das erste Eingangselement des Hauptradsatzes (HS) bilden und mit dem Ausgangselement (230) des zweiten Schaltelementes (B) verbunden sind,
o das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
o der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
o das dritte Sonnenrad (S3_HS) des Hauptradsatzes (HS) ein viertes Eingangselement des Hauptradsatzes (HS) bildet und mit den Ausgangselementen (330, 630) des dritten und sechsten Schaltelementes (C, F) verbunden ist, und
o das gekoppelte Hohlrad (H13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

4. Mehrstufen-Automatgetriebe nach Anspruch 2 oder 3, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine mit dem Ausgangselement (530) des fünften Schaltelementes (E) verdrehfest verbundene Nabe dieses Stegblechs oder eine mit diesem Stegblech und dem Ausgangselement (530) des fünften Schaltelementes (E) verdrehfest verbundene Stegwelle (540) entweder das erste und zweite Sonnenrad (S1_HS, S2_HS) des Hauptradsatzes (HS) oder aber das dritte Sonnenrad (S3_HS) des Hauptradsatzes (HS) in axialer Richtung zentrisch durchdringt.

5. Mehrstufen-Automatgetriebe nach dem Oberbegriff von Anspruch 1, **dadurch gekennzeichnet,**
• **dass** das sechste Schaltelement (F), insbesondere ein Lamellenpaket (600) dieses sechsten Schaltelementes (F) und eine Servoeinrichtung (610) zum Betätigen dieses Lamellenpaketes (600) des sechsten Schaltelementes (F) räumlich gesehen in einem Bereich axial zwischen Vorschaltradsatz (VS) und Hauptradsatz (HS) angeordnet ist,
• **dass** ein Druckraum (211) einer Servoeinrichtung (210) zum Betätigen eines Lamellenpaketes (200) des zweiten Schaltelementes (B) räumlich gesehen auf dem Hauptradsatz (HS) abgewandten Seite des Vorschaltradsatzes (VS) angeordnet ist,
• **dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
o die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
o die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
o der Steg (ST_VS) des Vorschaltradsatzes (VS) das ständig mit der Antriebswelle (AN) verbundene Eingangselement des Vorschaltradsatzes (VS) bildet,
o das Hohlrad (HO_VS) des Vorschaltradsatzes (VS) das mit Eingangselementen des Hauptradsatzes (HS) verbindbare Ausgangselement des Vorschaltradsatzes (VS) bildet und
o das Sonnenrad (SO_VS) des Vorschaltradsatzes (VS) am Getriebegehäuse festgesetzt ist,
• und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
o das dritte Sonnenrad (S3_HS) des Hauptradsatzes (HS) axial zwischen dem ersten und zweiten Sonnenrad (S1_HS, S2_HS) des Hauptradsatzes (HS) angeordnet ist,
o die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
o die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
o das erste Sonnenrad (S1_HS) des Hauptradsatzes (HS) das erste Eingangselement des Hauptradsatzes (HS) bildet und mit den Ausgangselementen (230, 630) des zweiten und sechsten Schaltelementes (B, F) verbunden ist,
o das gekoppelte Hohlrad (H13_HS) des Hauptradsatzes (HS) das zweite Eingangselement des Hauptradsatzes (HS) bildet und mit dem Ausgangselement (130) des ersten Schaltelementes (A) verbunden ist,
o der zweite Steg (ST2_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
o das zweite und dritte Sonnenrad (S2_HS, S3_HS) des Hauptradsatzes (HS) fest miteinander verbunden sind und ein viertes Eingangselement des Hauptradsatzes (HS) bilden und mit dem Ausgangselement (330) des dritten Schaltelementes (C) verbunden sind und
o der gekoppelte Steg (ST13_HS) und das zweite Hohlrad (H2_HS) des Hauptradsatzes (HS) fest miteinander verbunden sind und das Ausgangselement des Hauptradsatzes (HS) bilden und mit der Abtriebswelle (AB) verbunden sind.

6. Mehrstufen-Automatgetriebe nach Anspruch 5, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine mit der Abtriebswelle (AB) des Automatgetriebes verdrehfest verbundene Nabe dieses Stegblechs oder die mit diesem Stegblech verdrehfest verbundene Abtriebswelle (AB) des Automatgetriebes entweder das zweite und dritte Sonnenrad (S2_HS, S3_HS) des Hauptradsatzes (HS) oder aber das erste Sonnenrad (S1_HS) des Hauptradsatzes (HS) in axialer Richtung zentrisch durchdringt.

7. Mehrstufen-Automatgetriebe nach einem der Ansprüche 1 bis 6, **dadurch gekennzeichnet, dass** das fünfte Schaltelement (E) unmittelbar an den Vorschaltradsatz (VS) angrenzt, auf der dem Hauptradsatz (HS) zugewandten Seite des Vorschaltradsatzes (VS).

8. Mehrstufen-Automatgetriebe nach einem der Ansprüche 1 bis 7, **dadurch gekennzeichnet, dass** das sechste Schaltelement (F), insbesondere das Lamellenpaket (600) und die Servoeinrichtung (610) dieses sechsten Schaltelementes (F), räumlich gesehen in einem Bereich axial zwischen dem fünften Schaltelement (E) und dem Hauptradsatz (HS) angeordnet ist.

9. Mehrstufen-Automatgetriebe nach einem der Ansprüche 1 bis 8, **dadurch gekennzeichnet, dass** die Servoeinrichtung (610) des sechsten Schaltelementes (F) zumindest weitgehend innerhalb eines Zylinderraums angeordnet ist, der durch einen mit dem ersten Eingangselement des Hauptradsatzes (HS) verbundenen Lamellenträger des sechsten Schaltelementes (F) gebildet wird,
wobei die Servoeinrichtung (610) des sechsten Schaltelementes (F) ständig mit Drehzahl des ersten Eingangselementes des Hauptradsatzes (HS) rotiert.

10. Mehrstufen-Automatgetriebe nach einem der Ansprüche 1 bis 9, **dadurch gekennzeichnet, dass** das Ausgangselement (630) des sechsten Schaltelementes (F) in einer zweiten Sonnenwelle (140) verdrehbar gelagert ist, über welche ein Ausgangselement (130) des ersten Schaltelementes (A) mit dem zweiten Eingangselement des Hauptradsatzes (HS) verbunden ist, wobei diese zweite Sonnenwelle (140) das Ausgangselement (630) des sechsten Schaltelementes (F) in axialer Richtung zentrisch durchgreift.

11. Mehrstufen-Automatgetriebe nach einem der Ansprüche 1 bis 10, **dadurch gekennzeichnet, dass** ein mit der Antriebswelle (AN) verbundenes Eingangselement (620) des sechsten Schaltelementes (F) den Vorschaltradsatz (VS) sowie das zweite, erste und fünfte Schaltelement (B, A, E) in axialer Richtung vollständig radial übergreift.

12. Mehrstufen-Automatgetriebe nach einem der Ansprüche 1 bis 11, **dadurch gekennzeichnet, dass** das dritte Schaltelement (C) benachbart zum sechsten Schaltelement (F) angeordnet ist.

13. Mehrstufen-Automatgetriebe nach einem der Ansprüche 1 bis 12, **dadurch gekennzeichnet, dass** sich das vierte Schaltelement (D) axial in Richtung Hauptradsatz (HS) gesehen an das dritte Schaltelement (C) anschließt, wobei Antriebswelle (AN) und Abtriebswelle (AB) koaxial zueinander verlaufen.

14. Mehrstufen-Automatgetriebe nach einem der Ansprüche 1 bis 13, **dadurch gekennzeichnet, dass** das vierte Schaltelement (D) näher am Hauptradsatz (HS) angeordnet ist als das dritte Schaltelement (C).

15. Mehrstufen-Automatgetriebe nach einem der Ansprüche 1 bis 12, **dadurch gekennzeichnet, dass** das vierte Schaltelement (D) auf der Seite dem Vorschaltradsatz (VS) abgewandten Seite des Hauptradsatzes (HS) angeordnet ist wobei Antriebswelle (AN) und Abtriebswelle (AB) nicht koaxial zueinander verlaufen.

16. Mehrstufen-Automatgetriebe nach einem der Ansprüche 1 bis 6, **dadurch gekennzeichnet, dass** das sechste Schaltelement (F) unmittelbar an den Vorschaltradsatz (VS) angrenzt, auf der dem Hauptradsatz (HS) zugewandten Seite des Vorschaltradsatzes (VS).

17. Mehrstufen-Automatgetriebe nach einem der Ansprüche 1 bis 6 oder 16, **dadurch gekennzeichnet, dass** die Servoeinrichtung (610) des sechsten Schaltelementes (F) innerhalb eines Kupplungsraumes angeordnet ist, der durch einen mit der Antriebswelle (AN) verbundenen Lamellenträger des sechsten Schaltelementes (F) gebildet wird, wobei die Servoeinrichtung (610) des sechsten Schaltelementes (F) ständig mit Drehzahl der Antriebswelle (AN) rotiert.

18. Mehrstufen-Automatgetriebe nach einem der Ansprüche 1 bis 6 oder 16 oder 17, **dadurch gekennzeichnet, dass** das erste Schaltelement (A) räumlich gesehen in einem Bereich zumindest teilweise axial zwischen dem sechsten Schaltelement (F) und dem Hauptradsatz (HS) angeordnet ist, insbesondere dass eine Servoeinrichtung (110) des ersten Schaltelementes (A) räumlich gesehen in einem Bereich axial zwischen dem sechsten Schaltelement (F) und dem Hauptradsatz (HS) angeordnet ist.

19. Mehrstufen-Automatgetriebe nach einem der Ansprüche 1 bis 6 oder einem der Ansprüche 16 bis 18, **dadurch gekennzeichnet, dass** ein Lamellenpaket (100) des ersten Schaltelementes (A) räumlich gesehen zumindest teilweise in einem Bereich radial über dem sechsten Schaltelement (F) angeordnet ist.

20. Mehrstufen-Automatgetriebe nach einem der Ansprüche 1 bis 6 oder einem der Ansprüche 16 bis 19, **dadurch gekennzeichnet, dass** die Servoeinrichtung (110) des ersten Schaltelementes (A) ständig mit Drehzahl des zweiten Eingangselementes des Hauptradsatzes rotiert.

21. Mehrstufen-Automatgetriebe nach einem der Ansprüche 1 bis 6 oder einem der Ansprüche 16 bis 20, **dadurch gekennzeichnet, dass** ein Druckraum einer Servoeinrichtung (510) des fünften Schaltelementes (E) auf der dem Hauptradsatz (HS) abgewandten Seite des Vorschaltradsatzes (VS) angeordnet ist und stets mit Drehzahl der Antriebswelle (AN) rotiert.

22. Mehrstufen-Automatgetriebe nach einem der Ansprüche 1 bis 6 oder einem der Ansprüche 16 bis 19, **dadurch gekennzeichnet, dass** das fünfte Schaltelement (E) auf der dem Vorschaltradsatz (VS) abgewandten Seite des Hauptradsatzes (HS) angeordnet ist, insbesondere angrenzend an eine Außenstirnwand des Getriebegehäuses (GG).

23. Mehrstufen-Automatgetriebe nach einem der Ansprüche 1 bis 6 oder einem der Ansprüche 16 bis 19, **dadurch gekennzeichnet, dass** das fünfte Schaltelement (E) in einem Bereich axial zwischen Vorschaltradsatz (VS) und Hauptradsatzes (HS) angeordnet ist, insbesondere unmittelbar angrenzend an den Vorschaltradsatz (VS).

24. Mehrstufen-Automatgetriebe nach einem der Ansprüche 1 bis 6 oder einem der Ansprüche 16 bis 19 oder 23, **dadurch gekennzeichnet, dass** das fünfte Schaltelement (E) räumlich gesehen radial über dem sechsten Schaltelement (F) angeordnet ist, insbesondere dass das Lamellenpaket (500) des fünften Schaltelementes (E) räumlich gesehen radial über dem Lamellenpaket (600) des sechsten Schaltelementes (F) angeordnet ist.

25. Mehrstufen-Automatgetriebe nach einem der Ansprüche 1 bis 6 oder einem der Ansprüche 16 bis 19 oder 23, **dadurch gekennzeichnet, dass** das sechste Schaltelement (F) räumlich gesehen radial über dem fünften Schaltelement (E) angeordnet ist, insbesondere dass das Lamellenpaket (600) des sechsten Schaltelementes (F) räumlich gesehen radial über dem Lamellenpaket (500) des fünften Schaltelementes (E) angeordnet ist.

26. Mehrstufen-Automatgetriebe nach einem der Ansprüche 1 bis 6 oder einem der Ansprüche 16 bis 25, **dadurch gekennzeichnet, dass** die Lamellenpakete (100, 200) des ersten und zweiten Schaltelementes (A, B) räumlich gesehen axial nebeneinander in einem Bereich zumindest teilweise radial über der aus dem fünften und sechsten Schaltelement (E, F) gebildeten Baugruppe angeordnet ist.

27. Mehrstufen-Automatgetriebe nach einem der Ansprüche 1 bis 6 oder einem der Ansprüche 16 bis 25, **dadurch gekennzeichnet, dass** das zweite Schaltelement (B) innerhalb eines Zylinderraums angeordnet ist, der durch das Eingangselement (520) des fünften Schaltelementes (E) gebildet wird.

28. Mehrstufen-Automatgetriebe nach einem der Ansprüche 1 bis 6 oder einem der Ansprüche 16 bis 27, **dadurch gekennzeichnet, dass** ein mit dem Ausgangselement des Vorschaltradsatzes (VS) verbundenes Eingangselement (220) des zweiten Schaltelementes (B) auf einer Nabe (523) des Eingangselementes (520) des fünften Schaltelementes (E) verdrehbar gelagert ist.

29. Mehrstufen-Automatgetriebe nach einem der Ansprüche 1 bis 6 oder einem der Ansprüche 16 bis 28, **dadurch gekennzeichnet, dass** ein Lamellenpaket (200) des zweiten Schaltelementes (B) räumlich gesehen in einem Bereich zumindest teilweise radial über dem Vorschaltradsatz (VS) und/oder zumindest teilweise radial über dem sechsten Schaltelement (F) angeordnet ist,
wobei ein mit dem ersten Eingangselement des Hauptradsatzes (HS) verbundenes Ausgangselement (230) des zweiten Schaltelementes (B) das sechste Schaltelement (F) in axialer Richtung radial übergreift.

30. Mehrstufen-Automatgetriebe nach einem der Ansprüche 1 bis 6 oder einem der Ansprüche 16 bis 29, **dadurch gekennzeichnet, dass** sich axial in Richtung Hauptradsatz (HS) gesehen ein Lamellenpaket (400) des vierten Schaltelementes (D) axial an das Lamellenpaket (500) des fünften Schaltelementes (E) anschließt.

31. Mehrstufen-Automatgetriebe nach einem der Ansprüche 1 bis 6 oder einem der Ansprüche 16 bis 30, **dadurch gekennzeichnet, dass** das dritte Schaltelement (C) auf der Seite dem Vorschaltradsatz (VS) abgewandten Seite des Hauptradsatzes (HS) angeordnet ist, wobei Antriebswelle (AN) und Abtriebswelle (AB) nicht koaxial zueinander verlaufen.

32. Mehrstufen-Automatgetriebe nach einem der vorigen Ansprüche, **dadurch gekennzeichnet, dass** durch selektives Schließen der Schaltelemente (A bis F) zumindest acht Vorwärtsgänge derart schaltbar sind, dass eine Eingangsdrehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird,
wobei
• in einem ersten Vorwärtsgang das erste und vierte Schaltelement (A, D),
• in einem zweiten Vorwärtsgang das erste und dritte Schaltelement (A, C),
• in einem dritten Vorwärtsgang das erste und zweite Schaltelement (A, B),
• in einem vierten Vorwärtsgang das erste und sechste Schaltelement (A, F),
• in einem fünften Vorwärtsgang das erste und fünfte Schaltelement (A, E),
• in einem sechsten Vorwärtsgang das fünfte und sechste Schaltelement (E, F),
• in einem siebten Vorwärtsgang das zweite und fünfte Schaltelement (B, E)
• in einem achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Patentansprüche (Patentansprüche für folgende(n) Vertragsstaat(en): AT, BE, CH, DK, ES, GR, IT, LI, LU, MC, NL, SE)

1. Mehrstufen-Automatgetriebe, mit einer Antriebswelle (AN), einer Abtriebswelle (AB), einem Vorschaltradsatz (VS), einem Hauptradsatz (HS) und mindestens sechs Schaltelementen (A bis F), mit folgenden Merkmalen:
• der Vorschaltradsatz (VS) ist als Doppel-Planetenradsatz ausgebildet,
• ein Ausgangselement des Vorschaltradsatzes (VS) rotiert mit einer Drehzahl, die kleiner ist als die Eingangsdrehzahl der Antriebswelle (AN),
• ein Eingangselement des Vorschaltradsatzes (VS) ist ständig mit der Antriebswelle (AN) verbunden,
• ein Element des Vorschaltradsatzes (VS) ist mit einem Getriebegehäuse (GG) des Mehrstufen-Automatgetriebes verbunden,
• der Hauptradsatz (HS) ist als gekoppelter Planetenradsatz ausgebildet mit mehreren nicht miteinander gekoppelten Eingangselementen und einem Ausgangselement,
• das Ausgangselement des Hauptradsatzes (HS) ist ständig mit der Abtriebswelle (AB) verbunden,
• ein Eingangselement (120) des ersten Schaltelementes (A) ist mit dem Ausgangselement des Vorschaltradsatzes (VS) verbunden,
• ein Ausgangselement (130) des ersten Schaltelementes (A) ist mit einem zweiten Eingangselement des Hauptradsatzes (HS) verbunden,
• ein Eingangselement (220) des zweiten Schaltelementes (B) ist mit dem Ausgangselement des Vorschaltradsatzes (VS) verbunden,
• ein Ausgangselement (230) des zweiten Schaltelementes (B) ist mit einem ersten Eingangselement des Hauptradsatzes (HS) verbunden,
• ein Eingangselement des dritten Schaltelementes (C) ist mit dem Getriebegehäuse (GG) verbunden,
• ein Ausgangselement (330) des dritten Schaltelementes (C) ist mit dem ersten Eingangselement des Hauptradsatzes (HS) oder einem in einem Drehzahlplan zu diesem ersten Eingangselement benachbarten Eingangselement des Hauptradsatzes (HS) verbunden,
• ein Eingangselement des vierten Schaltelementes (D) ist mit dem Getriebegehäuse (GG) verbunden,
• ein Ausgangselement (430) des vierten Schaltelementes (D) ist mit einem dritten Eingangselement des Hauptradsatzes (HS) verbunden,
• ein Eingangselement (520) des fünften Schaltelementes (E) ist mit der Antriebswelle (AN) verbunden,
• ein Ausgangselement (530) des fünften Schaltelementes (E) ist mit dem dritten Eingangselement des Hauptradsatzes (HS) verbunden,
• ein Eingangselement (620) des sechsten Schaltelementes (F) ist mit der Antriebswelle (AN) verbunden,
• ein Ausgangselement (630) des sechsten Schaltelementes (F) ist mit dem ersten Eingangselement des Hauptradsatzes (HS) oder einem in dem Drehzahlplan zu diesem ersten Eingangselement benachbarten Eingangselement des Hauptradsatzes (HS) verbunden,
das sechste Schaltelement (F), insbesondere ein Lamellenpaket (600) dieses sechsten Schaltelementes (F) und eine Servoeinrichtung (610) zum Betätigen dieses Lamellenpaketes (600) des sechsten Schaltelementes (F) räumlich gesehen in einem Bereich axial zwischen Vorschaltradsatz (VS) und Hauptradsatz (HS) angeordnet ist, **dadurch gekennzeichnet,**
**dass** ein Druckraum (211) einer Servoeinrichtung (210) zum Betätigen eines Lamellenpaketes (200) des zweiten Schaltelementes (B) räumlich gesehen auf der dem Hauptradsatz (HS) abgewandten Seite des Vorschaltradsatzes (VS) angeordnet ist.

2. Mehrstufen-Automatgetriebe nach Anspruch 1, **dadurch gekennzeichnet, dass** das fünfte Schaltelement (E) unmittelbar an den Vorschaltradsatz (VS) angrenzt, auf der dem Hauptradsatz (HS) zugewandten Seite des Vorschaltradsatzes (VS).

3. Mehrstufen-Automatgetriebe nach Anspruch 1 oder 2, **dadurch gekennzeichnet, dass** das sechste Schaltelement (F), insbesondere das Lamellenpaket (600) und die Servoeinrichtung (610) dieses sechsten Schaltelementes (F), räumlich gesehen in einem Bereich axial zwischen dem fünften Schaltelement (E) und dem Hauptradsatz (HS) angeordnet ist.

4. Mehrstufen-Automatgetriebe nach Anspruch 1, 2 oder 3, **dadurch gekennzeichnet, dass** die Servoeinrichtung (610) des sechsten Schaltelementes (F) zumindest weitgehend innerhalb eines Zylinderraums angeordnet ist, der durch einen mit dem ersten Eingangselement des Hauptradsatzes (HS) verbundenen Außenlamellenträger des sechsten Schaltelementes (F) gebildet wird, wobei die Servoeinrichtung (610) des sechsten Schaltelementes (F) ständig mit Drehzahl des ersten Eingangselementes des Hauptradsatzes (HS) rotiert.

5. Mehrstufen-Automatgetriebe nach einem der Ansprüche 1 bis 4, **dadurch gekennzeichnet, dass** das Ausgangselement (630) des sechsten Schaltelementes (F) in einer zweiten Sonnenwelle (140) verdrehbar gelagert ist, über welche ein Ausgangselement (130) des ersten Schaltelementes (A) mit dem zweiten Eingangselement des Hauptradsatzes (HS) verbunden ist, wobei diese zweite Sonnenwelle (140) das Ausgangselement (630) des sechsten Schaltelementes (F) in axialer Richtung zentrisch durchgreift.

6. Mehrstufen-Automatgetriebe nach einem der Ansprüche 1 bis 5, **dadurch gekennzeichnet, dass** ein mit der Antriebswelle (AN) verbundenes Eingangselement (620) des sechsten Schaltelementes (F) den Vorschaltradsatz (VS) sowie das zweite, erste und fünfte Schaltelement (B, A, E) in axialer Richtung vollständig radial übergreift.

7. Mehrstufen-Automatgetriebe nach einem der Ansprüche 1 bis 6, **dadurch gekennzeichnet, dass** das dritte Schaltelement (C) benachbart zum sechsten Schaltelement (F) angeordnet ist.

8. Mehrstufen-Automatgetriebe nach einem der Ansprüche 1 bis 7, **dadurch gekennzeichnet, dass** sich das vierte Schaltelement (D) axial in Richtung Hauptradsatz (HS) gesehen an das dritte Schaltelement (C) anschließt, wobei Antriebswelle (AN) und Abtriebswelle (AB) koaxial zueinander verlaufen.

9. Mehrstufen-Automatgetriebe nach einem der Ansprüche 1 bis 8, **dadurch gekennzeichnet, dass** das vierte Schaltelement (D) näher am Hauptradsatz (HS) angeordnet ist als das dritte Schaltelement (C).

10. Mehrstufen-Automatgetriebe nach einem der Ansprüche 1 bis 7, **dadurch gekennzeichnet, dass** das vierte Schaltelement (D) auf der Seite dem Vorschaltradsatz (VS) abgewandten Seite des Hauptradsatzes (HS) angeordnet ist wobei Antriebswelle (AN) und Abtriebswelle (AB) nicht koaxial zueinander verlaufen.

11. Mehrstufen-Automatgetriebe nach Anspruch 1, **dadurch gekennzeichnet, dass** das sechste Schaltelement (F) unmittelbar an den Vorschaltradsatz (VS) angrenzt, auf der dem Hauptradsatz (HS) zugewandten Seite des Vorschaltradsatzes (VS).

12. Mehrstufen-Automatgetriebe nach Anspruch 1 oder 11, **dadurch gekennzeichnet, dass** die Servoeinrichtung (610) des sechsten Schaltelementes (F) innerhalb eines Kupplungsraumes angeordnet ist, der durch einen mit der Antriebswelle (AN) verbundenen Außenlamellenträger des sechsten Schaltelementes (F) gebildet wird, wobei die Servoeinrichtung (610) des sechsten Schaltelementes (F) ständig mit Drehzahl der Antriebswelle (AN) rotiert.

13. Mehrstufen-Automatgetriebe nach Anspruch 1, 11 oder 12, **dadurch gekennzeichnet, dass** das erste Schaltelement (A) räumlich gesehen in einem Bereich zumindest teilweise axial zwischen dem sechsten Schaltelement (F) und dem Hauptradsatz (HS) angeordnet ist, insbesondere dass eine Servoeinrichtung (110) des ersten Schaltelementes (A) räumlich gesehen in einem Bereich axial zwischen dem sechsten Schaltelement (F) und dem Hauptradsatz (HS) angeordnet ist.

14. Mehrstufen-Automatgetriebe nach Anspruch 1 oder einem der Ansprüche 11 bis 13, **dadurch gekennzeichnet, dass** ein Lamellenpaket (100) des ersten Schaltelementes (A) räumlich gesehen zumindest teilweise in einem Bereich radial über dem sechsten Schaltelement (F) angeordnet ist.

15. Mehrstufen-Automatgetriebe nach Anspruch 1 oder einem der Ansprüche 11 bis 14, **dadurch gekennzeichnet, dass** die Servoeinrichtung (110) des ersten Schaltelementes (A) ständig mit Drehzahl des zweiten Eingangselementes des Hauptradsatzes rotiert.

16. Mehrstufen-Automatgetriebe nach Anspruch 1 oder einem der Ansprüche 11 bis 15, **dadurch gekennzeichnet, dass** ein Druckraum einer Servoeinrichtung (510) des fünften Schaltelementes (E) auf der dem Hauptradsatz (HS) abgewandten Seite des Vorschaltradsatzes (VS) angeordnet ist und stets mit Drehzahl der Antriebswelle (AN) rotiert.

17. Mehrstufen-Automatgetriebe nach Anspruch 1 oder einem der Ansprüche 11 bis 14, **dadurch gekennzeichnet, dass** das fünfte Schaltelement (E) auf der dem Vorschaltradsatz (VS) abgewandten Seite des Hauptradsatzes (HS) angeordnet ist, insbesondere angrenzend an eine Außenstirnwand des Getriebegehäuses (GG).

18. Mehrstufen-Automatgetriebe nach Anspruch 1 oder einem der Ansprüche 11 bis 14, **dadurch gekennzeichnet, dass** das fünfte Schaltelement (E) in einem Bereich axial zwischen Vorschaltradsatz (VS) und Hauptradsatzes (HS) angeordnet ist, insbesondere unmittelbar angrenzend an den Vorschaltradsatz (VS).

19. Mehrstufen-Automatgetriebe nach einem der Ansprüche 1, 11 bis 14 oder 18, **dadurch gekennzeichnet, dass** das fünfte Schaltelement (E) räumlich gesehen radial über dem sechsten Schaltelement (F) angeordnet ist, insbesondere dass das Lamellenpaket (500) des fünften Schaltelementes (E) räumlich gesehen radial über dem Lamellenpaket (600) des sechsten Schaltelementes (F) angeordnet ist.

20. Mehrstufen-Automatgetriebe nach Anspruch einem der Ansprüche 1, 11 bis 14 oder 18, **dadurch gekennzeichnet, dass** das sechste Schaltelement (F) räumlich gesehen radial über dem fünften Schaltelement (E) angeordnet ist, insbesondere dass das Lamellenpaket (600) des sechsten Schaltelementes (F) räumlich gesehen radial über dem Lamellenpaket (500) des fünften Schaltelementes (E) angeordnet ist.

21. Mehrstufen-Automatgetriebe nach Anspruch 1 oder einem der Ansprüche 11 bis 20, **dadurch gekennzeichnet, dass** die Lamellenpakete (100, 200) des ersten und zweiten Schaltelementes (A, B) räumlich gesehen axial nebeneinander in einem Bereich zumindest teilweise radial über der aus dem fünften und sechsten Schaltelement (E, F) gebildeten Baugruppe angeordnet ist.

22. Mehrstufen-Automatgetriebe nach Anspruch 1 oder einem der Ansprüche 11 bis 20, **dadurch gekennzeichnet, dass** das zweite Schaltelement (B) innerhalb eines Zylinderraums angeordnet ist, der durch das Eingangselement (520) des fünften Schaltelementes (E) gebildet wird.

23. Mehrstufen-Automatgetriebe nach Anspruch 1 oder einem der Ansprüche 11 bis 22, **dadurch gekennzeichnet, dass** ein mit dem Ausgangselement des Vorschaltradsatzes (VS) verbundenes Eingangselement (220) des zweiten Schaltelementes (B) auf einer Nabe (523) des Eingangselementes (520) des fünften Schaltelementes (E) verdrehbar gelagert ist.

24. Mehrstufen-Automatgetriebe nach Anspruch 1 oder einem der Ansprüche 11 bis 23, **dadurch gekennzeichnet, dass** ein Lamellenpaket (200) des zweiten Schaltelementes (B) räumlich gesehen in einem Bereich zumindest teilweise radial über dem Vorschaltradsatz (VS) und/oder zumindest teilweise radial über dem sechsten Schaltelement (F) angeordnet ist, wobei ein mit dem ersten Eingangselement des Hauptradsatzes (HS) verbundenes Ausgangselement (230) des zweiten Schaltelementes (B) das sechste Schaltelement (F) in axialer Richtung radial übergreift.

25. Mehrstufen-Automatgetriebe nach Anspruch 1 oder einem der Ansprüche 11 bis 24, **dadurch gekennzeichnet, dass** sich axial in Richtung Hauptradsatz (HS) gesehen ein Lamellenpaket (400) des vierten Schaltelementes (D) axial an das Lamellenpaket (500) des fünften Schaltelementes (E) anschließt.

26. Mehrstufen-Automatgetriebe nach Anspruch 1 oder einem der Ansprüche 11 bis 25, **dadurch gekennzeichnet, dass** das dritte Schaltelement (C) auf der Seite dem Vorschaltradsatz (VS) abgewandten Seite des Hauptradsatzes (HS) angeordnet ist, wobei Antriebswelle (AN) und Abtriebswelle (AB) nicht koaxial zueinander verlaufen.

27. Mehrstufen-Automatgetriebe nach einem der Ansprüche 1 bis 26, **dadurch gekennzeichnet,**
**dass** der Vorschaltradsatz (VS) ein Sonnenrad (SO_VS), ein Hohlrad (HO_VS) sowie einen gekoppelten Steg (ST-VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und **dass** der Hauptradsatz (HS) als Zweisteg-Vierwellen-Getriebe in Bauart eines Ravigneaux-Radsatzes ausgeführt ist mit zwei Sonnenrädern (S1_HS, S2_HS), einem Hohlrad (HO_HS), sowie einem gekoppelten Steg (ST_HS), an dem lange Planetenräder (P1_HS) und kurze Planetenräder (P2_HS) verdrehbar gelagert sind, wobei
• die langen Planetenräder (P1_HS) des Hauptradsatzes (HS) mit dem Hohlrad (HO_HS) und dem ersten Sonnenrad (S1_HS) des Hauptradsatzes (HS) kämmen,
• die kurzen Planetenräder (P2_HS) des Hauptradsatzes (HS) mit den langen Planetenräder (P1_HS) und dem zweiten Sonnenrad (S2_HS) des Hauptradsatzes (HS) kämmen,
• das erste Sonnenrad (S1_HS) des Hauptradsatzes (HS) das erste Eingangselement des Hauptradsatzes (HS) bildet und mit den Ausgangselementen (230, 330, 630) des zweiten, dritten und sechsten Schaltelementes (B, C, F) verbunden ist,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der Steg (ST_HS) des Hauptradsatzes (HS) das dritte Eingangselement des Hauptradsatzes (HS) bildet und mit den Ausgangselementen (430, 530) des vierten und fünften Schaltelementes (D, E) verbunden ist, und
• das Hohlrad (HO_HS) des Hauptradsatzes (HS) das Ausgangselement des Hauptradsatzes (HS) bildet und mit der Abtriebswelle (AB) verbunden ist.

28. Mehrstufen-Automatgetriebe nach einem der Ansprüche 1 bis 26, **dadurch gekennzeichnet,**
**dass** der Vorschaltradsatz (VS) ein Sonnenrad (SO_VS), ein Hohlrad (HO_VS) sowie einen gekoppelten Steg (ST_VS), an dem innere und äußere Planetenräder (P1_VS, P2_VS) verdrehbar gelagert sind, aufweist, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse (GG) festgesetzt ist,
und **dass** der Hauptradsatz (HS) als Zweisteg-Vierwellen-Getriebe mit zwei gekoppelten Einzel-Planetenradsätzen ausgeführt ist, umfassend zwei Sonnenräder (S1_HS, S2_HS), zwei Hohlräder (H1_HS, H2_HS), einen ersten Steg (ST1_HS), an dem erste Planetenräder (PL_HS) verdrehbar gelagert sind, sowie einen gekoppelten zweiten Steg (ST2_HS), an dem innere und äußere Planetenräder (PLi_HS, PLa_HS) verdrehbar gelagert sind, wobei
• die ersten Planetenräder (PL_HS) des Hauptradsatzes (HS) mit dem ersten Hohlrad (H1_HS) und dem ersten Sonnenrad (S1_HS) des Hauptradsatzes (HS) kämmen,
• die inneren Planetenräder (PLi_HS) des Hauptradsatzes (HS) mit den äußeren Planetenräder (PLa_HS) und dem zweiten Sonnenrad (S2_HS) des Hauptradsatzes (HS) kämmen,
• die äußeren Planetenräder (PLa_HS) des Hauptradsatzes (HS) mit den inneren Planetenräder (PLi_HS) und dem zweiten Hohlrad (H2_HS) des Hauptradsatzes (HS) kämmen,
• das erste Sonnenrad (S1_HS) und der gekoppelte zweite Steg (ST2_HS) des Hauptradsatzes (HS) miteinander verbunden sind und das erste Eingangselement des Hauptradsatzes (HS) bilden und mit den Ausgangselementen (230, 330, 630) des zweiten, dritten und sechsten Schaltelementes (B, C, F) verbunden sind,
• das zweite Sonnenrad (S2_HS) des Hauptradsatzes (HS) das zweite Eingangselement des Hauptradsatzes (HS) bildet und mit dem Ausgangselement (130) des ersten Schaltelementes (A) verbunden ist,
• der erste Steg (ST1_HS) und das zweite Hohlrad (H2_HS) des Hauptradsatzes (HS) miteinander verbunden sind und das dritte Eingangselement des Hauptradsatzes (HS) bilden und mit den Ausgangselementen (430, 530) des vierten und fünften Schaltelementes (D, E) verbunden sind und
• das erste Hohlrad (H1_HS) des Hauptradsatzes (HS) das Ausgangselement des Hauptradsatzes (HS) bildet und mit der Abtriebswelle (AB) verbunden ist.

29. Mehrstufen-Automatgetriebe nach einem der Ansprüche 1 bis 26, **dadurch gekennzeichnet,**
**dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
• das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das erste und zweite Sonnenrad (S1_HS, S2_HS) des Hauptradsatzes (HS) fest miteinander verbunden sind und das erste Eingangselement des Hauptradsatzes (HS) bilden und mit den Ausgangselementen (230, 630) des zweiten und sechsten Schaltelementes (B, F) verbunden sind,
• das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
• der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das dritte Sonnenrad (S3_HS) des Hauptradsatzes (HS) ein viertes Eingangselement des Hauptradsatzes (HS) bildet und mit dem Ausgangselement (330) des dritten Schaltelementes (C) verbunden ist und
• das gekoppelte Hohlrad (H13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

30. Mehrstufen-Automatgetriebe nach einem der Ansprüche 1 bis 26, **dadurch gekennzeichnet,**
**dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
und **dass** der Hauptradsatz (HS) als reduziertes Dreisteg-Fünfwellen-Getriebe ausgeführt ist mit drei Sonnenrädern (S1_HS, S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
• das erste Sonnenrad (S1_HS) des Hauptradsatzes (HS) axial zwischen dem zweiten und dritten Sonnenrad (S2_HS, S3_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das erste und zweite Sonnenrad (S1_HS, S2_HS) des Hauptradsatzes (HS) fest miteinander verbunden sind und das erste Eingangselement des Hauptradsatzes (HS) bilden und mit dem Ausgangselement (230) des zweiten Schaltelementes (B) verbunden sind,
• das zweite Hohlrad (H2_HS) des Hauptradsatzes (HS) das zweite Eingangselement des Hauptradsatzes (HS) bildet und mit dem Ausgangselement (130) des ersten Schaltelementes (A) verbunden ist,
• der gekoppelte Steg (ST13_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das dritte Sonnenrad (S3_HS) des Hauptradsatzes (HS) ein viertes Eingangselement des Hauptradsatzes (HS) bildet und mit den Ausgangselementen (330, 630) des dritten und sechsten Schaltelementes (C, F) verbunden ist und
• das gekoppelte Hohlrad (H13_HS) und der zweite Steg (ST2_HS) des Hauptradsatzes (HS) fest miteinander verbunden sind und das Ausgangselement des Hauptradsatzes (HS) bilden und mit der Abtriebswelle (AB) verbunden sind.

31. Mehrstufen-Automatgetriebe nach Anspruch 29 oder 30, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine mit dem Ausgangselement (530) des fünften Schaltelementes (E) verdrehfest verbundene Nabe dieses Stegblechs oder eine mit diesem Stegblech und dem Ausgangselement (530) des fünften Schaltelementes (E) verdrehfest verbundene Stegwelle (540) entweder das erste und zweite Sonnenrad (S1_HS, S2_HS) des Hauptradsatzes (HS) oder aber das dritte Sonnenrad (S3_HS) des Hauptradsatzes (HS) in axialer Richtung zentrisch durchdringt.

32. Mehrstufen-Automatgetriebe nach einem der Ansprüche 1 bis 26, **dadurch gekennzeichnet,**
**dass** der Vorschaltradsatz (VS) ein Sonnenrad (SO_VS), ein Hohlrad (HO_VS) sowie einen gekoppelten Steg (ST_VS) aufweist, an dem innere und äußere Planetenräder (P1_VS, P2_VS) verdrehbar gelagert sind, wobei
• die inneren Planetenräder (P1_VS) des Vorschaltradsatzes (VS) mit dem Sonnenrad (SO_VS) und den äußeren Planetenrädern (P2_VS) des Vorschaltradsatzes (VS) kämmen,
• die äußeren Planetenräder (P2_VS) des Vorschaltradsatzes (VS) mit den inneren Planetenräder (P1_VS) und dem Hohlrad (HO_VS) des Vorschaltradsatzes (HS) kämmen,
• der Steg (ST_VS) des Vorschaltradsatzes (VS) das ständig mit der Antriebswelle (AN) verbundene Eingangselement des Vorschaltradsatzes (VS) bildet,
• das Hohlrad (HO_VS) des Vorschaltradsatzes (VS) das mit Eingangselementen des Hauptradsatzes (HS) verbindbare Ausgangselement des Vorschaltradsatzes (VS) bildet und
• das Sonnenrad (SO_VS) des Vorschaltradsatzes (VS) am Getriebegehäuse festgesetzt ist,
und **dass** der Hauptradsatz (HS) als reduziertes Dreisteg-Fünfwellen-Getriebe ausgeführt ist mit drei Sonnenrädern (S1_HS. S2_HS, S3_HS), einem gekoppelten Hohlrad (H13_HS), einem zweiten Hohlrad (H2_HS), einem gekoppelten Steg (ST13_HS) mit daran verdrehbar gelagerten langen Planetenrädern (P13_HS), sowie mit einem zweiten Steg (ST2_HS) mit daran verdrehbar gelagerten kurzen Planetenrädern (P2_HS), wobei
• das dritte Sonnenrad (S3_HS) des Hauptradsatzes (HS) axial zwischen dem ersten und zweiten Sonnenrad (S1_HS, S2_HS) des Hauptradsatzes (HS) angeordnet ist,
• die langen Planetenräder (P13_HS) des Hauptradsatzes (HS) mit dem gekoppelten Hohlrad (H13_HS) und dem ersten und dritten Sonnenrad (S1_HS, S3_HS) des Hauptradsatzes (HS) kämmen,
• die kurzen Planetenräder (P2_HS) des Hauptradsatzes (HS) mit dem zweiten Hohlrad (H2_HS) und dem zweiten Sonnenrad (S2_HS) des Hauptradsatzes (HS) kämmen,
• das erste Sonnenrad (S1_HS) des Hauptradsatzes (HS) das erste Eingangselement des Hauptradsatzes (HS) bildet und mit den Ausgangselementen (230, 630) des zweiten und sechsten Schaltelementes (B, F) verbunden ist,
• das gekoppelte Hohlrad (H13_HS) des Hauptradsatzes (HS) das zweite Eingangselement des Hauptradsatzes (HS) bildet und mit dem Ausgangselement (130) des ersten Schaltelementes (A) verbunden ist,
• der zweite Steg (ST2_HS) des Hauptradsatzes (HS) das dritte Eingangselement des Hauptradsatzes (HS) bildet und mit den Ausgangselementen (430, 530) des vierten und fünften Schaltelementes (D, E) verbunden ist,
• das zweite und dritte Sonnenrad (S2_HS, S3_HS) des Hauptradsatzes (HS) fest miteinander verbunden sind und ein viertes Eingangselement des Hauptradsatzes (HS) bilden und mit dem Ausgangselement (330) des dritten Schaltelementes (C) verbunden sind und
• der gekoppelte Steg (ST13_HS) und das zweite Hohlrad (H2_HS) des Hauptradsatzes (HS) fest miteinander verbunden sind und das Ausgangselement des Hauptradsatzes (HS) bilden und mit der Abtriebswelle (AB) verbunden sind.

33. Mehrstufen-Automatgetriebe nach Anspruch 32, **dadurch gekennzeichnet, dass** der gekoppelte Steg (ST13_HS) des Hauptradsatzes (HS) ein Stegblech aufweist, welches in radialer Richtung axial zwischen dem ersten und dritten Sonnenrad (S1_HS, S3_HS) des Hauptradsatzes (HS) nach innen hindurchgreift, wobei eine mit der Abtriebswelle (AB) des Automatgetriebes verdrehfest verbundene Nabe dieses Stegblechs oder die mit diesem Stegblech verdrehfest verbundene Abtriebswelle (AB) des Automatgetriebes entweder das zweite und dritte Sonnenrad (S2_HS, S3_HS) des Hauptradsatzes (HS) oder aber das erste Sonnenrad (S1_HS) des Hauptradsatzes (HS) in axialer Richtung zentrisch durchdringt.

34. Mehrstufen-Automatgetriebe nach einem der vorigen Ansprüche, **dadurch gekennzeichnet, dass** durch selektives Schließen der Schaltelemente (A bis F) zumindest acht Vorwärtsgänge derart schaltbar sind, dass eine Eingangsdrehzahl der Antriebswelle (AN) derart auf die Abtriebswelle (AB) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird,
wobei
• in einem ersten Vorwärtsgang das erste und vierte Schaltelement (A, D),
• in einem zweiten Vorwärtsgang das erste und dritte Schaltelement (A, C),
• in einem dritten Vorwärtsgang das erste und zweite Schaltelement (A, B),
• in einem vierten Vorwärtsgang das erste und sechste Schaltelement (A, F),
• in einem fünften Vorwärtsgang das erste und fünfte Schaltelement (A, E),
• in einem sechsten Vorwärtsgang das fünfte und sechste Schaltelement (E, F),
• in einem siebten Vorwärtsgang das zweite und fünfte Schaltelement (B, E)
• in einem achten Vorwärtsgang das dritte und fünfte Schaltelement (C, E) geschlossen sind,
und wobei in einem Rückwärtsgang das vierte Schaltelement (D) und zusätzlich entweder das zweite Schaltelement (B) oder das sechste Schaltelement (F) geschlossen sind.

## Claims (Claims for the following Contracting State(s): DE, FR, GB)

1. Multistage automatic transmission, comprising a drive shaft (AN), an output shaft (AB), a front-mounted gearset (VS), a main gearset (HS) and at least six shift elements (A to F), having the following features:
• the front-mounted gearset (VS) is realized as a double planetary gearset,
• an output element of the front-mounted gearset (VS) rotates at a rotational speed which is less than the input rotational speed of the drive shaft (AN),
• an input element of the front-mounted gearset (VS) is permanently connected to the drive shaft (AN),
• an element of the front-mounted gearset (VS) is connected to a transmission housing (GG) of the multistage automatic transmission,
• the main gearset (HS) is realized as a coupled planetary gearset which has a plurality of input elements that are not coupled to each other and has an output element,
• the output element of the main gearset (HS) is permanently connected to the output shaft (AB),
• an input element (120) of the first shift element (A) is connected to the output element of the front-mounted gearset (VS),
• an output element (130) of the first shift element (A) is connected to the second input element of the main gearset (HS),
• an input element (220) of the second shift element (B) is connected to the output element of the front-mounted gearset (VS),
• an output element (230) of the second shift element (B) is connected to the first input element of the main gearset (S),
• an input element of the third shift element (C) is connected to the transmission housing (GG),
• an output element (330) of the third shift element (C) is connected to the first input element of the main gearset (HS) or to an input element of the main gearset (HS) that is adjacent to this first input element in a rotational speed plan,
• an input element of the fourth shift element (D) is connected to the transmission housing (GG),
• an output element (430) of the fourth shift element (D) is connected to a third input element of the main gearset (HS),
• an input element (520) of the fifth shift element
(E) is connected to the drive shaft (AN),
• an output element (530) of the fifth shift element (E) is connected to the third input element of the main gearset (HS),
• an input element (620) of the sixth shift element
(F) is connected to the drive shaft (AN),
• an output element (630) of the sixth shift element (F) is connected to the first input element of the main gearset (HS) or to an input element of the main gearset (HS) that is adjacent to this first input element in a rotational speed plan,
**characterized in that**
• the sixth shift element (F), in particular a plate set (600) of this sixth shift element (F) and a servo device (610) for actuating this plate set (600) of the sixth shift element (F), is disposed, as viewed three-dimensionally, in a region axially between the front-mounted gearset (VS) and the main gearset (HS),
• a pressure chamber (211) of a servo device (210) for actuating a plate set (200) of the second shift element (B) is disposed, as viewed three-dimensionally, on that side of the front-mounted gearset (VS) which faces away from the main gearset (HS),
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
o the inner planet gears (P1_VS) of the front-mounted gearset (VS) meshing with the sun gear (SO_VS) and with the outer planet gears (P2_VS) of the front-mounted gearset (VS),
o the outer planet gears (P2_VS) of the front-mounted gearset (VS) meshing with the inner planet gears (P1_VS) and with the ring gear (HO_VS) of the front-mounted gearset (HS),
o the planet carrier (ST_VS) of the front-mounted gearset (VS) constituting the input element of the front-mounted gearset (VS) that is permanently connected to the drive shaft (AN),
o the ring gear (HO_VS) of the front-mounted gearset (VS) constituting the output element of the front-mounted gearset (VS) that can be connected to input elements of the main gearset (HS), and
o the sun gear (SO_VS) of the front-mounted gearset (VS) being fixed to the transmission housing (GG),
• the main gearset (HS) is realized as a two-planet-carrier, four-shaft transmission having two coupled single planetary gearsets, comprising two sun gears (S1_HS, S2_HS), two ring gears (H1_HS, H2_HS), a first planet carrier (ST1_HS) on which first planet gears (PL_HS) are rotatably mounted, as well as comprising a coupled second planet carrier (ST2_HS) on which inner and outer planet gears (PLi_HS, PLa_HS) are rotatably mounted,
o the first planet gears (PL_HS) of the main gearset (HS) meshing with the first ring gear (H1_HS) and with the first sun gear (S1_HS) of the main gearset (HS),
o the inner planet gears (PLi_HS) of the main gearset (HS) meshing with the outer planet gears (PLa_HS) and with the second sun gear (S2_HS) of the main gearset (HS),
o the outer planet gears (PLa_HS) of the main gearset (HS) meshing with the inner planet gears (PLi_HS) and with the second ring gear (H2_HS) of the main gearset (HS),
o the first sun gear (S1_HS) and the coupled planet carrier (ST2_HS) of the main gearset (HS) being connected to each other and constituting the first input element of the main gearset (HS), and being connected to the output elements (230, 330, 630) of the second, the third and the sixth shift element (B, C, F),
o the second sun gear (S2_HS) of the main gearset (HS) constituting the second input element of the main gearset (HS) and being connected to the output element (130) of the first shift element (A),
o the first planet carrier (ST1_HS) and the second ring gear (H2_HS) of the main gearset (HS) being connected to each other and constituting the third input element of the main gearset (HS), and being connected to the output elements (430, 530) of the fourth and the fifth shift element (D, E), and
o the first ring gear (H1_HS) of the main gearset (HS) constituting the output element of the main gearset (HS) and being connected to the output shaft (AB).

2. Multistage automatic transmission according to the preamble of Claim 1, **characterized in that**
• the sixth shift element (F), in particular a plate set (600) of this sixth shift element (F) and a servo device (610) for actuating this plate set (600) of the sixth shift element (F), is disposed, as viewed three-dimensionally, in a region axially between the front-mounted gearset (VS) and the main gearset (HS),
• a pressure chamber (211) of a servo device (210) for actuating a plate set (200) of the second shift element (B) is disposed, as viewed three-dimensionally, on that side of the front-mounted gearset (VS) which faces away from the main gearset (HS),
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
o the inner planet gears (P1_VS) of the front-mounted gearset (VS) meshing with the sun gear (SO_VS) and with the outer planet gears (P2_VS) of the front-mounted gearset (VS),
o the outer planet gears (P2_VS) of the front-mounted gearset (VS) meshing with the inner planet gears (P1_VS) and with the ring gear (HO_VS) of the front-mounted gearset (HS),
o the planet carrier (ST_VS) of the front-mounted gearset (VS) constituting the input element of the front-mounted gearset (VS) that is permanently connected to the drive shaft (AN),
o the ring gear (HO_VS) of the front-mounted gearset (VS) constituting the output element of the front-mounted gearset (VS) that can be connected to input elements of the main gearset (HS), and
o the sun gear (SO_VS) of the front-mounted gearset (VS) being fixed to the transmission housing,
• and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
o the first sun gear (S1_HS) of the main gearset (HS) being disposed axially between the second and the third sun gear (S2_HS, S3_HS) of the main gearset (HS),
o the long planet gears (P13_HS) of the main gearset (HS) meshing with the coupled ring gear (H13_HS) and with the first and the third sun gear (S1_HS, S3_HS) of the main gearset (HS),
o the short planet gears (P2_HS) of the main gearset (HS) meshing with the second ring gear (H2_HS) and with the second sun gear (S2_HS) of the main gearset (HS),
o the first and the second sun gear (S1_HS, S2_HS) of the main gearset (HS) being fixedly connected to each other and constituting the first input element of the main gearset (HS), and being connected to the output elements (230, 630) of the second and the sixth shift element (B, F),
o the second ring gear (H2_HS) of the main gearset (HS) constituting the second input element of the main gearset (HS), and being connected to the output element (130) of the first shift element (A),
o the coupled planet carrier (ST13_HS) of the main gearset (HS) constituting the third input element of the main gearset (HS), and being connected to the output elements (430, 530) of the fourth and the fifth shift element (D, E),
o the third sun gear (S3_HS) of the main gearset (HS) constituting a fourth input element of the main gearset (HS), and being connected to the output element (330) of the third shift element (C), and
o the coupled ring gear (H13_HS) and the second planet carrier (ST2_HS) of the main gearset (HS) being fixedly connected to each other and constituting the output element of the main gearset (HS), and being connected to the output shaft (AB).

3. Multistage automatic transmission according to the preamble of Claim 1, **characterized in that**
• the sixth shift element (F), in particular a plate set (600) of this sixth shift element (F) and a servo device (610) for actuating this plate set (600) of the sixth shift element (F), is disposed, as viewed three-dimensionally, in a region axially between the front-mounted gearset (VS) and the main gearset (HS),
• a pressure chamber (211) of a servo device (210) for actuating a plate set (200) of the second shift element (B) is disposed, as viewed three-dimensionally, on that side of the front-mounted gearset (VS) which faces away from the main gearset (HS),
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
o the inner planet gears (P1_VS) of the front-mounted gearset (VS) meshing with the sun gear (SO_VS) and with the outer planet gears (P2_VS) of the front-mounted gearset (VS),
o the outer planet gears (P2_VS) of the front-mounted gearset (VS) meshing with the inner planet gears (P1_VS) and with the ring gear (HO_VS) of the front-mounted gearset (HS),
o the planet carrier (ST_VS) of the front-mounted gearset (VS) constituting the input element of the front-mounted gearset (VS) that is permanently connected to the drive shaft (AN),
o the ring gear (HO_VS) of the front-mounted gearset (VS) constituting the output element of the front-mounted gearset (VS) that can be connected to input elements of the main gearset (HS), and
o the sun gear (SO_VS) of the front-mounted gearset (VS) being fixed to the transmission housing,
• and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
o the first sun gear (S1_HS) of the main gearset (HS) being disposed axially between the second and the third sun gear (S2_HS, S3_HS) of the main gearset (HS),
o the long planet gears (P13_HS) of the main gearset (HS) meshing with the coupled ring gear (H13_HS) and with the first and the third sun gear (S1_HS, S3_HS) of the main gearset (HS),
o the short planet gears (P2_HS) of the main gearset (HS) meshing with the second ring gear (H2_HS) and with the second sun gear (S2_HS) of the main gearset (HS),
o the first and the second sun gear (S1_HS, S2_HS) of the main gearset (HS) being fixedly connected to each other and constituting the first input element of the main gearset (HS), and being connected to the output element (230) of the second shift element (B),
o the second ring gear (H2_HS) of the main gearset (HS) constituting the second input element of the main gearset (HS), and being connected to the output element (130) of the first shift element (A),
o the coupled planet carrier (ST13_HS) of the main gearset (HS) constituting the third input element of the main gearset (HS), and being connected to the output elements (430, 530) of the fourth and the fifth shift element (D, E),
o the third sun gear (S3_HS) of the main gearset (HS) constituting a fourth input element of the main gearset (HS), and being connected to the output elements (330, 630) of the third and the sixth shift element (C, F), and
o the coupled ring gear (H13_HS) and the second planet carrier (ST2_HS) of the main gearset (HS) being fixedly connected to each other and constituting the output element of the main gearset (HS), and being connected to the output shaft (AB).

4. Multistage automatic transmission according to either of Claims 2 or 3, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub of this planet-carrier plate that is connected in a rotationally rigid manner to the output element (530) of the fifth shift element (E), or a planet-carrier shaft (540) that is connected in a rotationally rigid manner to this planet-carrier plate and to the output element (530) extending centrally through either the first and the second sun gear (S1_HS, S2_HS) of the main gearset (HS) or, alternatively, the third sun gear (S3_HS) of the main gearset (HS), in the axial direction.

5. Multistage automatic transmission according to the preamble of Claim 1, **characterized in that**
• the sixth shift element (F), in particular a plate set (600) of this sixth shift element (F) and a servo device (610) for actuating this plate set (600) of the sixth shift element (F), is disposed, as viewed three-dimensionally, in a region axially between the front-mounted gearset (VS) and the main gearset (HS),
• a pressure chamber (211) of a servo device (210) for actuating a plate set (200) of the second shift element (B) is disposed, as viewed three-dimensionally, on that side of the front-mounted gearset (VS) which faces away from the main gearset (HS),
• the front-mounted gearset (VS) has a sun gear (SO_VS), a ring gear (HO_VS), and a coupled planet carrier (ST_VS) on which inner and outer planet gears (P1_VS, P2_VS) are rotatably mounted,
o the inner planet gears (P1_VS) of the front-mounted gearset (VS) meshing with the sun gear (SO_VS) and with the outer planet gears (P2_VS) of the front-mounted gearset (VS),
o the outer planet gears (P2_VS) of the front-mounted gearset (VS) meshing with the inner planet gears (P1_VS) and with the ring gear (HO_VS) of the front-mounted gearset (HS),
o the planet carrier (ST_VS) of the front-mounted gearset (VS) constituting the input element of the front-mounted gearset (VS) that is permanently connected to the drive shaft (AN),
o the ring gear (HO_VS) of the front-mounted gearset (VS) constituting the output element of the front-mounted gearset (VS) that can be connected to input elements of the main gearset (HS), and
o the sun gear (SO_VS) of the front-mounted gearset (VS) being fixed to the transmission housing,
• and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
o the third sun gear (S3_HS) of the main gearset (HS) being disposed axially between the first and the second sun gear (S1_HS, S2_HS) of the main gearset (HS),
o the long planet gears (P13_HS) of the main gearset (HS) meshing with the coupled ring gear (H13_HS) and with the first and the third sun gear (S1_HS, S3_HS) of the main gearset (HS),
o the short planet gears (P2_HS) of the main gearset (HS) meshing with the second ring gear (H2_HS) and with the second sun gear (S2_HS) of the main gearset (HS),
o the first sun gear (S1_HS) of the main gearset (HS) constituting the first input element of the main gearset (HS), and being connected to the output elements (230, 630) of the second and the sixth shift element (B, F),
o the coupled ring gear (H13_HS) of the main gearset (HS) constituting the second input element of the main gearset (HS), and being connected to the output element (130) of the first shift element (A),
o the second planet carrier (ST2_HS) of the main gearset (HS) constituting the third input element of the main gearset (HS), and being connected to the output elements (430, 530) of the fourth and the fifth shift element (D, E),
o the second and the third sun gear (S2_HS, S3_HS) of the main gearset (HS) being fixedly connected to each other and constituting a fourth input element of the main gearset (HS), and being connected to the output element (330) of the third shift element (C), and
o the coupled planet carrier (ST13_HS) and the second ring gear (H2_HS) of the main gearset (HS) being fixedly connected to each other and constituting the output element of the main gearset (HS), and being connected to the output shaft (AB).

6. Multistage automatic transmission according to Claim 5, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub of this planet-carrier plate that is connected in a rotationally rigid manner to the output shaft (AB) of the automatic transmission, or the output shaft (AB) of the automatic transmission that is connected in a rotationally rigid manner to this planet-carrier plate extending centrally through either the second and the third sun gear (S2_HS, S3_HS) of the main gearset (HS) or, alternatively, the first sun gear (S1-HS) of the main gearset (HS), in the axial direction.

7. Multistage automatic transmission according to any one of Claims 1 to 6, **characterized in that** the fifth shift element (E) is directly adjacent to the front-mounted gearset (VS), on that side of the front-mounted gearset (VS) which faces towards the main gearset (HS).

8. Multistage automatic transmission according to any one of Claims 1 to 7, **characterized in that** the sixth shift element (F), in particular the plate set (600) and the servo device (610) of this sixth shift element (F) is disposed, as viewed three-dimensionally, in a region axially between the fifth shift element (E) and the main gearset (HS).

9. Multistage automatic transmission according to any one of Claims 1 to 8, **characterized in that** the servo device (610) of the sixth shift element (F) is disposed, at least to a large extent, within a cylindrical chamber constituted by a plate carrier of the sixth shift element (F), which plate carrier is connected to the first input element of the main gearset (HS), the servo device (610) of the sixth shift element (F) always rotating at the rotational speed of the first input element of the main gearset (HS).

10. Multistage automatic transmission according to any one of Claims 1 to 9, **characterized in that** the output element (630) of the sixth shift element (F) is rotatably mounted in a second sun shaft (14) via which an output element (130) of the first shift element (A) is connected to the second input element of the main gearset (HS), this second sun shaft (140) extending centrally through the output element (630) of the sixth shift element (F) in the axial direction.

11. Multistage automatic transmission according to any one of Claims 1 to 10, **characterized in that** an input element (620) of the sixth shift element (F), which input element is connected to the drive shaft (AN), overlaps radially in their entirety the front-mounted gearset (VS) and the second, the first and the fifth shift element (B, A, E) in the axial direction.

12. Multistage automatic transmission according to any one of Claims 1 to 11, **characterized in that** the third shift element (C) is disposed adjacently to the sixth shift element (F).

13. Multistage automatic transmission according to any one of Claims 1 to 12, **characterized in that** the fourth shift element (D) adjoins the third shift element (C), as viewed axially in the direction of the main gearset (HS), the drive shaft (AN) and the output shaft (AB) extending coaxially with each other.

14. Multistage automatic transmission according to any one of Claims 1 to 13, **characterized in that** the fourth shift element (D) is disposed closer to the main gearset (HS) than is the third shift element (C).

15. Multistage automatic transmission according to any one of Claims 1 to 12, **characterized in that** the fourth shift element (D) is disposed on that side of the main gearset (HS) which faces away from the front-mounted gearset (VS), the drive shaft (AN) and the output shaft (AB) not extending coaxially with each other.

16. Multistage automatic transmission according to any one of Claims 1 to 6, **characterized in that** the sixth shift element (F) is directly adjacent to the front-mounted gearset (VS), on that side of the front-mounted gearset (VS) which faces towards the main gearset (HS).

17. Multistage automatic transmission according to any one of Claims 1 to 6 or 16, **characterized in that** the servo device (610) of the sixth shift element (F) is disposed within a clutch chamber constituted by a plate carrier of the sixth shift element (F), which plate carrier is connected to the drive shaft (AN), the servo device (610) of the sixth shift element (F) always rotating at the rotational speed of the drive shaft (AN).

18. Multistage automatic transmission according to any one of Claims 1 to 6 or 16 or 17, **characterized in that** the first shift element (A) is disposed, as viewed three-dimensionally, in a region at least partially axially between the sixth shift element (F) and the main gearset (HS), in particular a servo device (110) of the first shift element (A) is disposed, as viewed three-dimensionally, in a region axially between the sixth shift element (F) and the main gearset (HS).

19. Multistage automatic transmission according to any one of Claims 1 to 6 or any one of Claims 16 to 18, **characterized in that** a plate set (100) of the first shift element (A) is disposed, as viewed three-dimensionally, at least partially in a region radially over the sixth shift element (F).

20. Multistage automatic transmission according to any one of Claims 1 to 6 or any one of Claims 16 to 19, **characterized in that** the servo device (110) of the first shift element (A) always rotates at the rotational speed of the second input element of the main gearset.

21. Multistage automatic transmission according to any one of Claims 1 to 6 or any one of Claims 16 to 20, **characterized in that** a pressure chamber of a servo device (510) of the fifth shift element (E) is disposed on that side of the front-mounted gearset (VS) which faces away from the main gearset (HS), and always rotates at the rotational speed of the drive shaft (AN).

22. Multistage automatic transmission according to any one of Claims 1 to 6 or any one of Claims 16 to 19, **characterized in that** the fifth shift element (E) is disposed on that side of the main gearset (HS) which faces away from the front-mounted gearset (VS), in particular adjacent to an outer end wall of the transmission housing (GG).

23. Multistage automatic transmission according to any one of Claims 1 to 6 or any one of Claims 16 to 19, **characterized in that** the fifth shift element (E) is disposed in a region axially between the front-mounted gearset (VS) and the main gearset (HS), in particular directly adjacent to the front-mounted gearset (VS).

24. Multistage automatic transmission according to any one of Claims 1 to 6 or any one of Claims 16 to 19 or 23, **characterized in that** the fifth shift element (E) is disposed, as viewed three-dimensionally, radially over the sixth shift element (F), in particular the plate set (500) of the fifth shift element (E) is disposed, as viewed three-dimensionally, radially over the plate set (600) of the sixth shift element (F).

25. Multistage automatic transmission according to any one of Claims 1 to 6 or any one of Claims 16 to 19 or 23, **characterized in that** the sixth shift element (F) is disposed, as viewed three-dimensionally, radially over the fifth shift element (E), in particular the plate set (600) of the sixth shift element (F) is disposed, as viewed three-dimensionally, radially over the plate set (500) of the fifth shift element (E).

26. Multistage automatic transmission according to any one of Claims 1 to 6 or any one of Claims 16 to 25, **characterized in that** the plate sets (100, 200) of the first and the second shift element (A, B) are disposed, as viewed three-dimensionally, axially next to each other in a region at least partially radially over the assembly constituted by the fifth and the sixth shift element (E, F).

27. Multistage automatic transmission according to any one of Claims 1 to 6 or any one of Claims 16 to 25, **characterized in that** the second shift element (B) is disposed within a cylindrical chamber constituted by the input element (520) of the fifth shift element (E).

28. Multistage automatic transmission according to any one of Claims 1 to 6 or any one of Claims 16 to 27, **characterized in that** an input element (220) of the second shift element (B), which input element is connected to the output element of the front-mounted gearset (VS), is rotatably mounted on a hub (523) of the input element (520) of the fifth shift element (E).

29. Multistage automatic transmission according to any one of Claims 1 to 6 or any one of Claims 16 to 28, **characterized in that** a plate set (200) of the second shift element (B) is disposed, as viewed three-dimensionally, in a region at least partially radially over the front-mounted gearset (VS) and/or at least partially radially over the sixth shift element (F), an output element (230) of the second shift element (B), which output element is connected to the first input element of the main gearset (HS), overlapping radially the sixth shift element (F) in the axial direction.

30. Multistage automatic transmission according to any one of Claims 1 to 6 or any one of Claims 16 to 29, **characterized in that**, as viewed axially in the direction of the main gearset (HS), a plate set (400) of the fourth shift element (D) axially adjoins the plate set (500) of the fifth shift element (E).

31. Multistage automatic transmission according to any one of Claims 1 to 6 or any one of Claims 16 to 30, **characterized in that** the third shift element (C) is disposed on that side of the main gearset (HS) which faces away from the front-mounted gearset (VS), the drive shaft (AN) and the output shaft (AB) not extending coaxially with each other.

32. Multistage automatic transmission according to any one of the preceding claims, **characterized in that**, through selective closing of the shift elements (A to F), at least eight forward gears can be shifted in such a way that an input rotational speed of the drive shaft (AN) can be transmitted to the output shaft (AB) in such a way that, for the purpose of shifting from one gear to the sequentially next higher or sequentially next lower gear, of the shift element just then actuated respectively only one shift element is opened, and a further shift element is closed, wherein
• in a first forward gear the first and the fourth shift element (A, D) are closed,
• in a second forward gear the first and the third shift element (A, C) are closed,
• in a third forward gear the first and the second shift element (A, B) are closed,
• in the fourth forward gear the first and the sixth shift element (A, F) are closed,
• in a fifth forward gear the first and the fifth shift element (A, E) are closed,
• in a sixth forward gear the fifth and the sixth shift element (E, F) are closed,
• in a seventh forward gear the second and the fifth shift element (B, E) are closed, and
• in an eighth forward gear the third and the fifth shift element (C, E) are closed,
and wherein in a reverse gear the fourth shift element (D) and, in addition, either the second shift element (B) or the sixth shift element (F) are closed.

## Claims (Claims for the following Contracting State(s): AT, BE, CH, DK, ES, GR, IT, LI, LU, MC, NL, SE)

1. Multistage automatic transmission, comprising a drive shaft (AN), an output shaft (AB), a front-mounted gearset (VS), a main gearset (HS) and at least six shift elements (A to F), having the following features:
• the front-mounted gearset (VS) is realized as a double planetary gearset,
• an output element of the front-mounted gearset (VS) rotates at a rotational speed which is less than the input rotational speed of the drive shaft (AN),
• an input element of the front-mounted gearset (VS) is permanently connected to the drive shaft (AN),
• an element of the front-mounted gearset (VS) is connected to a transmission housing (GG) of the multistage automatic transmission,
• the main gearset (HS) is realized as a coupled planetary gearset which has a plurality of input elements that are not coupled to each other and has an output element,
• the output element of the main gearset (HS) is permanently connected to the output shaft (AB),
• an input element (120) of the first shift element (A) is connected to the output element of the front-mounted gearset (VS),
• an output element (130) of the first shift element (A) is connected to the second input element of the main gearset (HS),
• an input element (220) of the second shift element (B) is connected to the output element of the front-mounted gearset (VS),
• an output element (230) of the second shift element (B) is connected to the first input element of the main gearset (S),
• an input element of the third shift element (C) is connected to the transmission housing (GG),
• an output element (330) of the third shift element (C) is connected to the first input element of the main gearset (HS) or to an input element of the main gearset (HS) that is adjacent to this first input element in a rotational speed plan,
• an input element of the fourth shift element (D) is connected to the transmission housing (GG),
• an output element (430) of the fourth shift element (D) is connected to a third input element of the main gearset (HS),
• an input element (520) of the fifth shift element (E) is connected to the drive shaft (AN),
• an output element (530) of the fifth shift element (E) is connected to the third input element of the main gearset (HS),
• an input element (620) of the sixth shift element (F) is connected to the drive shaft (AN),
• an output element (630) of the sixth shift element (F) is connected to the first input element of the main gearset (HS) or to an input element of the main gearset (HS) that is adjacent to this first input element in a rotational speed plan,
the sixth shift element (F), in particular a plate set (600) of this sixth shift element (F) and a servo device (610) for actuating this plate set (600) of the sixth shift element (F), is disposed, as viewed three-dimensionally, in a region axially between the front-mounted gearset (VS) and the main gearset (HS),
**characterized in that**
a pressure chamber (211) of a servo device (210) for actuating a plate set (200) of the second shift element (B) is disposed, as viewed three-dimensionally, on that side of the front-mounted gearset (VS) which faces away from the main gearset (HS).

2. Multistage automatic transmission according to Claim 1, **characterized in that** the fifth shift element (E) is directly adjacent to the front-mounted gearset (VS), on that side of the front-mounted gearset (VS) which faces towards the main gearset (HS).

3. Multistage automatic transmission according to either of Claims 1 or 2, **characterized in that** the sixth shift element (F), in particular the plate set (600) and the servo device (610) of this sixth shift element (F) is disposed, as viewed three-dimensionally, in a region axially between the fifth shift element (E) and the main gearset (HS).

4. Multistage automatic transmission according to any one of Claims 1, 2 or 3, **characterized in that** the servo device (610) of the sixth shift element (F) is disposed, at least to a large extent, within a cylindrical chamber constituted by an outer plate carrier of the sixth shift element (F), which outer plate carrier is connected to the first input element of the main gearset (HS), the servo device (610) of the sixth shift element (F) always rotating at the rotational speed of the first input element of the main gearset (HS).

5. Multistage automatic transmission according to any one of Claims 1 to 4, **characterized in that** the output element (630) of the sixth shift element (F) is rotatably mounted in a second sun shaft (140) via which an output element (130) of the first shift element (A) is connected to the second input element of the main gearset (HS), this second sun shaft (140) extending centrally through the output element (630) of the sixth shift element (F) in the axial direction.

6. Multistage automatic transmission according to any one of Claims 1 to 5, **characterized in that** an input element (620) of the sixth shift element (F), which input element is connected to the drive shaft (AN), overlaps radially in their entirety the front-mounted gearset (VS) and the second, the first and the fifth shift element (B, A, E) in the axial direction.

7. Multistage automatic transmission according to any one of Claims 1 to 6, **characterized in that** the third shift element (C) is disposed adjacently to the sixth shift element (F).

8. Multistage automatic transmission according to any one of Claims 1 to 7, **characterized in that** the fourth shift element (D) adjoins the third shift element (C), as viewed axially in the direction of the main gearset (HS), the drive shaft (AN) and the output shaft (AB) extending coaxially with each other.

9. Multistage automatic transmission according to any one of Claims 1 to 8, **characterized in that** the fourth shift element (D) is disposed closer to the main gearset (HS) than is the third shift element (C).

10. Multistage automatic transmission according to any one of Claims 1 to 7, **characterized in that** the fourth shift element (D) is disposed on that side of the main gearset (HS) which faces away from the front-mounted gearset (VS), the drive shaft (AN) and the output shaft (AB) not extending coaxially with each other.

11. Multistage automatic transmission according to Claim 1, **characterized in that** the sixth shift element (F) is directly adjacent to the front-mounted gearset (VS), on that side of the front-mounted gearset (VS) which faces towards the main gearset (HS).

12. Multistage automatic transmission according to Claim 1 or 11, **characterized in that** the servo device (610) of the sixth shift element (F) is disposed within a clutch chamber constituted by an outer plate carrier of the sixth shift element (F), which outer plate carrier is connected to the drive shaft (AN), the servo device (610) of the sixth shift element (F) always rotating at the rotational speed of the drive shaft (AN).

13. Multistage automatic transmission according to Claim 1, 11 or 12, **characterized in that** the first shift element (A) is disposed, as viewed three-dimensionally, in a region at least partially axially between the sixth shift element (F) and the main gearset (HS), in particular a servo device (110) of the first shift element (A) is disposed, as viewed three-dimensionally, in a region axially between the sixth shift element (F) and the main gearset (HS).

14. Multistage automatic transmission according to Claim 1 or any one of Claims 11 to 13, **characterized in that** a plate set (100) of the first shift element (A) is disposed, as viewed three-dimensionally, at least partially in a region radially over the sixth shift element (F).

15. Multistage automatic transmission according to Claim 1 or any one of Claims 11 to 14, **characterized in that** the servo device (110) of the first shift element (A) always rotates at the rotational speed of the second input element of the main gearset.

16. Multistage automatic transmission according to Claim 1 or any one Claims 11 to 15, **characterized in that** a pressure chamber of a servo device (510) of the fifth shift element (E) is disposed on that side of the front-mounted gearset (VS) which faces away from the main gearset (HS), and always rotates at the rotational speed of the drive shaft (AN).

17. Multistage automatic transmission according to Claim 1 or any one of Claims 11 to 14, **characterized in that** the fifth shift element (E) is disposed on that side of the main gearset (HS) which faces away from the front-mounted gearset (VS), in particular adjacent to an outer end wall of the transmission housing (GG).

18. Multistage automatic transmission according to Claim 1 or any one of Claims 11 to 14, **characterized in that** the fifth shift element (E) is disposed in a region axially between the front-mounted gearset (VS) and the main gearset (HS), in particular directly adjacent to the front-mounted gearset (VS).

19. Multistage automatic transmission according to any one of Claims 1, 11 to 14 or 18, **characterized in that** the fifth shift element (E) is disposed, as viewed three-dimensionally, radially over the sixth shift element (F), in particular the plate set (500) of the fifth shift element (E) is disposed, as viewed three-dimensionally, radially over the plate set (600) of the sixth shift element (F).

20. Multistage automatic transmission according to any one of Claims 1, 11 to 14 or 18, **characterized in that** the sixth shift element (F) is disposed, as viewed three-dimensionally, radially over the fifth shift element (E), in particular the plate set (600) of the sixth shift element (F) is disposed, as viewed three-dimensionally, radially over the plate set (500) of the fifth shift element (E).

21. Multistage automatic transmission according to Claim 1 or any one of Claims 11 to 20, **characterized in that** the plate sets (100, 200) of the first and the second shift element (A, B) are disposed, as viewed three-dimensionally, axially next to each other in a region at least partially radially over the assembly constituted by the fifth and the sixth shift element (E, F).

22. Multistage automatic transmission according to Claim 1 or any one of Claims 11 to 20, **characterized in that** the second shift element (B) is disposed within a cylindrical chamber constituted by the input element (520) of the fifth shift element (E).

23. Multistage automatic transmission according to Claim 1 or any one of Claims 11 to 22, **characterized in that** an input element (220) of the second shift element (B), which input element is connected to the output element of the front-mounted gearset (VS), is rotatably mounted on a hub (523) of the input element (520) of the fifth shift element (E).

24. Multistage automatic transmission according to Claim 1 or any one of Claims 11 to 23, **characterized in that** a plate set (200) of the second shift element (B) is disposed, as viewed three-dimensionally, in a region at least partially radially over the front-mounted gearset (VS) and/or at least partially radially over the sixth shift element (F), an output element (230) of the second shift element (B), which output element is connected to the first input element of the main gearset (HS), overlapping radially the sixth shift element (F) in the axial direction.

25. Multistage automatic transmission according to Claim 1 or any one of Claims 11 to 24, **characterized in that**, as viewed axially in the direction of the main gearset (HS), a plate set (400) of the fourth shift element (D) axially adjoins the plate set (500) of the fifth shift element (E).

26. Multistage automatic transmission according to Claim 1 or any one of Claims 11 to 25, **characterized in that** the third shift element (C) is disposed on that side of the main gearset (HS) which faces away from the front-mounted gearset (VS), the drive shaft (AN) and the output shaft (AB) not extending coaxially with each other.

27. Multistage automatic transmission according to any one of Claims 1 to 26, **characterized in that**
the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) meshing with the sun gear (SO_VS) and with the outer planet gears (P2_VS) of the front-mounted gearset (VS),
• the outer planet gears (P2_VS) of the front-mounted gearset (VS) meshing with the inner planet gears (P1_VS) and with the ring gear (HO_VS) of the front-mounted gearset (HS),
• the planet carrier (ST_VS) of the front-mounted gearset (VS) constituting the input element of the front-mounted gearset (VS) that is permanently connected to the drive shaft (AN),
• the ring gear (HO_VS) of the front-mounted gearset (VS) constituting the output element of the front-mounted gearset (VS) that can be connected to input elements of the main gearset (HS), and
• the sun gear (SO_VS) of the front-mounted gearset (VS) being fixed to the transmission housing (GG),
and the main gearset (HS) is realized as a two-planet-carrier, four-shaft transmission in the structural form of a Ravigneaux gearset having two sun gears (S1_HS, S2_HS), a ring gear (HO_HS), and a coupled planet carrier ST_HS) on which long planet gears (P1_HS) and short planet gears (P2_HS) are rotatably mounted,
• the long planet gears (P1_HS) of the main gearset (HS) meshing with the ring gear (HO_HS) and with the first sun gear (S1_HS) of the main gearset (HS),
• the short planet gears (P2_HS) of the main gearset (HS) meshing with the long planet gears (P1_HS) and with the second sun gear (S2_HS) of the main gearset (HS),
• the first sun gear (S1_HS) of the main gearset (HS) constituting the first input element of the main gearset (HS), and being connected to the output elements (230, 330, 630) of the second, the third and the sixth shift element (B, C, F),
• the second sun gear (S2_HS) of the main gearset (HS) constitutes the second input element of the main gearset (HS), and is connected to the output element (130) of the first shift element (A),
• the planet carrier (ST_HS) of the main gearset (HS) constitutes the third input element of the main gearset (HS), and is connected to the output elements (430, 530) of the fourth and the fifth shift element (D, E), and
• the ring gear (HO_HS) of the main gearset (HS) constitutes the output element of the main gearset (HS), and is connected to the output shaft (AB).

28. Multistage automatic transmission according to any one of Claims 1 to 26, **characterized in that**
the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) meshing with the sun gear (SO_VS) and with the outer planet gears (P2_VS) of the front-mounted gearset (VS),
• the outer planet gears (P2_VS) of the front-mounted gearset (VS) meshing with the inner planet gears (P1_VS) and with the ring gear (HO_VS) of the front-mounted gearset (HS),
• the planet carrier (ST_VS) of the front-mounted gearset (VS) constituting the input element of the front-mounted gearset (VS) that is permanently connected to the drive shaft (AN),
• the ring gear (HO_VS) of the front-mounted gearset (VS) constituting the output element of the front-mounted gearset (VS) that can be connected to input elements of the main gearset (HS), and
• the sun gear (SO_VS) of the front-mounted gearset (VS) being fixed to the transmission housing (GG), and the main gearset (HS) is realized as a two-planet-carrier, four-shaft transmission having two coupled single planetary gearsets, comprising two sun gears (S1_HS, S2_HS), two ring gears (H1_HS, H2_HS), a first planet carrier (ST1_HS) on which first planet gears (PL_HS) are rotatably mounted, as well as comprising a coupled second planet carrier (ST2_HS) on which inner and outer planet gears (PLi_HS, PLa_HS) are rotatably mounted,
• the first planet gears (PL_HS) of the main gearset (HS) meshing with the first ring gear (H1_HS) and with the first sun gear (S1_HS) of the main gearset (HS),
• the inner planet gears (PLi_HS) of the main gearset (HS) meshing with the outer planet gears (PLa_RS) and with the second sun gear (S2_HS) of the main gearset (HS),
• the outer planet gears (PLa_HS) of the main gearset (HS) meshing with the inner planet gears (PLi_HS) and with the second ring gear (H2_HS) of the main gearset (HS),
• the first sun gear (S1_HS) and the coupled second planet carrier (ST2_HS) of the main gearset (HS) being connected to each other and constituting the first input element of the main gearset (HS), and being connected to the output elements (230, 330, 630) of the second, the third and the sixth shift element (B, C, F),
• the second sun gear (S2_HS) of the main gearset (HS) constituting the second input element of the main gearset (HS) and being connected to the output element (130) of the first shift element (A),
• the first planet carrier (ST1_HS) and the second ring gear (H2_HS) of the main gearset (HS) being connected to each other and constituting the third input element of the main gearset (HS), and being connected to the output elements (430, 530) of the fourth and the fifth shift element (D, E), and
• the first ring gear (H1_HS) of the main gearset (HS) constituting the output element of the main gearset (HS) and being connected to the output shaft (AB).

29. Multistage automatic transmission according to any one of Claims 1 to 26, **characterized in that**
the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) meshing with the sun gear (SO_VS) and with the outer planet gears (P2_VS) of the front-mounted gearset (VS),
• the outer planet gears (P2_VS) of the front-mounted gearset (VS) meshing with the inner planet gears (P1_VS) and with the ring gear (HO_VS) of the front-mounted gearset (HS),
• the planet carrier (ST_VS) of the front-mounted gearset (VS) constituting the input element of the front-mounted gearset (VS) that is permanently connected to the drive shaft (AN),
• the ring gear (HO_VS) of the front-mounted gearset (VS) constituting the output element of the front-mounted gearset (VS) that can be connected to input elements of the main gearset (HS), and
• the sun gear (SO_VS) of the front-mounted gearset (VS) being fixed to the transmission housing (GG), and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
• the first sun gear (S1_HS) of the main gearset (HS) being disposed axially between the second and the third sun gear (S2_HS, S3_HS) of the main gearset (HS),
• the long planet gears (P13_HS) of the main gearset (HS) meshing with the coupled ring gear (H13_HS) and with the first and the third sun gear (S1_HS, S3_HS) of the main gearset (HS),
• the short planet gears (P2_HS) of the main gearset (HS) meshing with the second ring gear (H2_HS) and with the second sun gear (S2_HS) of the main gearset (HS),
• the first and the second sun gear (S1_HS, S2_HS) of the main gearset (HS) being fixedly connected to each other and constituting the first input element of the main gearset (HS), and being connected to the output elements (230, 630) of the second and the sixth shift element (B, F),
• the second ring gear (H2_HS) of the main gearset (HS) constituting the second input element of the main gearset (HS), and being connected to the output element (130) of the first shift element (A),
• the coupled planet carrier (ST13_HS) of the main gearset (HS) constituting the third input element of the main gearset (HS), and being connected to the output elements (430, 530) of the fourth and the fifth shift element (D, E),
• the third sun gear (S3_HS) of the main gearset (HS) constituting a fourth input element of the main gearset (HS), and being connected to the output element (330) of the third shift element (C), and
• the coupled ring gear (H13_HS) and the second planet carrier (ST2_HS) of the main gearset (HS) being fixedly connected to each other and constituting the output element of the main gearset (HS), and being connected to the output shaft (AB).

30. Multistage automatic transmission according to any one of Claims 1 to 26, **characterized in that**
the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) meshing with the sun gear (SO_VS) and with the outer planet gears (P2_VS) of the front-mounted gearset (VS),
• the outer planet gears (P2_VS) of the front-mounted gearset (VS) meshing with the inner planet gears (P1_VS) and with the ring gear (HO_VS) of the front-mounted gearset (HS),
• the planet carrier (ST_VS) of the front-mounted gearset (VS) constituting the input element of the front-mounted gearset (VS) that is permanently connected to the drive shaft (AN),
• the ring gear (HO_VS) of the front-mounted gearset (VS) constituting the output element of the front-mounted gearset (VS) that can be connected to input elements of the main gearset (HS), and
• the sun gear (SO_VS) of the front-mounted gearset (VS) being fixed to the transmission housing,
and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
• the first sun gear (S1_HS) of the main gearset (HS) being disposed axially between the second and the third sun gear (S2__HS, S3_HS) of the main gearset (HS),
• the long planet gears (P13_HS) of the main gearset (HS) meshing with the coupled ring gear (H13_HS) and with the first and the third sun gear (S1_HS, S3_HS) of the main gearset (HS),
• the short planet gears (P2_HS) of the main gearset (HS) meshing with the second ring gear (H2_HS) and with the second sun gear (S2_HS) of the main gearset (HS),
• the first and the second sun gear (S1_HS, S2_HS) of the main gearset (HS) being fixedly connected to each other and constituting the first input element of the main gearset (HS), and being connected to the output element (230) of the second shift element (B),
• the second ring gear (H2_HS) of the main gearset (HS) constituting the second input element of the main gearset (HS), and being connected to the output element (130) of the first shift element (A),
• the coupled planet carrier (ST13_HS) of the main gearset (HS) constituting the third input element of the main gearset (HS), and being connected to the output elements (430, 530) of the fourth and the fifth shift element (D, E),
• the third sun gear (S3_HS) of the main gearset (HS) constituting a fourth input element of the main gearset (HS), and being connected to the output elements (330, 630) of the third and the sixth shift element (C, F), and
• the coupled ring gear (H13_HS) and the second planet carrier (ST2_HS) of the main gearset (HS) being fixedly connected to each other and constituting the output element of the main gearset (HS), and being connected to the output shaft (AB).

31. Multistage automatic transmission according to either of Claims 29 or 30, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub of this planet-carrier plate that is connected in a rotationally rigid manner to the output element (530) of the fifth shift element (E), or a planet-carrier shaft (540) that is connected in a rotationally rigid manner to this planet-carrier plate and to the output element (530) extending centrally through either the first and the second sun gear (S1_HS, S2_HS) of the main gearset (HS) or, alternatively, the third sun gear (S3_HS) of the main gearset (HS), in the axial direction.

32. Multistage automatic transmission according to any one of Claims 1 to 26, **characterized in that**
the front-mounted gearset (VS) has a sun gear (SO_VS), a ring gear (HO_VS), and a coupled planet carrier (ST_VS) on which inner and outer planet gears (P1_VS, P2_VS) are rotatably mounted,
• the inner planet gears (P1_VS) of the front-mounted gearset (VS) meshing with the sun gear (SO_VS) and with the outer planet gears (P2_VS) of the front-mounted gearset (VS),
• the outer planet gears (P2_VS) of the front-mounted gearset (VS) meshing with the inner planet gears (P1_VS) and with the ring gear (HO_VS) of the front-mounted gearset (HS),
• the planet carrier (ST_VS) of the front-mounted gearset (VS) constituting the input element of the front-mounted gearset (VS) that is permanently connected to the drive shaft (AN),
• the ring gear (HO_VS) of the front-mounted gearset (VS) constituting the output element of the front-mounted gearset (VS) that can be connected to input elements of the main gearset (HS), and
• the sun gear (SO_VS) of the front-mounted gearset (VS) being fixed to the transmission housing,
and the main gearset (HS) is realized as a reduced three-planet-carrier, five-shaft transmission having three sun gears (S1_HS, S2_HS, S3_HS), a coupled ring gear (H13_HS), a second ring gear (H2_HS), a coupled planet carrier (ST13_HS) with long planet gears (P13_HS) rotatably mounted thereon, and a second planet carrier (ST2_HS) with short planet gears (P2_HS) rotatably mounted thereon,
• the third sun gear (S3_HS) of the main gearset (HS) being disposed axially between the first and the second sun gear (S1_HS, S2_HS) of the main gearset (HS),
• the long planet gears (P13_HS) of the main gearset (HS) meshing with the coupled ring gear (H13_HS) and with the first and the third sun gear (S1_HS, S3_HS) of the main gearset (HS),
• the short planet gears (P2_HS) of the main gearset (HS) meshing with the second ring gear (H2_HS) and with the second sun gear (S2_HS) of the main gearset (HS),
• the first sun gear (S1_HS) of the main gearset (HS) constituting the first input element of the main gearset (HS), and being connected to the output elements (230, 630) of the second and the sixth shift element (B, F),
• the coupled ring gear (H13_HS) of the main gearset (HS) constituting the second input element of the main gearset (HS), and being connected to the output element (130) of the first shift element (A),
• the second planet carrier (ST2_HS) of the main gearset (HS) constituting the third input element of the main gearset (HS), and being connected to the output elements (430, 530) of the fourth and the fifth shift element (D, E),
• the second and the third sun gear (S2_HS, S3_HS) of the main gearset (HS) being fixedly connected to each other and constituting a fourth input element of the main gearset (HS), and being connected to the output element (330) of the third shift element (C), and
• the coupled planet carrier (ST13_HS) and the second ring gear (H2_HS) of the main gearset (HS) being fixedly connected to each other and constituting the output element of the main gearset (HS), and being connected to the output shaft (AB).

33. Multistage automatic transmission according to Claim 32, **characterized in that** the coupled planet carrier (ST13_HS) of the main gearset (HS) has a planet-carrier plate which extends through inwardly in the radial direction axially between the first and the third sun gear (S1_HS, S3_HS) of the main gearset (HS), a hub of this planet-carrier plate that is connected in a rotationally rigid manner to the output shaft (AB) of the automatic transmission, or the output shaft (AB) of the automatic transmission that is connected in a rotationally rigid manner to this planet-carrier plate extending centrally through either the second and the third sun gear (S2_HS, S3_HS) of the main gearset (HS) or, alternatively, the first sun gear (S1_HS) of the main gearset (HS), in the axial direction.

34. Multistage automatic transmission according to any one of the preceding claims, **characterized in that**, through selective closing of the shift elements (A to F), at least eight forward gears can be shifted in such a way that an input rotational speed of the drive shaft (AN) can be transmitted to the output shaft (AB) in such a way that, for the purpose of shifting from one gear to the sequentially next higher or sequentially next lower gear, of the shift element just then actuated respectively only one shift element is opened, and a further shift element is closed, wherein
• in a first forward gear the first and the fourth shift element (A, D) are closed,
• in a second forward gear the first and the third shift element (A, C) are closed,
• in a third forward gear the first and the second shift element (A, B) are closed,
• in the fourth forward gear the first and the sixth shift element (A, F) are closed,
• in a fifth forward gear the first and the fifth shift element (A, E) are closed,
• in a sixth forward gear the fifth and the sixth shift element (E, F) are closed,
• in a seventh forward gear the second and the fifth shift element (B, E) are closed, and
• in an eighth forward gear the third and the fifth shift element (C, E) are closed,
and wherein in a reverse gear the fourth shift element (D) and, in addition, either the second shift element (B) or the sixth shift element (F) are closed.

## Revendications (Revendications pour l'(les) Etat(s) contractant(s) suivant(s): DE, FR, GB)

1. Boîte de vitesses automatique à étages multiples, comprenant un arbre d'entrée (AN), un arbre de sortie (AB), un train de roues amont (VS), un train de roues principal (HS) et au moins six éléments de commande (A à F) et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de Boîte de vitesses (GG) de la Boîte de vitesses automatique à étages multiples,
• le train de roues principal (HS) est constitué par un train épicycloïdal couplé comportant plusieurs éléments d'entrée qui ne sont pas couplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de Boîte de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation du train de roues principal (HS),
• un élément d'entrée du quatrième élément de commande (D) est relié au carter de Boîte de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
**caractérisée**
• **en ce que** le sixième élément de commande (F), en particulier un paquet de disques (600) de ce sixième élément de commande (F) et un servodispositif (610) destiné à actionner ce paquet de disques (600) du sixième élément de commande (F), est disposé, vu dans l'espace, dans une région située axialement entre le train de roues amont (VS) et le train de roues principal (HS),
• **en ce qu'**une chambre de pression (211) d'un servodispositif (210) destiné à actionner un paquet de disques (200) du deuxième élément de commande (B) est disposé, vu dans l'espace, sur le côté du train de roues amont (VS) qui est éloigné du train de roues principal (HS),
• **en ce que** le train de roues amont (VS) comporte une roue planétaire (SO_VS), une couronne à denture intérieure (HO_VS), ainsi qu'un porte-satellites couplé (ST_VS) sur lequel sont montées rotatives des roues satellites intérieures et extérieures (P1_VS, P2_VS),
o les roues satellites intérieures (P1_VS) du train de roues amont (VS) engrenant avec la roue planétaire (SO_VS) et avec les roues satellites extérieures (P2_VS) du train de roues amont (VS),
o les roues satellites extérieures (P2_VS) du train de roues amont (VS) engrenant avec les roues satellites intérieures (P1_VS) et avec la couronne à denture intérieure (HO_VS) du train de roues amont (HS),
o le porte-satellites (ST_VS) du train de roues amont (VS) formant l'élément d'entrée du train de roues amont (VS) qui est relié en permanence à l'arbre d'entrée (AN),
o la couronne à denture intérieure (HO_VS) du train de roues amont (VS) formant l'élément de sortie du train de roues amont (VS) qui peut être relié à des éléments d'entrée du train de roues principal (HS) et,
o la roue planétaire (SO_VS) du train de roues amont (VS) étant bloquée sur le carter de Boîte de vitesses (GG),
• et **en ce que** le train de roues principal (HS) est réalisé sous la forme d'un mécanisme à deux porte-satellites-quatre arbres, qui comprend deux trains épicycloïdaux simples couplés, comprenant deux roues planétaires (S1_HS, S2_HS), deux couronnes à denture intérieure (H1_HS, H2_HS), un premier porte-satellites (ST1_HS) sur lequel les premières roues satellites (PL_HS) sont montées rotatives, ainsi qu'un deuxième porte-satellites couplé (ST2_HS) sur lequel sont montées rotatives des roues satellites intérieures et extérieures (PLi_HS, PLa_HS),
o les premières roues satellites (PL_HS) du train de roues principal (HS) engrenant avec la première couronne à denture intérieure (H1_HS) et avec la première roue planétaire (S1_HS) du train de roues principal (HS),
o les roues satellites intérieures (PLi_HS) du train de roues principal (HS) engrenant avec les roues satellites extérieures (PLa_HS) et avec la deuxième roue planétaire (S2_HS) du train de roues principal (HS),
o les roues satellites extérieures (PLa_HS) du train de roues principal (HS) engrenant avec les roues satellites intérieures (PLi_HS) et avec la deuxième couronne à denture intérieure (H2_HS) du train de roues principal (HS),
o la première roue planétaire (S1_HS) et le deuxième porte-satellites couplé (ST2_HS) du train de roues principal (HS) étant reliés l'un à l'autre et formant le premier élément d'entré du train de roues principal (HS), et étant reliés aux éléments de sortie (230, 330, 630) des deuxième, troisième et sixième éléments de commande (B, C, F),
o la deuxième roue planétaire (S2_HS) du train de roues principal (HS) formant le deuxième élément d'entrée du train de roues principal (HS) et étant reliée à l'élément de sortie (130) du premier élément de commande (A),
o le premier porte-satellites (ST1_HS) et la deuxième couronne à denture intérieure (H2_HS) du train de roues principal (HS) étant reliés l'un à l'autre et formant le troisième élément d'entrée du train de roues principal (HS) et étant reliés aux éléments de sortie (430, 530) des quatrième et cinquième éléments de commande (D, E), et
o la première couronne à denture intérieure (H1_HS) du train de roues principal (HS) formant l'élément de sortie du train de roues principal (HS) et étant reliée à l'arbre de sortie (AB).

2. Boîte de vitesses automatique à étages multiples selon le préambule de la revendication 1,
**caractérisée**
• **en ce que** le sixième élément de commande (F), en particulier un paquet de disques (600) de ce sixième élément de commande (F) et un servodispositif (610) destiné à actionner ce paquet de disques (600) du sixième élément de commande (F), est disposé, vu dans l'espace, dans une région située axialement entre le train de roues amont (VS) et le train de roues principal (HS),
• **en ce qu'**une chambre de pression (211) d'un servodispositif (210) destiné à actionner un paquet de disques (200) du deuxième élément de commande (B) est disposée, vue dans l'espace, sur le côté du train de roues amont (VS) qui est éloigné du train de roues principal (HS),
• **en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_VS),
o les roues satellites intérieures (P1_VS) du train de roues amont (VS) engrenant avec la roue planétaire (SO_VS) et avec les roues satellites extérieures (P2_VS) du train de roues amont (VS),
o les roues satellites extérieures (P2_VS) du train de roues amont (VS) engrenant avec les roues satellites intérieures (P1_VS) et avec la couronne à denture intérieure (HO_VS) du train de roues amont (HS),
o le porte-satellites (ST_VS) du train de roues amont (VS) formant l'élément d'entrée du train de roues amont (VS) qui est relié en permanence à l'arbre d'entrée (AN),
o la couronne à denture intérieure (HO_VS) du train de roues amont (VS) formant l'élément de sortie du train de roues amont (VS) qui peut être relié à des éléments d'entrée du train de roues principal (HS), et
o la roue planétaire (SO_VS) du train de roues amont (VS) étant bloquée sur le carter de Boîte de vitesses,
• et **en ce que** le train de roues principal (HS) est réalisé sous la forme d'un mécanisme réduit à trois porte-satellites-cinq arbres, qui comprend trois roues planétaires (S1_HS, S2_HS, S3_HS), une couronne à denture intérieure couplée (H13_HS), une deuxième couronne à denture intérieure (H2_HS), un porte-satellites couplé (ST13_HS) comprenant des roues satellites longues (P13_HS) montées rotatives sur lui, ainsi qu'un deuxième porte-satellites (ST2_HS) portant des roues satellites courtes (P2_HS) montées rotatives sur lui,
o la première roue planétaire (S1_HS) du train de roues principal (HS) étant disposée axialement entre les deuxième et troisième roues planétaires (S2_HS, S3_HS) du train de roues principal (HS),
o les roues satellites longues (P13_HS) du train de roues principal (HS) engrenant avec la couronne à denture intérieure couplée (H13_HS) et avec les première et troisième roues planétaires (S1_HS, S3_HS) du train de roues principal (HS),
o les roues satellites courtes (P2_HS) du train de roues principal (HS) engrenant avec la deuxième couronne à denture intérieure (H2_HS) et avec la deuxième roue planétaire (S2_HS) du train de roues principal (HS),
o les première et deuxième roues planétaires (S1_HS, S2_HS) du train de roues principal (HS) étant reliées rigidement entre elles et formant le premier élément d'entrée du train de roues principal (HS), et étant reliées aux éléments de sortie (230, 630) des deuxième et sixième éléments de commande (B, F),
o la deuxième couronne à denture intérieure (H2_HS) du train de roues principal (HS) formant le deuxième élément d'entrée du train de roues principal (HS) et étant reliée à l'élément de sortie (130) du premier élément de commande (A),
o le porte-satellites couplé (ST13_HS) du train de roues principal (HS) formant le troisième élément d'entrée du train de roues principal (HS) et étant relié aux éléments de sortie (430, 530) des quatrième et cinquième éléments de commande (D, E),
o la troisième roue planétaire (S3_HS) du train de roues principal (HS) formant un quatrième élément d'entrée du train de roues principal (HS) et étant reliée à l'élément de sortie (330) du troisième élément de commande (C), et
o la couronne à denture intérieure couplée (H13_HS) et le deuxième porte-satellites (ST2_HS) du train de roues principal (HS) étant reliés rigidement l'un à l'autre et formant l'élément de sortie du train de roues principal (HS) et sont reliés à l'arbre de sortie (AB).

3. Boîte de vitesses automatique à étages multiples selon le préambule de la revendication 1,
**caractérisée**
• **en ce que** le sixième élément de commande (F), en particulier un paquet de disques (600) de ce sixième élément de commande (F) et un servodispositif (610) destiné à actionner ce paquet de disques (600) du sixième élément de commande (F), est disposé, vu dans l'espace, dans une région située axialement entre le train de roues amont (VS) et le train de roues principal (HS),
• **en ce qu'**une chambre de pression (211) d'un servodispositif (210) destiné à actionner un paquet de disques (200) du deuxième élément de commande (B) est disposée, vue dans l'espace, sur le côté du train de roues amont (VS) qui est éloigné du train de roues principal (HS),
• **en ce que** le train de roues amont (VS) comporte une roue planétaire (SO_VS), une couronne à denture intérieure (HO_VS) ainsi qu'un porte-satellites couplé (ST_VS), sur lequel sont montées rotatives des roues satellites intérieures et extérieures (P1_VS, P2_VS),
o les roues satellites intérieures (P1_VS) du train de roues amont (VS) engrenant avec la roue planétaire (SO_VS) et avec les roues satellites extérieures (P2_VS) du train de roues amont (VS),
o les roues satellites extérieures (P2_VS) du train de roues amont (VS) engrenant avec les roues satellites intérieures (P1_VS) et avec la couronne à denture intérieure (HO_VS) du train de roues amont (VS),
o le porte-satellites (ST_VS) du train de roues amont (VS) formant l'élément d'entrée du train de roues amont (VS) qui est relié en permanence à l'arbre d'entrée (AN),
o la couronne à denture intérieure (HO_VS) du train de roues amont (VS) formant l'élément de sortie du train de roues amont (VS) qui peut être relié à des éléments d'entré du train de roues principal (HS), et
o la roue planétaire (SO_VS) du train de roues amont (VS) étant bloquée sur le carter de Boîte de vitesses,
• et **en ce que** le train de roues principal (HS) est réalisé sous la forme d'un mécanisme réduit à trois-porte-satellites-cinq-arbres, comprenant trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (ST13_HS) montées rotatives sur lui, ainsi qu'un deuxième porte-satellites (ST2_HS) portant des roues satellites courtes (P2_HS) montées rotatives sur lui,
o la première roue planétaire (S1_HS) du train de roues principal (HS) étant disposée axialement entre les deuxième et troisième roues planétaires (S2_HS, S3_HS) du train de roues principal (HS),
o les roues satellites longues (P13_HS) du train de roues principal (HS) engrenant avec la couronne à denture intérieure couplée (H13_HS) et avec les première et troisième roues planétaires (S2_HS, S3_HS) du train de roues principal (HS),
o les roues satellites courtes (P2_HS) du train de roues principal (HS) engrenant avec la deuxième couronne à denture intérieure (H2_HS) et avec la deuxième roue planétaire (S2_HS) du train de roues principal (HS),
o les première et deuxième roues planétaires (S1_HS, S2_HS) du train de roues principal (HS) étant reliées rigidement entre elles et formant le premier élément d'entré du train de roues principal (HS), et étant reliées à l'élément de sortie (230) du deuxième élément de commande (B),
o la deuxième couronne à denture intérieure (H2_HS) du train de roues principal (HS) formant le deuxième élément d'entrée du train de roues principal (HS) et étant reliée à l'élément de sortie (130) du premier élément de commande (A),
o le porte-satellites couplé (ST13_HS) du train de roues principal (HS) formant le premier élément d'entrée du train de roues principal (HS) et étant relié aux éléments de sortie (430, 530) des quatrième et cinquième éléments de commande (D, E),
o la troisième roue planétaire (S3_HS) du train de roues principal (HS) formant un quatrième élément d'entrée du train de roues principal (HS) et étant reliée aux éléments de sortie (330, 630) des troisième et sixième éléments de commande (C, F), et
o la couronne à denture intérieure couplée (H13_HS) et le deuxième porte-satellites (ST2_HS) du train de roues principal (HS) étant reliés rigidement l'un à l'autre et formant l'élément de sortie du train de roues principal (HS) et étant reliés à l'arbre de sortie (AB).

4. Boîte de vitesses automatique à étages multiples selon la revendication 2 ou 3, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), un moyeu de ce disque de porte-satellites, relié solidairement en rotation à l'élément de sortie (530) du cinquième élément de commande (E), ou un arbre de porte-satellites (540), relié solidairement en rotation à ce disque de porte-satellites et à l'élément de sortie (530) du cinquième élément de commande (E), traversant au centre, dans la direction axiale, soit les première et deuxième roues planétaires (S1_HS, S2_HS) du train de roues principal (HS), soit encore la troisième roue planétaire (S3_HS) du train de roues principal (HS).

5. Boîte de vitesses automatique à étages multiples selon le préambule de la revendication 1,
**caractérisée**
• **en ce que** le sixième élément de commande (F), en particulier un paquet de disques (600) de ce sixième élément de commande (F) et un servodispositif (610) destiné à actionner ce paquet de disques (600) du sixième élément de commande (F), est disposé, vu dans l'espace, dans une région située axialement entre le train de roues amont (VS) et le train de roues principal (HS),
• **en ce qu'**une chambre de pression (211) d'un servodispositif (210) destiné à actionner un paquet de disques (200) du deuxième élément de commande (B) est disposée, vue dans l'espace, sur le côté du train de roues amont (VS) qui est éloigné du train de roues principal (HS),
• **en ce que** le train de roues amont (VS) comporte une roue planétaire (SO_VS), une couronne à denture intérieure (HO_VS) ainsi qu'un porte-satellites couplé (ST_VS), sur lequel sont montées rotatives des roues satellites intérieures et extérieures (P1_VS, P2_VS),
o les roues satellites intérieures (P1_VS) du train de roues amont (VS) engrenant avec la roue planétaire (SO_VS) et avec les roues satellites extérieures (P2_VS) du train de roues amont (VS),
o les roues satellites extérieures (P2_VS) du train de roues amont (VS) engrenant avec les roues satellites intérieures (P1_VS) et avec la couronne à denture intérieure (HO_VS) du train de roues amont (VS),
o le porte-satellites (ST_VS) du train de roues amont (VS) formant l'élément d'entrée du train de roues amont (VS) qui est relié en permanence à l'arbre d'entrée (AN),
o la couronne à denture intérieure (HO_VS) du train de roues amont (VS) formant l'élément de sortie du train de roues amont (VS) qui peut être relié à des éléments d'entré du train de roues principal (HS), et
o la roue planétaire (SO_VS) du train de roues amont (VS) étant bloquée sur le carter de Boîte de vitesses,
• et **en ce que** le train de roues principal (HS) est réalisé sous la forme d'un mécanisme réduit à trois-porte-satellites-cinq-arbres, comprenant trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (ST13_HS) montées rotatives sur lui, ainsi qu'un deuxième porte-satellites (ST2_HS) portant des roues satellites courtes (P2_HS) montées rotatives sur lui,
o la troisième roue planétaire (S3_HS) du train de roues principal (HS) étant disposée axialement entre les première et deuxième roues planétaires (S1_HS, S2_HS) du train de roues principal (HS),
o les roues satellites longues (P13_HS) du train de roues principal (HS) engrenant avec la couronne à denture intérieure couplée (H13_HS) et avec les première et troisième roues planétaires (S1_HS, S3_HS) du train de roues principal (HS),
o les roues satellites courtes (P2_HS) du train de roues principal (HS) engrenant avec la deuxième couronne à denture intérieure (H2_HS) et avec la deuxième roue planétaire (S2_HS) du train de roues principal (HS),
o la première roue planétaire (S1_HS) du train de roues principal (HS) formant le premier élément d'entrée du train de roues principal (HS) et étant reliée aux éléments de sortie (230, 630) des deuxième et sixième éléments de commande (B, F),
o la couronne à denture intérieure couplée (H13_HS) du train de roues principal (HS) formant le deuxième éléments d'entrée du train de roues principal (HS) et étant reliée à l'élément de sortie (130) du premier élément de commande (A),
o le deuxième porte-satellites (ST2_HS) du train de roues principal (HS) formant le troisième élément d'entrée du train de roues principal (HS) et étant relié aux éléments de sortie (430, 530) des quatrième et cinquième éléments de commande (D, E),
o les deuxième et troisième roues planétaires (S2_HS, S3_HS) du train de roues principal (HS) étant reliées rigidement entre elles et formant un quatrième élément d'entrée du train de roues principal (HS), et étant reliées à l'élément de sortie (330) du troisième élément de commande (C),
o le porte-satellites couplé (ST13_HS) et la deuxième couronne à denture intérieure (H2_HS) du train de roues principal (HS) étant reliés rigidement l'un à l'autre et formant l'élément de sortie du train de roues principal (HS) et étant reliés à l'arbre de sortie (AB).

6. Boîte de vitesses automatique à étages multiples selon la revendication 5, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), un moyeu de ce disque de porte-satellites, relié solidairement en rotation à l'arbre de sortie (AB) de la boîte de vitesses automatique, ou l'arbre de sortie (AB) de la boîte de vitesses automatique qui est relié solidairement en rotation à ce disque de porte-satellites traversant au centre, dans la direction axiale, soit les deuxième et troisième roues planétaires (S2_HS, S3_HS) du train de roues principal (HS), soit encore la première roue planétaire (S1_HS) du train de roues principal (HS).

7. Boîte de vitesses automatique à étages multiples selon l'une des revendications 1 à 6, **caractérisée en ce que** le sixième élément de commande (E) est immédiatement adjacent au train de roues amont (VS), sur le côté du train de roues amont (VS) qui est dirigé vers le train de roues principal (HS).

8. Boîte de vitesses automatique à étages multiples selon l'une des revendications 1 à 7, **caractérisée en ce que** le sixième élément de commande (F), en particulier le paquet de disques (600) et le servodispositif (610) de ce sixième élément de commande (F), est disposé, vu dans l'espace, dans une région située axialement entre le cinquième élément de commande (E) et le train de roues principal (HS).

9. Boîte de vitesses automatique à étages multiples selon l'une des revendications 1 à 8, **caractérisée en ce que** le servodispositif (610) du sixième élément de commande (F) est disposé, au moins en grande partie, à l'intérieur d'une chambre cylindrique qui est formée par un support de disque du sixième élément de commande (F) relié au premier élément d'entrée du train de roues principal (HS), le servodispositif (610) du sixième élément de commande (F) tournant en permanence à la vitesse de rotation du premier élément d'entrée du train de roues principal (HS).

10. Boîte de vitesses automatique à étages multiples selon l'une des revendications 1 à 9, **caractérisée en ce que** l'élément de sortie (630) du sixième élément de commande (F) est monté rotatif dans un deuxième arbre planétaire (140), par l'intermédiaire duquel un élément de sortie (130) du premier élément de commande (A) est relié au deuxième élément d'entrée du train de roues principal (HS), le deuxième arbre planétaire (140) traversant au centre, dans la direction axiale, l'élément de sortie (630) du sixième élément de commande (F).

11. Boîte de vitesses automatique à étages multiples selon l'une des revendications 1 à 10, **caractérisée en ce qu'**un élément d'entrée (620) du sixième élément de commande (F) qui est relié à l'arbre d'entrée (AN) emboîte entièrement dans la direction radiale le train de roues amont (VS) ainsi que le deuxième, le premier et le cinquième élément de commande (B, A, E) dans la direction axiale.

12. Boîte de vitesses automatique à étages multiples selon l'une des revendications 1 à 11, **caractérisée en ce que** le troisième élément de commande (C) est disposé adjacent au sixième élément de commande (F).

13. Boîte de vitesses automatique à étages multiples selon l'une des revendications 1 à 12, **caractérisée en ce que** le quatrième élément de commande (D) est adjacent au troisième élément de commande (C), vu axialement en direction du train de roues principal (HS), l'arbre d'entrée (AN) et l'arbre de sortie (AB) s'étendant coaxialement entre eux.

14. Boîte de vitesses automatique à étages multiples selon l'une des revendications 1 à 13, **caractérisée en ce que** le quatrième élément de commande (D) est disposé plus près du train de roues principal (HS) que le troisième élément de commande (C).

15. Boîte de vitesses automatique à étages multiples selon l'une des revendications 1 à 12, **caractérisée en ce que** le quatrième élément de commande (D) est disposé sur le côté du train de roues principal (HS) qui est éloigné du train de roues amont (VS), l'arbre d'entrée (AN) et l'arbre de sortie (AB) n'étant pas coaxiaux entre eux.

16. Boîte de vitesses automatique à étages multiples selon l'une des revendications 1 à 6, **caractérisée en ce que** le sixième élément de commande (F) est immédiatement adjacent au train de roues amont (VS) sur le côté du train de roues amont (VS) qui est dirigé vers le train de roues principal (HS).

17. Boîte de vitesses automatique à étages multiples selon l'une des revendications 1 à 6 ou 16, **caractérisée en ce que** le servodispositif (610) du sixième élément de commande (F) est disposé à l'intérieur d'une chambre d'embrayage qui est formée par un support de disques du sixième élément de commande (F) qui est relié à l'arbre d'entrée (AN), le servodispositif (610) du sixième élément de commande (F) tournant en permanence à la vitesse de rotation de l'arbre d'entrée (AN).

18. Boîte de vitesses automatique à étages multiples selon l'une des revendications 1 à 6 ou 16 ou 17, **caractérisée en ce que** le premier élément de commande (A) est disposé, vu dans l'espace, dans une région située au moins en partie axialement entre le sixième élément de commande (F) et le train de roues principal (HS), en particulier **en ce qu'**un servodispositif (110) du premier élément de commande (A) est disposé, vu dans l'espace, dans une région située axialement entre le sixième élément de commande (F) et le train de roues principal (HS).

19. Boîte de vitesses automatique à étages multiples selon l'une des revendications 1 à 6 ou l'une des revendications 16 à 18, **caractérisée en ce qu'**un paquet de disques (100) du premier élément de commande (A) est disposé, vu dans l'espace, au moins partiellement dans une région située radialement au-delà du sixième élément de commande (F).

20. Boîte de vitesses automatique à étages multiples selon l'une des revendications 1 à 6 ou l'une des revendications 16 à 19, **caractérisée en ce que** le servodispositif (110) du premier élément de commande (A) tourne en permanence à la vitesse de rotation du deuxième élément d'entrée du train de roues principal.

21. Boîte de vitesses automatique à étages multiples selon l'une des revendications 1 à 6 ou l'une des revendications 16 à 20, **caractérisée en ce qu'**une chambre de pression d'un servodispositif (510) du cinquième élément de commande (E) est disposé sur le côté du train de roues amont (VS) qui est éloigné du train de roues principal (HS) et tourne en permanence à la vitesse de rotation de l'arbre d'entrée (AN).

22. Boîte de vitesses automatique à étages multiples selon l'une des revendications 1 à 6 ou l'une des revendications 16 à 19, **caractérisée en ce que** le cinquième élément de commande (E) est disposé sur le côté du train de roues principal (HS) qui est éloigné du train de roues amont (VS), en particulier adjacent à une paroi frontale extérieure du carter de Boîte de vitesses (GG).

23. Boîte de vitesses automatique à étages multiples selon l'une des revendications 1 à 6 ou l'une des revendications 16 à 19, **caractérisée en ce que** le cinquième élément de commande (E) est disposé dans une région située axialement entre le train de roues amont (VS) et le train de roues principal (HS), en particulier directement adjacent au train de roues amont (VS).

24. Boîte de vitesses automatique à étages multiples selon l'une des revendications 1 à 6 ou l'une des revendications 16 à 19 ou 23, caractéri- - s é e en ce que le cinquième élément de commande (E) est disposé, vu dans l'espace, radialement au-delà du sixième élément de commande (F), en particulier en ce que le paquet de disques (500) du cinquième élément de commande (E) est disposé, vu dans l'espace, radialement au-delà du paquet de disques (600) du sixième élément de commande (F).

25. Boîte de vitesses automatique à étages multiples selon l'une des revendications 1 à 6 ou l'une des revendications 16 à 19 ou 23, **caractérisée en ce que** le sixième élément de commande (F) est disposé, vu dans l'espace, radialement au-delà du cinquième élément de commande (E), en particulier **en ce que** le paquet de disques (600) du sixième élément de commande (F) est disposé, vu dans l'espace, radialement au-delà du paquet de disques (500) du cinquième élément de commande (E).

26. Boîte de vitesses automatique à étages multiples selon l'une des revendications 1 à 6 ou l'une des revendications 16 à 25, **caractérisée en ce que** les paquets de disques (100, 200) des premier et deuxième éléments de commande (A, B) sont disposés, vus dans l'espace, axialement l'un à côté de l'autre dans une région située au moins partiellement radialement au-delà du sous-groupe composé des cinquième et sixième éléments de commande (E, F).

27. Boîte de vitesses automatique à étages multiples selon l'une des revendications 1 à 6 ou l'une des revendications 16 à 25, **caractérisée en ce que** le deuxième élément de commande (B) est disposé à l'intérieur d'une chambre cylindrique qui est formée par l'élément d'entrée (520) du cinquième élément de commande (E).

28. Boîte de vitesses automatique à étages multiples selon l'une des revendications 1 à 6 ou l'une des revendications 16 à 27, **caractérisée en ce qu'**un élément d'entrée (220) du deuxième élément de commande (B) qui est relié à l'élément de sortie du train de roues amont (VS) est monté rotatif sur un moyeu (523) de l'élément d'entrée (520) du cinquième élément de commande (E).

29. Boîte de vitesses automatique à étages multiples selon l'une des revendications 1 à 6 ou l'une des revendications 16 à 28, **caractérisée en ce qu'**un paquet de disques (200) du deuxième élément de commande (B) est disposé, vu dans l'espace, dans une région située au moins partiellement radialement au-delà du train de roues amont (VS) et/ou au moins partiellement radialement au-delà du sixième élément de commande (F), un élément de sortie (230) du deuxième élément de commande (B) qui est relié au premier élément d'entrée du train de roues principal (HS) emboîtant radialement le sixième élément de commande (F) dans la direction axiale.

30. Boîte de vitesses automatique à étages multiples selon l'une des revendications 1 à 6 ou l'une des revendications 16 à 29, **caractérisée en ce que**, vu axialement en direction du train de roues principal (HS), un paquet de disques (400) du quatrième élément de commande (D) est axialement adjacent au paquet de disques (500) du cinquième élément de commande (E).

31. Boîte de vitesses automatique à étages multiples selon l'une des revendications 1 à 6 ou l'une des revendications 16 à 30, **caractérisée en ce que** le troisième élément de commande (C) est disposé sur le côté du train de roues principal (HS) qui est éloigné du train de roues amont (VS), l'arbre d'entrée (AN) et l'arbre de sortie (AB) ne s'étendant pas coaxialement entre eux.

32. Boîte de vitesses automatique à étages multiples selon l'une des revendications précédentes, **caractérisée en ce que**, par fermeture sélective des éléments de commande (A à F), on peut enclencher au moins huit vitesses de marche avant, **en ce que** la vitesse de rotation d'entrée de l'arbre d'entrée (AN) peut être transmise à l'arbre de sortie (AB) de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans une première vitesse de marche avant, les premier et quatrième éléments de commande (A, étant fermés,
• dans une deuxième vitesse de marche avant, les premier et troisième éléments de commande (A, C) étant fermés,
• dans une troisième vitesse de marche avant, les premier et deuxième éléments de commande (A, B) étant fermés,
• dans une quatrième vitesse de marche avant, les premier et sixième éléments de commande (A, F) étant fermés,
• dans une cinquième vitesse de marche avant, les premier et cinquième éléments de commande (A, E) étant fermés,
• dans une sixième vitesse de marche avant, les premier et sixième éléments de commande (E, F) étant fermés,
• dans une septième vitesse de marche avant, les deuxième et cinquième éléments de commande (B, E) étant fermés,
• dans une huitième vitesse de marche avant, les troisième et cinquième éléments de commande (C, E) étant fermés,
• et, dans une vitesse de marche arrière, le quatrième élément de commande (D) et, en supplément, soit le deuxième élément de commande (B), soit le sixième élément de commande (F) étant fermés.

## Revendications (Revendications pour l'(les) Etat(s) contractant(s) suivant(s): AT, BE, CH, DK, ES, GR, IT, LI, LU, MC, NL, SE)

1. Boite de vitesses automatique à étages multiples, comprenant un arbre d'entrée (AN), un arbre de sortie (AB), un train de roues amont (VS), un train de roues principal (HS) et au moins six éléments de commande (A à F), et présentant les caractéristiques suivantes :
• le train de roues amont (VS) est constitué par un train épicycloïdal double,
• un élément de sortie du train de roues amont (VS) tourne avec une vitesse de rotation qui est plus petite que la vitesse de rotation d'entrée de l'arbre d'entrée (AN),
• un élément d'entrée du train de roues amont (VS) est relié en permanence à l'arbre d'entrée (AN),
• un élément du train de roues amont (VS) est relié à un carter de boite de vitesses (GG) de la boite de vitesses automatique à étages multiples,
• le train de roues principal (HS) est constitué par un train épicycloïdal couplé possédant plusieurs éléments d'entrée qui ne sont pas accouplés entre eux et un élément de sortie,
• l'élément de sortie du train de roues principal (HS) est relié en permanence à l'arbre de sortie (AB),
• un élément d'entrée (120) du premier élément de commande (A) est relié à l'élément de sortie du train de roues amont (VS),
• un élément de sortie (130) du premier élément de commande (A) est relié à un deuxième élément d'entrée du train de roues principal (HS),
• un élément d'entrée (220) du deuxième élément de commande (B) est relié à l'élément de sortie du train de roues amont (VS),
• un élément de sortie (230) du deuxième élément de commande (B) est relié à un premier élément d'entrée du train de roues principal (HS),
• un élément d'entrée du troisième élément de commande (C) est relié au carter de boite de vitesses (GG),
• un élément de sortie (330) du troisième élément de commande (C) est relié au premier élément d'entrée du train de roues principal (HS) ou à un élément d'entrée du train de roues principal (HS) voisin de ce premier élément d'entrée dans un plan de vitesse de rotation,
• un élément d'entrée du quatrième élément de commande (D) est relié au carter de boite de vitesses (GG),
• un élément de sortie (430) du quatrième élément de commande (D) est relié à un troisième élément d'entrée du train de roues principal (HS),
• un élément d'entrée (520) du cinquième élément de commande (E) est relié à l'arbre d'entrée (AN),
• un élément de sortie (530) du cinquième élément de commande (E) est relié au troisième élément d'entrée du train de roues principal (HS),
• un élément d'entrée (620) du sixième élément de commande (F) est relié à l'arbre d'entrée (AN),
• un élément de sortie (630) du sixième élément de commande (F) est relié au premier élément d'entrée du train de roues principal (HS) ou à un élément d'entrée du train de roues principal (HS) qui est voisin de ce premier élément d'entrée dans le plan de vitesse de rotation,
• le sixième élément de commande (F), en particulier un paquet de disques (600) de ce sixième élément de commande (F) et un servodispositif (610) destiné à actionner ce paquet de disques (600) du sixième élément de commande (F) sont disposés, vus dans l'espace, dans une région située axialement entre le train de roues amont (VS) et le train de roues principal (HS),
**caractérisée**
**en ce qu'**une chambre de pression (211) d'un servodispositif (210) destiné à actionner un paquet de disques (200) du deuxième élément de commande (B) est disposé, vu dans l'espace, sur le côté du train de roues amont (VS) qui est éloigné du train de roues principal (HS).

2. Boite de vitesses automatique à étages multiples selon la revendication 1, **caractérisée en ce que** le cinquième élément de commande (E) est immédiatement adjacent au train de roues amont (VS), sur le côté du train de roues amont (VS) qui est dirigé vers le train de roues principal (HS).

3. Boite de vitesses automatique à étages multiples selon la revendication 1 ou 2, **caractérisée en ce que** le sixième élément de commande (F), en particulier le paquet de disques (600) et le servodispositif (610) de ce sixième élément de commande (F) sont disposés, vus dans l'espace, dans une région située axialement entre le cinquième élément de commande (E) et le train de roues principal (HS).

4. Boite de vitesses automatique à étages multiples selon la revendication 1, 2 ou 3, **caractérisée en ce que** le servodispositif (610) du sixième élément de commande (F) est disposé, du moins en grande partie, à l'intérieur d'une chambre cylindrique qui est formée par un support de disques extérieur du sixième élément de commande (F) relié au premier élément d'entrée du train de roues principal (HS), le servodispositif (610) du sixième élément de commande (F) tournant en permanence à la vitesse de rotation du premier élément d'entrée du train de roues principal (HS).

5. Boite de vitesses automatique à étages multiples selon l'une des revendications 1 à 4, **caractérisée en ce que** l'élément de sortie (630) du sixième élément de commande (F) est monté rotatif dans un deuxième arbre planétaire (140), par l'intermédiaire duquel un élément de sortie (130) du premier élément de commande (A) est relié au deuxième élément d'entrée du train de roues principal (HS), le deuxième arbre planétaire (140) traversant au centre dans la direction axiale l'élément de sortie (630) du sixième élément de commande (F).

6. Boite de vitesses automatique à étages multiples selon l'une des revendications 1 à 5, **caractérisée en ce qu'**un élément d'entrée (620) du sixième élément de commande (F) qui est relié à l'arbre d'entrée (AN) emboîte entièrement dans la direction radiale le train de roues amont (VS) ainsi que le deuxième, le premier et le cinquième élément de commande (B, A, E) dans la direction axiale.

7. Boite de vitesses automatique à étages multiples selon l'une des revendications 1 à 6, **caractérisée en ce que** le troisième élément de commande (C) est disposé adjacent au sixième élément de commande (F).

8. Boite de vitesses automatique à étages multiples selon l'une des revendications 1 à 7, **caractérisée en ce que** le quatrième élément de commande (D) fait suite axialement, vu en direction du train de roues principal (HS), au troisième élément de commande (C), l'arbre d'entrée (AN) et l'arbre de sortie (AB) s'étendant coaxialement l'un à l'autre.

9. Boite de vitesses automatique à étages multiples selon l'une des revendications 1 à 8, **caractérisée en ce que** le quatrième élément de commande (D) est disposé plus près du train de roues principal (HS) que le troisième élément de commande (C).

10. Boite de vitesses automatique à étages multiples selon l'une des revendications 1 à 7, **caractérisée en ce que** le quatrième élément de commande (D) est disposé sur le côté du train de roues principal (HS) qui est éloigné du train de roues amont (VS), l'arbre d'entrée (AN) et l'arbre de sortie (AB) n'étant pas coaxiaux entre eux.

11. Boite de vitesses automatique à étages multiples selon la revendication 1, **caractérisée en ce que** le sixième élément de commande (F) est immédiatement adjacent au train de roues amont (VS) sur le côté du train de roues amont (VS) qui est dirigé vers le train de roues principal (HS).

12. Boite de vitesses automatique à étages multiples selon la revendication 1 ou 11, **caractérisée en ce que** le servodispositif (610) du sixième élément de commande (F) est disposé à l'intérieur d'une chambre d'embrayage qui est formée par un support de disques extérieur du sixième élément de commande (F) qui est relié à l'arbre d'entrée (AN), le servodispositif (610) du sixième élément de commande (F) tournant en permanence à la vitesse de rotation de l'arbre d'entrée (AN).

13. Boite de vitesses automatique à étages multiples selon la revendication 1, 11 ou 12, **caractérisée en ce que** le premier élément de commande (A) est disposé, vu dans l'espace, dans une région située du moins en partie axialement entre le sixième élément de commande (F) et le train de roues principal (HS), en particulier **en ce qu'**un servodispositif (110) du premier élément de commande (A) est disposé, vu dans l'espace, dans une région située axialement entre le sixième élément de commande (F) et le train de roues principal (HS).

14. Boite de vitesses automatique à étages multiples selon la revendication 1 ou l'une des revendications 11 à 13, **caractérisée en ce qu'**un paquet de disques (100) du premier élément de commande (A) est disposé, vu dans l'espace, du moins partiellement dans une région située radialement au-delà du sixième élément de commande (F).

15. Boite de vitesses automatique à étages multiples selon la revendication 1 ou l'une des revendications 11 à 14, **caractérisée en ce que** le servodispositif (110) du premier élément de commande (A) tourne en permanence à la vitesse de rotation du deuxième élément d'entrée du train de roues principal.

16. Boite de vitesses automatique à étages multiples selon la revendication 1 ou l'une des revendications 11 à 15, **caractérisée en ce qu'**une chambre de pression d'un servodispositif (510) du cinquième élément de commande (E) est disposée sur le côté du train de roues amont (VS) qui est éloigné du train de roues principal (HS) et tourne en permanence à la vitesse de rotation de l'arbre d'entrée (AN).

17. Boite de vitesses automatique à étages multiples selon la revendication 1 ou l'une des revendications 11 à 14, **caractérisée en ce que** le cinquième élément de commande (E) est disposé sur le côté du train de roues principal (HS) qui est éloigné du train de roues amont (VS), en particulier adjacent à une paroi frontale extérieure du carter de boite de vitesses (GG).

18. Boite de vitesses automatique à étages multiples selon la revendication 1 ou l'une des revendications 11 à 14, **caractérisée en ce que** le cinquième élément de commande (E) est disposé dans une région située axialement entre le train de roues amont (VS) et le train de roues principal (HS), en particulier immédiatement adjacent au train de roues amont (VS).

19. Boite de vitesses automatique à étages multiples selon l'une des revendications 1, 11 à 14 ou 18, **caractérisée en ce que** le cinquième élément de commande (E) est disposé, vu dans l'espace, radialement au-delà du sixième élément de commande (F), en particulier **en ce que** le paquet de disques (500) du cinquième élément de commande (E) est disposé, vu dans l'espace, radialement au-delà du paquet de disques (600) du sixième élément de commande (F).

20. Boite de vitesses automatique à étages multiples selon l'une des revendications 1, 11 à 14 ou 18, **caractérisée en ce que** le sixième élément de commande (F) est disposé, vu dans l'espace, radialement au-delà du cinquième élément de commande (E), en particulier **en ce que** le paquet de disques (600) du sixième élément de commande (F) est disposé, vu dans l'espace, radialement au-delà du paquet de disques (500) du cinquième élément de commande (E).

21. Boite de vitesses automatique à étages multiples selon la revendication 1 ou l'une des revendications 11 à 20, **caractérisée en ce que** les paquets de disques (100, 200) des premier et deuxième éléments de commande (A, B) sont disposés, vus dans l'espace, axialement l'un à côté de l'autre dans une région située du moins partiellement radialement au-delà du sous-groupe composé des cinquième et sixième éléments de commande (E, F).

22. Boite de vitesses automatique à étages multiples selon la revendication 1 ou l'une des revendications 11 à 20, **caractérisée en ce que** le deuxième élément de commande (B) est disposé à l'intérieur d'une chambre cylindrique qui est formée par l'élément d'entrée (520) du cinquième élément de commande (E).

23. Boite de vitesses automatique à étages multiples selon la revendication 1 ou l'une des revendications 11 à 22, **caractérisée en ce qu'**un élément d'entrée (220) du deuxième élément de commande (B), qui est relié à l'élément de sortie du train de roues amont (VS), est monté rotatif sur un moyeu (523) de l'élément d'entrée (520) du cinquième élément de commande (E).

24. Boite de vitesses automatique à étages multiples selon la revendication 1 ou l'une des revendications 11 à 23, **caractérisée en ce qu'**un paquet de disques (200) du deuxième élément de commande (B) est disposé, vu dans l'espace, dans une région située du moins partiellement radialement au-delà du train de roues amont (VS) et/ou du moins partiellement radialement au-delà du sixième élément de commande (F), un élément de sortie (230) du deuxième élément de commande (B) qui est relié au premier élément d'entrée du train de roues principal (HS) emboîtant radialement le sixième élément de commande (F) dans la direction axiale.

25. Boite de vitesses automatique à étages multiples selon la revendication 1 ou l'une des revendications 11 à 24, **caractérisée en ce que**, vu axialement en direction du train de roues principal (HS), un paquet de disques (400) du quatrième élément de commande (D) est axialement adjacent au paquet de disques (500) du cinquième élément de commande (E).

26. Boite de vitesses automatique à étages multiples selon la revendication 1 ou l'une des revendications 11 à 25, **caractérisée en ce que** le troisième élément de commande (C) est disposé sur le côté du train de roues principal (HS) qui est éloigné du train de roues amont (VS), l'arbre d'entrée (AN) et l'arbre de sortie (AB) ne s'étendant pas coaxialement entre eux.

27. Boîte de vitesses automatique à étages multiples selon l'une des revendications 1 à 26, **caractérisée**
**en ce que** le train de roues amont (VS) comporte une roue planétaire (SO_VS), une couronne à denture intérieure (HO_VS), ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses (GG),
et **en ce que** le train de roues principal (HS) est réalisé sous la forme d'un mécanisme à deux porte-satellites-quatre arbres du type d'un train de Ravigneaux comprenant deux roues planétaires (S1_HS, S2_HS), une couronne à denture intérieure (H0_HS), ainsi qu'un porte-satellites couplé (ST_HS) sur lequel des roues satellites longues (P1_HS) et des roues satellites courtes (P2_HS) sont montées rotatives,
• les roues satellites longues (P1_HS) du train de roues principal (HS) engrenant avec la couronne à denture intérieure (H0_HS) et avec la première roue planétaire (S1_HS) du train de roues principal (HS),
• les roues satellites courtes (P2_HS) du train de roues principal (HS) engrenant avec les roues satellites longues (P1_HS) et avec la deuxième roue planétaire (S2_HS) du train de roues principal (HS),
• la première roue planétaire (S1_HS) du train de roues principal (HS) formant le premier élément d'entrée du train de roues principal (HS) et étant reliée aux éléments de sortie (230, 330, 630) des deuxième, troisième et sixième éléments de commande (B, F),
• la deuxième roue planétaire (S2_VS) du train de roues principal (HS) formant le deuxième élément d'entrée du train de roues principal (HS) et étant reliée à l'élément de sortie (130) du premier élément de commande (A),
• le porte-satellites (ST_VS) du train de roues principal (HS) formant le troisième élément d'entrée du train de roues principal (HS) et étant relié aux éléments de sortie (430, 530) des quatrième et cinquième éléments de commande (D, E), et
• la couronne à denture intérieure (HO_HS) du train de roues principal (HS) formant l'élément de sortie du train de roues principal (HS) et étant reliée à l'arbre de sortie (AB).

28. Boîte de vitesses automatique à étages multiples selon l'une des revendications 1 à 26, **caractérisée**
**en ce que** le train de roues amont (VS) comporte une roue planétaire (SO_VS), une couronne à denture intérieure (HO_VS), ainsi qu'un porte-satellites couplé (ST_VS) sur lequel sont montées rotatives des roues satellites intérieures et extérieures (P1_VS, P2_VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS) et
• la roue planétaire (SO_VS) du train de roues amont (VS) étant bloquée sur le carter de boite de vitesses (GG),
et **en ce que** le train de roues principal (HS) est réalisé sous la forme d'un mécanisme à deux porte-satellites-quatre arbres possédant deux trains épicycloïdaux individuels, comprenant deux roues planétaires (S1_HS, S2_HS), deux couronnes à denture intérieure (H0_HS, H2_HS), un premier porte-satellites (ST1_HS) sur lequel des première roues satellites (PL_HS) sont montées rotatives, ainsi qu'un deuxième porte-satellites couplé (ST2_VS) sur lequel des roues satellites intérieures et extérieures (PLi_HS, PLa_HS) sont montées rotatives,
• les premières roues satellites (PL_HS) du train de roues principal (HS) engrenant avec la première couronne à denture intérieure (H1_HS) et avec la première roue planétaire (S1_HS) du train de roues principal (HS),
• les roues satellites intérieures (PLi_HS) du train de roues principal (HS) engrenant avec les roues satellites extérieures (PLa_HS) et avec la deuxième roue planétaire (S2_HS) du train de roues principal (HS),
• les roues satellites extérieures (PLa_HS) du train de roues principal (HS) engrenant avec les roues satellites intérieures (PLi_HS) et avec la deuxième couronne à denture intérieure (H2_HS) du train de roues principal (HS),
• la première roue planétaire (S1_HS) et le deuxième porte-satellites couplé (ST2_HS) du train de roues principal (HS) étant reliées l'une à l'autre, formant le premier élément d'entré du train de roues principal (HS) et étant reliés aux éléments de sortie (230, 330, 630) des deuxième, troisième et sixième éléments de commande (B, C, F),
• la deuxième roue planétaire (S2_HS) du train de roues principal (HS) formant le deuxième élément d'entrée du train de roues principal (HS) et étant reliée à l'élément de sortie (130) du premier élément de commande (A),
• le premier porte-satellites (ST1_HS) et la deuxième couronne à denture intérieure (H2_HS) du train de roues principal (HS) étant reliés l'un à l'autre, formant le troisième élément d'entrée du train de roues principal (HS) et étant reliés aux éléments de sortie (430, 530) des quatrième et cinquième éléments de commande (D, E), et
• la première couronne à denture intérieure (H1_HS) du train de roues principal (HS) formant l'élément de sortie du train de roues principal (HS) et étant reliée à l'arbre de sortie (AB).

29. Boîte de vitesses automatique à étages multiples selon l'une des revendications 1 à 26, **caractérisée**
**en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses,
et **en ce que** le train de roues principal (HS) est réalisé sous la forme d'un mécanisme réduit à trois porte-satellites-cinq arbres, qui comprend trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (P13_ HS) montées rotatives sur lui, ainsi qu'un deuxième porte-satellites (ST2_HS) portant des roues satellites courtes (P2_HS) montées rotatives sur lui,
• la première roue planétaire (S1_HS) du train de roues principal (HS) étant disposée axialement entre les deuxième et troisième roues planétaires (S2_HS, S3_HS) du train de roues principal (HS),
• les roues satellites longues (P13_ HS) du train de roues principal (HS) engrenant avec la couronne à denture intérieure coupiée (H13_HS) et avec les première et troisième roues planétaires (S1_HS, S3_HS) du train de roues principal (HS),
• les roues satellites courtes (P2_ HS) du train de roues principal (HS) engrenant avec la deuxième couronne à denture intérieure (H2_HS) et avec la deuxième roue planétaire (S2_HS) du train de roues principal (HS),
• les première et deuxième roues planétaires (S1_HS, S2_HS) du train de roues principal (HS) étant reliées rigidement l'une à l'autre et formant le premier élément d'entrée du train de roues principal (HS), et étant reliées aux éléments de sortie (230, 630) des deuxième et sixième éléments de commande (B, F),
• la deuxième couronne à denture intérieure (H2_HS) du train de roues principal (HS) formant le deuxième élément d'entrée du train de roues principal (HS) et étant reliée à l'élément de sortie (130) du premier élément de commande (A),
• le porte-satellites couplé (ST13_HS) du train de roues principal (HS) formant le troisième élément d'entrée du train de roues principal (HS) et étant relié aux éléments de sortie (430, 530) des quatrième et cinquième éléments de commande (D, E),
• la troisième roue planétaire (S3_HS) du train de roues principal (HS) formant un quatrième élément d'entrée du train de roues principal (HS) et étant reliée à l'élément de sortie (330) du troisième élément de commande (C), et
• la couronne à denture intérieure couplée (H13_HS) et le deuxième porte-satellites (ST2_HS) du train de roues principal (HS) étant reliés rigidement l'une à l'autre, formant l'élément de sortie du train de roues principal (HS) et étant reliés à l'arbre de sortie (AB).

30. Boîte de vitesses automatique à étages multiples selon l'une des revendications 1 à 26, **caractérisée**
**en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses,
et **en ce que** le train de roues principal (HS) est réalisé sous la forme d'un mécanisme réduit à trois porte-satellites-cinq arbres, qui comprend trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (P13_ HS) montées rotatives sur lui, ainsi qu'un deuxième porte-satellites (ST2_HS) portant des roues satellites courtes (P2_HS) montées rotatives sur lui,
• la première roue planétaire (S1_HS) du train de roues principal (HS) étant disposée axialement entre les deuxième et troisième roues planétaires (S2_HS, S3_HS) du train de roues principal (HS),
• les roues satellites longues (P13_HS) du train de roues principal (HS) engrenant avec la couronne à denture intérieure couplée (H13_HS) et avec les première et troisième roues planétaires (S1_HS, S3_HS) du train de roues principal (HS),
• les roues satellites courtes (P2_ HS) du train de roues principal (HS) engrenant avec la deuxième couronne à denture intérieure (H2_HS) et avec la deuxième roue planétaire (S2_HS) du train de roues principal (HS),
• les première et deuxième roues planétaires (S1_HS, S2_HS) du train de roues principal (HS) étant reliées rigidement l'une à l'autre, formant le premier élément d'entrée du train de roues principal (HS), et étant reliées à l'élément de sortie (230) du deuxième élément de commande (B),
• la deuxième couronne à denture intérieure (H2_HS) du train de roues principal (HS) formant le deuxième élément d'entrée du train de roues principal (HS) et étant reliée à l'élément de sortie (130) du premier élément de commande (A),
• le porte-satellites couplé (ST13_ HS) du train de roues principal (HS) formant le troisième élément d'entrée du train de roues principal (HS) et étant relié aux éléments de sortie (430, 530) des quatrième et cinquième éléments de commande (D, E),
• la troisième roue planétaire (S3_HS) du train de roues principal (HS) formant un quatrième élément d'entrée du train de roues principal (HS) et étant reliée aux éléments de sortie (330, 630) des troisième et sixième éléments de commande (C, F), et
• la couronne à denture intérieure couplée (H13_HS) et le deuxième porte-satellites (ST2_HS) du train de roues principal (HS) étant reliés rigidement l'une à l'autre, formant l'élément de sortie du train de roues principal (HS) et étant reliés à l'arbre de sortie (AB).

31. Boite de vitesses automatique à étages multiples selon la revendication 29 ou 30, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS), un moyeu de ce disque de porte-satellites, relié solidairement en rotation à l'élément de sortie (530) du cinquième élément de commande (E), ou un arbre de porte-satellites (540) relié solidairement en rotation à ce disque de porte-satellites et à l'élément de sortie (530) du cinquième élément de commande (E) traversant au centre, dans la direction axiale, soit les première et deuxième roues planétaires (S1_HS, S2_HS) du train de roues principal (HS), soit encore la troisième roue planétaire (S3_HS) du train de roues principal (HS).

32. Boîte de vitesses automatique à étages multiples selon l'une des revendications 1 à 26, **caractérisée**
**en ce que** le train de roues amont (VS) comporte une roue planétaire (SO_VS), une couronne à denture intérieure (HO_VS) ainsi qu'un porte-satellites couplé (ST_VS) sur lequel sont montées rotatives des roues satellites intérieures et extérieures (P1_VS, P2_ VS),
• les roues satellites intérieures (P1_VS) du train de roues amont (VS) engrenant avec la roue planétaire (SO_VS) et avec les roues satellites extérieures (P2_VS) du train de roues amont (VS),
• les roues satellites extérieures (P2_VS) du train de roues amont (VS) engrenant avec les roues satellites intérieures (P1_VS) et avec la couronne à denture intérieure (HO_VS) du train de roues amont (HS),
• le porte-satellites (ST_VS) du train de roues amont (VS) formant l'élément d'entrée du train de roues amont (VS) qui est relié en permanence à l'arbre d'entrée (AN),
• la couronne à denture intérieure (HO_VS) du train de roues amont (VS) formant l'élément de sortie du train de roues amont (VS) qui peut être relié à des éléments d'entrée du train de roues principal (HS), et
• la roue planétaire (SO_VS) du train de roues amont (VS) étant bloquée sur le carter de boite de vitesses,
et **en ce que** le train de roues principal (HS) est réalisé sous la forme d'un mécanisme réduit à trois porte-satellites-cinq arbres, qui comprend trois roues planétaires (S1_HS, S2_HS, S3_HS), une couronne à denture intérieure couplée (H13_HS), une deuxième couronne à denture intérieure (H2_HS), un porte-satellites couplé (ST13_HS) portant des roues satellites longues (P13_ HS) montées rotatives sur lui, ainsi qu'un deuxième porte-satellites (ST2_HS) portant des roues satellites courtes (P2_HS) montées rotatives sur lui,
• la troisième roue planétaire (S3_HS) du train de roues principal (HS) étant disposée axialement entre les première et troisième roues planétaires (S1_HS, S3_HS) du train de roues principal (HS),
• les roues satel!ites longues (P13_ HS) du train de roues principal (HS) engrenant avec la couronne à denture intérieure couplée (H13_HS) et avec les première et troisième roues planétaires (S1_HS, S3_HS) du train de roues principal (HS),
• les roues satellites courtes (P2_ HS) du train de roues principal (HS) engrenant avec la deuxième couronne à denture intérieure (H2_HS) et avec la deuxième roue planétaire (S2_HS) du train de roues principal (HS),
• la première roue planétaire (S1_HS) du train de roues principal (HS) formant l'élément d'entrée du train de roues principal (HS), et étant reliée aux éléments de sortie (230, 630) des deuxième et sixième éléments de commande (B, F),
• la couronne à denture intérieure couplé (H13_HS) du train de roues principal (HS) formant le deuxième élément d'entrée du train de roues principal (HS) et étant reliée à l'élément de sortie (130) du premier élément de commande (A),
• le deuxième porte-satellites (ST2_ HS) du train de roues principal (HS) formant le troisième élément d'entrée du train de roues principal (HS) et étant relié aux éléments de sortie (430, 530) des quatrième et cinquième éléments de commande (D, E),
• les deuxième et troisième roues planétaires (S2_HS, S3_HS) du train de roues principal (HS) étant reliées rigidement l'une à l'autre, formant un quatrième élément d'entrée du train de roues principal (HS) et étant reliées à l'élément de sortie (330) du troisième élément de commande (C), et
• le porte-satellites couplé (ST13_VS) et la deuxième couronne à denture intérieure (H2_HS) du train de roues principal (HS) étant reliés rigidement l'un à l'autre, formant l'élément de sortie du train de roues principal (HS) et étant reliés à l'arbre de sortie (AB).

33. Boite de vitesses automatique à étages multiples selon la revendication 32, **caractérisée en ce que** le porte-satellites couplé (ST13_HS) du train de roues principal (HS) comporte un disque de porte-satellites qui est engagé vers l'intérieur dans la direction radiale, en s'intercalant axialement entre les première et troisième roues planétaires (S1_HS, S3_HS) du train de roues principal (HS),un moyeu de ce disque de porte-satellites relié solidairement en rotation à l'arbre de sortie (AB) de la boîte de vitesses automatique ou l'arbre de sortie (AB) de la boîte de vitesses automatique qui est relié solidairement en rotation à ce disque de porte-satellites traversant au centre, dans la direction axiale, soit les deuxième et troisième roues planétaires (S2_HS, S3_HS) du train de roues principal (HS), soit encore la première roue planétaire (S1_HS) du train de roues principal (HS).

34. Boite de vitesses automatique à étages multiples selon l'une des revendications précédentes, **caractérisée en ce que**, par fermeture sélective des éléments de commande (A à F), on peut enclencher au moins huit vitesses de marche avant, **en ce qu'**une vitesse de rotation d'entrée de l'arbre d'entrée (AN) peut être transmise à l'arbre de sortie (AB) de telle manière que, pour passer d'une vitesse à la vitesse immédiatement supérieure ou à la vitesse immédiatement inférieure, parmi les éléments de commande qui sont actionnés au moment considéré, il ne se produit que l'ouverture d'un élément de commande et la fermeture d'un autre élément de commande,
• dans une première vitesse de marche avant, les premier et quatrième éléments de commande (A, D) étant fermés,
• dans une deuxième vitesse de marche avant, les premier et troisième éléments de commande (A, C) étant fermés,
• dans une troisième vitesse de marche avant, les premier et deuxième éléments de commande (A, B) étant fermés,
• dans une quatrième vitesse de marche avant, les premier et sixième éléments de commande (A, F) étant fermés,
• dans une cinquième vitesse de marche avant, les premier et cinquième éléments de commande (A, E) étant fermés,
• dans une sixième vitesse de marche avant, les cinquième et sixième éléments de commande (E, F) étant fermés,
• dans une septième vitesse de marche avant, les deuxième et cinquième éléments de commande (B, E) étant fermés,
• dans une huitième vitesse de marche avant, les troisième et cinquième éléments de commande (C, E) étant fermés,
et, dans une vitesse de marche arrière, le quatrième élément de commande (D) et, en supplément, soit le deuxième élément de commande (B), soit le sixième élément de commande (F) étant fermés.
